(19) Europäisches Patentamt
European Patent Office
Office européen des brevets

(11) **EP 4 425 966 A1**

(12) **EUROPEAN PATENT APPLICATION**
published in accordance with Art. 153(4) EPC

(43) Date of publication:
**04.09.2024 Bulletin 2024/36**

(21) Application number: **22894871.7**

(22) Date of filing: **17.11.2022**

(51) International Patent Classification (IPC):
**H04W 4/02** (2018.01)

(52) Cooperative Patent Classification (CPC):
**H04W 4/02; H04W 4/40**

(86) International application number:
**PCT/CN2022/132428**

(87) International publication number:
**WO 2023/088339 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 CN 202111371226**

(71) Applicant: **Huawei Technologies Co., Ltd.
Shenzhen, Guangdong 518129 (CN)**

(72) Inventor: **HUANG, Su
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **COMMUNICATION METHOD AND COMMUNICATION APPARATUS**

(57) Embodiments of this application disclose a communication method and a communication apparatus, to improve positioning accuracy for a terminal device. The method in embodiments of this application includes: A first communication device obtains first transmit frequency information and first receive frequency information. The first transmit frequency information includes information about a transmit frequency at which the first communication device sends at least one first reference signal. The first receive frequency information includes information about a receive frequency at which the first communication device receives at least one second reference signal from a second communication device. The first communication device determines first frequency information based on the first transmit frequency information and the first receive frequency information. The first communication device sends the first frequency information.

FIG. 6

**Description**

This application claims priority to Chinese Patent Application No. 202111371226.9, filed with the China National Intellectual Property Administration on November 18, 2021 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

A positioning function is an important function of 5G new radio (new radio, NR). In a positioning process, because a terminal device is in a moving state, a Doppler frequency shift exists between the terminal device and a base station due to a Doppler effect. Currently, a location management device may obtain a Doppler frequency shift between the terminal device and the base station by using the following solution, and the location management device may position the terminal device with reference to the Doppler frequency shift. Specifically, the base station sends a positioning reference signal (positioning reference signal, PRS) to the terminal device at a transmit frequency $F_{TRP,Tx}$. The terminal device sends a sounding reference signal (sounding reference signal, SRS) at a transmit frequency $F_{UE,Tx}$. Because the Doppler effect exists, a frequency at which the SRS arrives at the base station side is $F_{TRP,Rx} = F_{UE,Tx} + F_d$, where $F_d$ is the Doppler frequency shift. The base station determines the Doppler frequency shift between the terminal device and the base station based on $F_{TRP,Rx}$ and $F_{TRP,Tx}$, and sends the Doppler frequency shift to the location management device.

However, it cannot be ensured that the transmit frequency $F_{UE,Tx}$ of the terminal device is equal to the transmit frequency $F_{TRP,Tx}$ of the base station, or it cannot be ensured that the transmit frequency $F_{UE,Tx}$ of the terminal device is equal to a receive frequency $F_{UE,Rx}$ of the terminal device. As a result, the base station cannot accurately determine the Doppler frequency shift between the terminal device and the base station based on $F_{TRP,Rx}$ and $F_{TRP,Tx}$. Consequently, positioning accuracy of the location management device for the terminal device is affected.

**SUMMARY**

This application provides a communication method and a communication apparatus, to improve positioning accuracy for a terminal device.

According to a first aspect of this application, a communication method is provided, including:
A first communication device obtains first transmit frequency information and first receive frequency information. The first transmit frequency information includes information about a transmit frequency at which the first communication device sends at least one first reference signal. The first receive frequency information includes information about a receive frequency at which the first communication device receives at least one second reference signal from a second communication device. Then, the first communication device determines first frequency information based on the first transmit frequency information and the first receive frequency information, and sends the first frequency information.

In the foregoing technical solution, the first frequency information is determined based on the first transmit frequency information and the first receive frequency information. The first communication device reports the first frequency information. This helps improve accuracy of determining, by a device that positions the first communication device, a Doppler frequency shift between the first communication device and the second communication device with reference to the first frequency information, to improve positioning accuracy for the first communication device.

In a possible implementation, the method further includes:
The first communication device receives a first request message. The first request message is used to request the first frequency information.

In this implementation, the first communication device may receive the first request message, so that the first communication device feeds back the first frequency information. This helps improve the accuracy of determining, by the device that positions the first communication device, the Doppler frequency shift between the first communication device and the second communication device with reference to the first frequency information, to improve the positioning accuracy for the first communication device.

In another possible implementation, the first frequency information is used to position the first communication device. In this possible implementation, the first frequency information is used to position the first communication device. This helps improve the positioning accuracy for the first communication device.

In another possible implementation, the method further includes:

The first communication device sends first index information. The first index information includes at least one of the following: a resource index of the at least one first reference signal; a resource set index of the at least one first reference signal; a carrier component index of the at least one first reference signal; a resource index of the at least one second reference signal; and a resource set index of the at least one second reference signal.

In this implementation, the first communication device may further report index information of the at least one first reference signal and the at least one second reference signal. Therefore, this helps the device that positions the first communication device position the first communication device based on both the index information and the first frequency information, to improve the positioning accuracy.

In another possible implementation, the first transmit frequency information includes a first transmit frequency, and the first transmit frequency corresponds to one or more first reference signals in the at least one first reference signal.

In this possible implementation, specific content included in the first transmit frequency information is shown. This facilitates implementation of the solution. The first transmit frequency corresponds to the one or more first reference signals. The first communication device determines the first frequency information based on the first transmit frequency and second receive frequency information. This helps improve the accuracy of determining, by the device that positions the first communication device, the Doppler frequency shift between the first communication device and the second communication device with reference to the first frequency information, to improve the positioning accuracy for the first communication device.

In another possible implementation, the first receive frequency information includes at least one first receive frequency, and each first receive frequency in the at least one first receive frequency corresponds to one or more second reference signals in the at least one second reference signal.

In this implementation, content included in the first receive frequency information is shown. This facilitates implementation of the solution. Each first receive frequency in the at least one first receive frequency corresponds to one or more second reference signals. In other words, the first receive frequency is determined per second reference signal, namely, a defining manner of the first receive frequency is provided. This helps the first communication device determine the first frequency information, so that the device that positions the first communication device determines the Doppler frequency shift between the first communication device and the second communication device with reference to the first frequency information, to improve the positioning accuracy for the first communication device.

In another possible implementation, the first receive frequency information includes at least one first receive frequency, each first receive frequency in the at least one first receive frequency corresponds to one propagation path, and the propagation path is used for transmission of the at least one second reference signal between the first communication device and the second communication device.

In this implementation, content included in the first receive frequency information is shown. This facilitates implementation of the solution. Each first receive frequency corresponds to one propagation path. In other words, the first receive frequency is defined per propagation path, namely, a defining manner of the first receive frequency is provided. This helps the first communication device determine the first frequency information, so that the device that positions the first communication device determines the Doppler frequency shift between the first communication device and the second communication device with reference to the first frequency information, to improve the positioning accuracy for the first communication device. Defining the first receive frequency per propagation path also helps improve the positioning accuracy for the first communication device to an extent.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In this implementation, content included in the first receive frequency information is shown. This facilitates implementation of the solution. The first receive frequency is defined per propagation path per second reference signal, namely, a defining manner of the first receive frequency is provided. This helps the first communication device determine the first frequency information. This helps the first communication device determine the first frequency information, so that the device that positions the first communication device determines the Doppler frequency shift between the first communication device and the second communication device with reference to the first frequency information, to improve the positioning accuracy for the first communication device. Defining the first receive frequency per propagation path per second reference signal further helps improve the positioning accuracy for the first communication device.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In this implementation, content included in the first frequency information is shown. This improves implementability of the solution. The first frequency information includes the at least one first frequency difference, and each first frequency difference represents a difference between a frequency at which the first communication device sends the first reference signal and a frequency at which the first communication device receives the second reference signal. The at least one first frequency difference can help the device that positions the first communication device accurately determine the Doppler frequency shift between the first communication device and the second communication device, to improve the positioning accuracy for the first communication device.

In another possible implementation, a transmit frequency at which the first communication device sends one first reference signal in the at least one first reference signal includes at least one of the following:

an actual transmit frequency at which the first communication device sends the first reference signal on a first resource element (resource element, RE); or
a frequency difference between an actual transmit frequency at which the first communication device sends the first reference signal on a first RE and a nominal frequency corresponding to a first reference RE; or
a first preset value being the transmit frequency of the first reference signal, where
the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

The foregoing implementation shows a plurality of possible defining manners of a transmit frequency at which the first communication device sends one first reference signal, to enrich implementation of the solution. In the shown manners, the transmit frequency may be directly represented by using the actual transmit frequency, or may be represented by using the frequency difference or the first preset value.

In another possible implementation, the actual transmit frequency at which the first communication device sends the first reference signal on the first RE is determined based on a second frequency difference and the up-conversion frequency obtained by the first communication device by performing the up-conversion processing on the first reference signal. The second frequency difference is a frequency difference that is estimated by the first communication device on a baseband and that is between a direct current component frequency and the transmit frequency of the first reference signal on the first RE.

In this implementation, a specific manner of calculating the actual transmit frequency at which the first communication device sends the first reference signal on the first RE is shown, to facilitate implementation of the solution. The foregoing shows that the actual transmit frequency at which the first communication device sends the first reference signal on the first RE is determined with reference to the up-conversion frequency and the second frequency difference. This helps accurately determine the actual transmit frequency at which the first communication device sends the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In this implementation, a specific manner of calculating the nominal frequency corresponding to the first reference RE is shown. Specifically, the nominal frequency corresponding to the first reference RE may be calculated by using the frequency corresponding to the absolute radio frequency channel number of the point A of the first reference signal as a reference point.

In another possible implementation, a receive frequency at which the first communication device receives one second reference signal in the at least one second reference signal includes any one of the following:

a receive frequency at which the first communication device receives the second reference signal on a second RE;
a frequency difference between a receive frequency at which the first communication device receives the second reference signal on a second RE and a nominal frequency corresponding to a second reference RE; or
a frequency difference between a receive frequency at which the first communication device receives the second reference signal on a third RE and a nominal frequency corresponding to the third RE, where the third RE is any RE occupied by the second reference signal, where
the second RE is an RE corresponding to a bandwidth center in bandwidth occupied by the second reference signal;

the second RE is an RE corresponding to a point A of the second reference signal; or the second RE is an RE corresponding to a down-conversion frequency obtained by the first communication device by performing down-conversion processing on the second reference signal; or

the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

The foregoing shows some specific defining manners of the receive frequency at which the first communication device receives the second reference signal, to facilitate implementation of the solution.

In another possible implementation, the receive frequency at which the first communication device receives the second reference signal on the second RE is determined based on the down-conversion frequency and a fourth frequency difference. The fourth frequency difference is a frequency difference that is estimated by the first communication device on a baseband and that is between a direct current component frequency and the receive frequency of the second reference signal on the second RE.

In this implementation, the receive frequency at which the first communication device receives the second reference signal on the second RE is determined based on the down-conversion frequency and the fourth frequency difference, to accurately determine the receive frequency at which the first communication device receives the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In this implementation, a specific manner of calculating the nominal frequency corresponding to the second reference RE is shown.

In another possible implementation, the first communication device is a first terminal device, and the second communication device is a first access network device. In this implementation, specific forms of the first communication device and the second communication device are shown. The first terminal device sends the first frequency information to a location management device, to facilitate positioning the first terminal device.

In another possible implementation, the first request message is a request location information message, and the first frequency information is carried in a provide location information message.

In the foregoing implementation, the location management device may request the first frequency information by using the request location information message, and the first terminal device may send the first frequency information to the location management device in the provide location information message. There is no need to define a new message, to improve practicability of the solution.

In another possible implementation, the first reference signal is a sounding reference signal (sounding reference signal, SRS), and the at least one second reference signal is a positioning reference signal (positioning reference signal, PRS).

In this implementation, specific forms of the first reference signal and the second reference signal are shown.

In another possible implementation, the first communication device is a first access network device, and the second communication device is a first terminal device; or the first communication device is a first terminal device, and the second communication device is a second terminal device.

The foregoing shows other two possible implementations of the first communication device and the second communication device. To be specific, the first reference signal and the second reference signal are received and sent between two nodes in a network, to obtain a corresponding difference between a receive frequency and a transmit frequency, so as to accurately position the first terminal device.

In another possible implementation, the first request message is a measurement request message, and the first frequency information is carried in a measurement response message.

In this implementation, a specific form of the first request message and a carrier that carries the first frequency information are shown. There is no need to define a new message, to improve implementability of the solution.

In another possible implementation, the first communication device is a first terminal device, the second communication device is a second terminal device, the first reference signal is a first sidelink positioning reference signal (positioning reference signal, SL PRS), and the at least one second reference signal is a second SL PRS.

In the foregoing implementation, the technical solution of this application may be applied to an internet of vehicles. The two terminal devices communicate with each other over a sidelink, to determine locations, velocities, and the like of the terminal devices.

According to a second aspect of this application, a communication method is provided, including:

A third communication device receives first frequency information from a first communication device. The first frequency information is determined based on first transmit frequency information and first receive frequency information. The first transmit frequency information includes information about a transmit frequency at which the first communication device sends at least one first reference signal. The first receive frequency information includes information about a receive frequency at which the first communication device receives at least one second reference signal from a second communication device. The third communication device receives second frequency information from the second communication device. The second frequency information is determined based on second transmit frequency information and second receive frequency information. The second transmit frequency information includes information about a transmit frequency at which the second communication device sends the at least one second reference signal. The second receive frequency information includes information about a receive frequency at which the second communication device receives the at least one first reference signal from the first communication device. The third communication device determines, based on the first frequency information and the second frequency information, to position the first communication device.

In the foregoing technical solution, the third communication device obtains the first frequency information and the second frequency information, and determines, based on the first frequency information and the second frequency information, to position the first communication device. The first frequency information is determined based on the first transmit frequency information and the first receive frequency information. The second frequency information is determined based on the second transmit frequency information and the second receive frequency information. It can be learned that the first communication device and the second communication device send and receive the first reference signal and the second reference signal, to implement bidirectional measurement to obtain corresponding frequency information, so as to overcome an inherent frequency offset between the first communication device and the second communication device. This helps improve positioning accuracy of the third communication device for the first communication device. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

In a possible implementation, the method further includes:

The third communication device receives third frequency information from the first communication device. The third frequency information includes third transmit frequency information and third receive frequency information. The third transmit frequency information includes information about a transmit frequency at which the first communication device sends at least one first reference signal. The third receive frequency information includes information about a receive frequency at which the first communication device receives at least one third reference signal from a fourth communication device. The third communication device receives fourth frequency information from the fourth communication device. The fourth frequency information is determined based on fourth transmit frequency information and fourth receive frequency information. The fourth transmit frequency information includes information about a transmit frequency at which the fourth communication device sends the at least one third reference signal. The fourth receive frequency information includes information about a receive frequency at which the fourth communication device receives the at least one first reference signal from the first communication device.

That the third communication device determines, based on the first frequency information and the second frequency information, to position the first communication device includes:

The third communication device positions the first communication device based on the first frequency information, the second frequency information, the third frequency information, and the fourth frequency information.

In this implementation, the third communication device may select a plurality of communication devices to assist the third communication device in positioning the first communication device. To be specific, the third communication device may obtain frequency information corresponding to the plurality of communication devices and frequency information corresponding to the first communication device, and determine a location of the first communication device based on the frequency information.

In another possible implementation, the method further includes:

The third communication device sends a first request message to the first communication device. The first request message is used to request the first frequency information. The third communication device sends a second request message to the second communication device. The second request message is used to request the second frequency information.

In the foregoing implementation, the third communication device may separately request corresponding frequency information from the first communication device and the second communication device by using the request messages, so that the third communication device accurately positions the first communication device.

In another possible implementation, the method further includes:

The third communication device receives first index information from the first communication device, where the first index information includes at least one of the following:

a resource index of the at least one first reference signal;
a resource set index of the at least one first reference signal;
a carrier component index of the at least one first reference signal;
a resource index of the at least one second reference signal; and
a resource set index of the at least one second reference signal.

In this implementation, the first communication device may further report index information of the at least one first reference signal and the at least one second reference signal. Therefore, this helps the third communication device position the first communication device based on both the index information and the first frequency information, to improve positioning accuracy.

In another possible implementation, the first transmit frequency information includes a first transmit frequency, and the first transmit frequency corresponds to one or more first reference signals in the at least one first reference signal.

In this possible implementation, specific content included in the first transmit frequency information is shown. This facilitates implementation of the solution. The first transmit frequency corresponds to the one or more first reference signals. The first communication device determines the first frequency information based on the first transmit frequency and the second receive frequency information. This helps improve the accuracy of determining, by the third communication device, the Doppler frequency shift between the first communication device and the second communication device with reference to the first frequency information, to improve the positioning accuracy for the first communication device.

In another possible implementation, the first receive frequency information includes at least one first receive frequency, and each first receive frequency in the at least one first receive frequency corresponds to one or more second reference signals in the at least one second reference signal.

In this implementation, content included in the first receive frequency information is shown. This facilitates implementation of the solution. Each first receive frequency in the at least one first receive frequency corresponds to one or more second reference signals. In other words, the first receive frequency is determined per second reference signal, namely, a defining manner of the first receive frequency is provided. This helps the first communication device determine the first frequency information, so that the third communication device determines the Doppler frequency shift between the first communication device and the second communication device with reference to the first frequency information, to improve the positioning accuracy for the first communication device.

In another possible implementation, the first receive frequency information includes at least one first receive frequency, each first receive frequency in the at least one first receive frequency corresponds to one propagation path, and the propagation path is used for transmission of the at least one second reference signal between the first communication device and the second communication device.

In this implementation, content included in the first receive frequency information is shown. This facilitates implementation of the solution. Each first receive frequency corresponds to one propagation path. In other words, the first receive frequency is defined per propagation path, namely, a defining manner of the first receive frequency is provided. This helps the first communication device determine the first frequency information, so that the third communication device determines the Doppler frequency shift between the first communication device and the second communication device with reference to the first frequency information, to improve the positioning accuracy for the first communication device. Defining the first receive frequency per propagation path also helps improve the positioning accuracy for the first communication device to an extent.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In this implementation, content included in the first receive frequency information is shown. This facilitates implementation of the solution. The first receive frequency is defined per propagation path per second reference signal, namely, a defining manner of the first receive frequency is provided. This helps the first communication device determine the first frequency information. This helps the third communication device determine the Doppler frequency shift between the first communication device and the second communication device with reference to the first frequency information, to improve the positioning accuracy for the first communication device. Defining the first receive frequency per propagation path per second reference signal further helps improve the positioning accuracy for the first communication device.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In this implementation, content included in the first frequency information is shown. This improves implementability of the solution. The first frequency information includes the at least one first frequency difference, and each first frequency difference represents a difference between a frequency at which the first communication device sends the first reference signal and a frequency at which the first communication device receives the second reference signal. The third communication device accurately determines the Doppler frequency shift between the first communication device and the second communication device based on the at least one first frequency difference, to improve the positioning accuracy for the first communication device.

In another possible implementation, a transmit frequency at which the first communication device sends one first reference signal in the at least one first reference signal includes any one of the following:

an actual transmit frequency at which the first communication device sends the first reference signal on a first RE;
a frequency difference between an actual transmit frequency at which the first communication device sends the first reference signal on a first RE and a nominal frequency corresponding to a first reference RE; or
a first preset value being the transmit frequency of the first reference signal, where
the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

The foregoing implementation shows a plurality of possible defining manners of a transmit frequency at which the first communication device sends one first reference signal, to enrich implementation of the solution. In the shown manners, the transmit frequency may be directly represented by using the actual transmit frequency, or may be represented by using the frequency difference or the first preset value.

In another possible implementation, the actual transmit frequency at which the first communication device sends the first reference signal on the first RE is determined based on the up-conversion frequency and a second frequency difference.

The second frequency difference is a frequency difference that is estimated by the first communication device on a baseband and that is between a direct current component frequency and the receive frequency of the first reference signal on the first RE.

In this implementation, a specific manner of calculating the actual transmit frequency at which the first communication device sends the first reference signal on the first RE is shown, to facilitate implementation of the solution. The foregoing shows that the actual transmit frequency at which the first communication device sends the first reference signal on the first RE is determined with reference to the up-conversion frequency and the second frequency difference. This helps accurately determine the actual transmit frequency at which the first communication device sends the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In this implementation, a specific manner of calculating the nominal frequency corresponding to the first reference RE is shown. Specifically, the nominal frequency corresponding to the first reference RE may be calculated by using the frequency corresponding to the absolute radio frequency channel number of the point A of the first reference signal as a reference point.

In another possible implementation, a receive frequency at which the first communication device receives one second reference signal in the at least one second reference signal includes any one of the following:

a receive frequency at which the first communication device receives the second reference signal on a second RE;
a frequency difference between a receive frequency at which the first communication device receives the second reference signal on a second RE and a nominal frequency corresponding to a second reference RE; or
a frequency difference between a receive frequency at which the first communication device receives the second reference signal on a third RE and a nominal frequency corresponding to the third RE, where the third RE is any RE occupied by the second reference signal, where
the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or

the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

The foregoing shows some specific defining manners of the receive frequency at which the first communication device receives the second reference signal, to facilitate implementation of the solution.

In another possible implementation, the receive frequency at which the first communication device receives the second reference signal on the second RE is determined based on the down-conversion frequency and a fourth frequency difference.

The fourth frequency difference is a frequency difference that is estimated by the first communication device on a baseband and that is between a direct current component frequency and the receive frequency of the second reference signal on the second RE.

In this implementation, the receive frequency at which the first communication device receives the second reference signal on the second RE is determined based on the down-conversion frequency and the fourth frequency difference, to accurately determine the receive frequency at which the first communication device receives the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In this implementation, a specific manner of calculating the nominal frequency corresponding to the second reference RE is shown.

In another possible implementation, the first communication device is a first terminal device, the second communication device is a first access network device, and the third communication device is a location management device. In this implementation, specific forms of the first communication device and the second communication device are shown. The first terminal device sends the first frequency information to the location management device, to facilitate positioning the first terminal device.

In another possible implementation, the first request message is a request location information message, and the first frequency information is carried in a provide location information message. The second request message is a measurement request message, and the second frequency information is carried in a measurement response message.

In the foregoing implementation, the location management device may request the first frequency information by using the request location information message, and request the second frequency information from the second access network device by using the measurement request message. The first terminal device may send the first frequency information to the location management device in the provide location information message. The first access network device may send the second frequency information to the location management device in the measurement response message. There is no need to define a new message, to improve practicability of the solution.

In another possible implementation, the first reference signal is an SRS, and the at least one second reference signal is a first PRS.

In this implementation, specific forms of the first reference signal and the second reference signal are shown.

According to a third aspect of this application, a communication method is provided, including:

A second communication device receives first frequency information from a first communication device. The first frequency information is determined based on first transmit frequency information and first receive frequency information. The first transmit frequency information includes information about a transmit frequency at which the first communication device sends at least one first reference signal. The first receive frequency information includes information about a receive frequency at which the first communication device receives at least one second reference signal from the second communication device. The second communication device obtains second frequency information. The second frequency information is determined based on second transmit frequency information and second receive frequency information. The second transmit frequency information includes information about a transmit frequency at which the second communication device sends the at least one second reference signal. The second receive frequency information includes information about a receive frequency at which the second communication device receives the at least one first reference signal from the first communication device. The second communication device positions the first communication device based on the first frequency information and the second frequency information.

In the foregoing technical solution, the second communication device obtains the first frequency information and the second frequency information, and determines, based on the first frequency information and the second frequency information, to position the first communication device. The first frequency information is determined based on the first transmit frequency information and the first receive frequency information. The second frequency information is determined based on the second transmit frequency information and the second receive frequency information. It can be learned that the first communication device and the second communication device send and receive the first reference signal and the second reference signal, to implement bidirectional measurement to obtain corresponding frequency information, so as to overcome an inherent frequency offset between the first communication device and the second communication device. This helps improve positioning accuracy of the second communication device for the first communication device. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

In another possible implementation, the method further includes:
The second communication device sends a first request message to the first communication device. The first request message is used to request the first frequency information.

In the foregoing implementation, the second communication device may request the corresponding frequency information from the first communication device by using the request message, so that the second communication device accurately positions the first communication device.

In another possible implementation, the method further includes:
The second communication device receives first index information from the first communication device, where the first index information includes at least one of the following:

a resource index of the at least one first reference signal;
a resource set index of the at least one first reference signal;
a carrier component index of the at least one first reference signal;
a resource index of the at least one second reference signal; and
a resource set index of the at least one second reference signal.

In this implementation, the first communication device may further report index information of the at least one first reference signal and the at least one second reference signal. Therefore, this helps the second communication device position the first communication device based on both the index information and the first frequency information, to improve positioning accuracy.

In another possible implementation, the first transmit frequency information includes a first transmit frequency, and the first transmit frequency corresponds to one or more first reference signals in the at least one first reference signal.

In this possible implementation, specific content included in the first transmit frequency information is shown. This facilitates implementation of the solution. The first transmit frequency corresponds to the one or more first reference signals. The first communication device determines the first frequency information based on the first transmit frequency and the second receive frequency information. This helps improve the accuracy of determining, by the second communication device, the Doppler frequency shift between the first communication device and the second communication device with reference to the first frequency information, to improve the positioning accuracy for the first communication device.

In another possible implementation, the first receive frequency information includes at least one first receive frequency, and each first receive frequency in the at least one first receive frequency corresponds to one or more second reference signals in the at least one second reference signal.

In this implementation, content included in the first receive frequency information is shown. This facilitates implementation of the solution. Each first receive frequency in the at least one first receive frequency corresponds to one or more second reference signals. In other words, the first receive frequency is determined per second reference signal, namely, a defining manner of the first receive frequency is provided. This helps the first communication device determine the first frequency information, so that the second communication device determines the Doppler frequency shift between the first communication device and the second communication device with reference to the first frequency information, to improve the positioning accuracy for the first communication device.

In another possible implementation, the first receive frequency information includes at least one first receive frequency, each first receive frequency in the at least one first receive frequency corresponds to one propagation path, and the propagation path is used for transmission of the at least one second reference signal between the first communication device and the second communication device.

In this implementation, content included in the first receive frequency information is shown. This facilitates implementation of the solution. Each first receive frequency corresponds to one propagation path. In other words, the first receive frequency is defined per propagation path, namely, a defining manner of the first receive frequency is provided. This helps the first communication device determine the first frequency information, so that the second communication device determines the Doppler frequency shift between the first communication device and the second communication device with reference to the first frequency information, to improve the positioning accuracy for the first communication device. Defining the first receive frequency per propagation path also helps improve the positioning accuracy for the first communication device to an extent.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In this implementation, content included in the first receive frequency information is shown. This facilitates implementation of the solution. The first receive frequency is defined per propagation path per second reference signal, namely, a defining manner of the first receive frequency is provided. This helps the first communication device determine the first frequency information. This helps the first communication device determine the first frequency information, so that the second communication device determines the Doppler frequency shift between the first communication device and the second communication device with reference to the first frequency information, to improve the positioning accuracy for the first communication device. Defining the first receive frequency per propagation path per second reference signal further helps improve the positioning accuracy for the first communication device.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In this implementation, content included in the first frequency information is shown. This improves implementability of the solution. The first frequency information includes the at least one first frequency difference, and each first frequency difference represents a difference between a frequency at which the first communication device sends the first reference signal and a frequency at which the first communication device receives the second reference signal. The second communication device can accurately determine the Doppler frequency shift between the first communication device and the second communication device based on the at least one first frequency difference, to improve the positioning accuracy for the first communication device.

In another possible implementation, a transmit frequency at which the first communication device sends one first reference signal in the at least one first reference signal includes any one of the following:

an actual transmit frequency at which the first communication device sends the first reference signal on a first RE;
a frequency difference between an actual transmit frequency at which the first communication device sends the first reference signal on a first RE and a nominal frequency corresponding to a first reference RE; or
a first preset value being the transmit frequency of the first reference signal, where
the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

The foregoing implementation shows a plurality of possible defining manners of a transmit frequency at which the first communication device sends one first reference signal, to enrich implementation of the solution. In the shown manners, the transmit frequency may be directly represented by using the actual transmit frequency, or may be represented by using the frequency difference or the first preset value.

In another possible implementation, the actual transmit frequency at which the first communication device sends the first reference signal on the first RE is determined based on the up-conversion frequency and a second frequency difference.

The second frequency difference is a frequency difference that is estimated by the first communication device on a baseband and that is between a direct current component frequency and the receive frequency of the first reference signal on the first RE.

In this implementation, a specific manner of calculating the actual transmit frequency at which the first communication device sends the first reference signal on the first RE is shown, to facilitate implementation of the solution. The foregoing shows that the actual transmit frequency at which the first communication device sends the first reference signal on the first RE is determined with reference to the up-conversion frequency and the second frequency difference. This helps accurately determine the actual transmit frequency at which the first communication device sends the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In this implementation, a specific manner of calculating the nominal frequency corresponding to the first reference RE is shown. Specifically, the nominal frequency corresponding to the first reference RE may be calculated by using the frequency corresponding to the absolute radio frequency channel number of the point A of the first reference signal as a reference point.

In another possible implementation, a receive frequency at which the first communication device receives one second reference signal in the at least one second reference signal includes any one of the following:

a receive frequency at which the first communication device receives the second reference signal on a second RE;
a frequency difference between a receive frequency at which the first communication device receives the second reference signal on a second RE and a nominal frequency corresponding to a second reference RE; or
a frequency difference between a receive frequency at which the first communication device receives the second reference signal on a third RE and a nominal frequency corresponding to the third RE, where the third RE is any RE occupied by the second reference signal, where
the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or
the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

The foregoing shows some specific defining manners of the receive frequency at which the first communication device receives the second reference signal, to facilitate implementation of the solution.

In another possible implementation, the receive frequency at which the first communication device receives the second reference signal on the second RE is determined based on the down-conversion frequency and a fourth frequency difference.

The fourth frequency difference is a frequency difference that is estimated by the first communication device on a baseband and that is between a direct current component frequency and the receive frequency of the second reference signal on the second RE.

In this implementation, the receive frequency at which the first communication device receives the second reference signal on the second RE is determined based on the down-conversion frequency and the fourth frequency difference, to accurately determine the receive frequency at which the first communication device receives the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In this implementation, a specific manner of calculating the nominal frequency corresponding to the second reference RE is shown.

In another possible implementation, the first communication device is a first terminal device, and the second communication device is a second terminal device.

The foregoing shows a possible implementation of the first communication device and the second communication device. To be specific, the first reference signal and the second reference signal are received and sent between two nodes in a network, to obtain a corresponding difference between a receive frequency and a transmit frequency, so as to accurately position the first terminal device.

In another possible implementation, the first request message is a measurement request message, and the first frequency information is carried in a measurement response message. In this implementation, a specific form of the first request message and a carrier that carries the first frequency information are shown. There is no need to define a new message, to improve implementability of the solution.

In another possible implementation, the first reference signal is a first SL PRS, and the at least one second reference signal is a second SL PRS.

In the foregoing implementation, the technical solution of this application may be applied to an internet of vehicles. The two terminal devices communicate with each other over a sidelink, to determine locations, velocities, and the like of the terminal devices.

According to a fourth aspect of this application, a communication method is provided, including:
A first communication device obtains a nominal receive frequency of a second reference signal and fifth receive frequency information. The fifth receive frequency information includes information about a receive frequency at which the first communication device receives at least one second reference signal from a second communication device. The first communication device determines fifth frequency information based on the nominal receive frequency of the second reference signal and the fifth receive frequency information. The first communication device sends the fifth frequency information.

In the foregoing technical solution, the fifth frequency information is determined based on the nominal receive frequency of the second reference signal and the fifth receive frequency information. The first communication device reports the fifth frequency information. This helps improve accuracy of determining, by a device that positions the first communication device, a Doppler frequency shift between the first communication device and the second communication device with reference to the fifth frequency information, to improve positioning accuracy for the first communication device.

In a possible implementation, the fifth receive frequency information includes at least one third receive frequency, and each third receive frequency in the at least one third receive frequency corresponds to one or more second reference signals in the at least one second reference signal.

In this implementation, content included in the fifth receive frequency information is shown. This facilitates implementation of the solution. Each third receive frequency in the at least one third receive frequency corresponds to one or more second reference signals. In other words, the third receive frequency is determined per second reference signal, namely, a defining manner of the third receive frequency is provided. This helps the first communication device determine the fifth frequency information, so that a third communication device determines the Doppler frequency shift between the first communication device and the second communication device with reference to the fifth frequency information, to improve the positioning accuracy for the first communication device.

In another possible implementation, the fifth receive frequency information includes at least one third receive frequency, each third receive frequency in the at least one third receive frequency corresponds to one propagation path, and the propagation path is used for transmission of the at least one second reference signal between the first communication device and the second communication device.

In this implementation, content included in the fifth receive frequency information is shown. This facilitates implementation of the solution. Each third receive frequency corresponds to one propagation path. In other words, the third receive frequency is defined per propagation path, namely, a defining manner of the third receive frequency is provided. This helps the first communication device determine the fifth frequency information, so that a third communication device determines the Doppler frequency shift between the first communication device and the second communication device with reference to the fifth frequency information, to improve the positioning accuracy for the first communication device. Defining the third receive frequency per propagation path also helps improve the positioning accuracy for the first communication device to an extent.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In this implementation, content included in the fifth receive frequency information is shown. This facilitates implementation of the solution. The third receive frequency is defined per propagation path per second reference signal, namely, a defining manner of the third receive frequency is provided. This helps the first communication device determine the fifth frequency information. This helps a third communication device determine the Doppler frequency shift between the first communication device and the second communication device with reference to the fifth frequency information, to improve the positioning accuracy for the first communication device. Defining the third receive frequency per propagation path per second reference signal further helps improve the positioning accuracy for the first communication device.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

In this implementation, content included in the fifth frequency information is shown. This improves implementability of the solution. The fifth frequency information includes the at least one tenth frequency difference, and each tenth frequency difference represents a frequency difference between the nominal receive frequency of the second reference signal and the fourth receive frequency. The third communication device accurately determines the Doppler frequency shift between the first communication device and the second communication device based on the at least one tenth frequency difference, to improve the positioning accuracy for the first communication device.

According to a fifth aspect of this application, a communication method is provided, including:

A third communication device receives fifth frequency information from a first communication device. The fifth frequency information is determined based on a nominal receive frequency of a second reference signal and fifth receive frequency information. The fifth receive frequency information includes information about a receive frequency at which the first communication device receives at least one second reference signal from a second communication device. The third communication device receives sixth frequency information from the second communication device. The sixth frequency information is determined based on a nominal receive frequency of a first reference signal and sixth receive frequency information. The sixth receive frequency information includes information about a receive frequency at which the second communication device receives at least one first reference signal from the first communication device. The third communication device positions the first communication device based on the fifth frequency information and the sixth frequency information.

In the foregoing technical solution, the corresponding frequency information is obtained through bidirectional measurement between the first communication device and the second communication device, and the third communication device positions the first communication device based on the frequency information, to overcome an inherent frequency offset between the first communication device and the second communication device. This helps improve positioning accuracy of the third communication device for the first communication device. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

In a possible implementation, the fifth receive frequency information includes at least one third receive frequency, and each third receive frequency in the at least one third receive frequency corresponds to one or more second reference signals in the at least one second reference signal.

In this implementation, content included in the fifth receive frequency information is shown. This facilitates implementation of the solution. Each third receive frequency in the at least one third receive frequency corresponds to the one or more second reference signals. In other words, the third receive frequency is determined per second reference signal, namely, a defining manner of the third receive frequency is provided. This helps the first communication device determine the fifth frequency information, so that the third communication device determines the Doppler frequency shift between the first communication device and the second communication device with reference to the fifth frequency information, to improve the positioning accuracy for the first communication device.

In another possible implementation, the fifth receive frequency information includes at least one third receive frequency, each third receive frequency in the at least one third receive frequency corresponds to one propagation path, and the propagation path is used for transmission of the at least one second reference signal between the first communication device and the second communication device.

In this implementation, content included in the fifth receive frequency information is shown. This facilitates implementation of the solution. Each third receive frequency corresponds to one propagation path. In other words, the third receive frequency is defined per propagation path, namely, a defining manner of the third receive frequency is provided. This helps the first communication device determine the fifth frequency information, so that the third communication device determines the Doppler frequency shift between the first communication device and the second communication device with reference to the fifth frequency information, to improve the positioning accuracy for the first communication device. Defining the third receive frequency per propagation path also helps improve the positioning accuracy for the first communication device to an extent.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In this implementation, content included in the fifth receive frequency information is shown. This facilitates implementation of the solution. The third receive frequency is defined per propagation path per second reference signal, namely, a defining manner of the third receive frequency is provided. This helps the first communication device determine the fifth frequency information. This helps the third communication device determine the Doppler frequency shift between the first communication device and the second communication device with reference to the fifth frequency information, to improve the positioning accuracy for the first communication device. Defining the third receive frequency per propagation path per second reference signal further helps improve the positioning accuracy for the first communication device.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

In this implementation, content included in the fifth frequency information is shown. This improves implementability of the solution. The fifth frequency information includes the at least one tenth frequency difference, and each tenth frequency difference represents a frequency difference between the nominal receive frequency of the second reference signal and the fourth receive frequency. The third communication device accurately determines the Doppler frequency shift between the first communication device and the second communication device based on the at least one tenth frequency difference, to improve the positioning accuracy for the first communication device.

According to a sixth aspect of this application, a communication method is provided, including:

A second communication device receives fifth frequency information from a first communication device. The fifth frequency information is determined based on a nominal receive frequency of a second reference signal and fifth receive frequency information. The fifth receive frequency information includes information about a receive frequency at which the first communication device receives at least one second reference signal from the second communication device. The second communication device obtains sixth frequency information. The sixth frequency information is determined based on a nominal receive frequency of a first reference signal and sixth receive frequency information. The sixth receive frequency information includes information about a receive frequency at which the second communication device receives at least one first reference signal from the first communication device. The second communication device positions the first communication device based on the fifth frequency information and the sixth frequency information.

In a possible implementation, the fifth receive frequency information includes at least one third receive frequency, and each third receive frequency in the at least one third receive frequency corresponds to one or more second reference signals in the at least one second reference signal.

In this implementation, content included in the fifth receive frequency information is shown. This facilitates implementation of the solution. Each third receive frequency in the at least one third receive frequency corresponds to the one or more second reference signals. In other words, the third receive frequency is determined per second reference signal, namely, a defining manner of the third receive frequency is provided. This helps the first communication device determine the fifth frequency information, so that the second communication device determines a Doppler frequency shift between the first communication device and the second communication device with reference to the fifth frequency information and the sixth frequency information, to improve positioning accuracy for the first communication device.

In another possible implementation, the fifth receive frequency information includes at least one third receive frequency, each third receive frequency in the at least one third receive frequency corresponds to one propagation path, and the propagation path is used for transmission of the at least one second reference signal between the first communication device and the second communication device.

In this implementation, content included in the fifth receive frequency information is shown. This facilitates implementation of the solution. Each third receive frequency corresponds to one propagation path. In other words, the third receive frequency is defined per propagation path, namely, a defining manner of the third receive frequency is provided. This helps the second communication device determine a Doppler frequency shift between the first communication device and the second communication device with reference to the fifth frequency information and the sixth frequency information, to improve positioning accuracy for the first communication device. Defining the third receive frequency per propagation path also helps improve the positioning accuracy for the first communication device to an extent.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In this implementation, content included in the fifth receive frequency information is shown. This facilitates implementation of the solution. The third receive frequency is defined per propagation path per second reference signal, namely, a defining manner of the third receive frequency is provided. This helps the second communication device determine a Doppler frequency shift between the first communication device and the second communication device with reference to the fifth frequency information and the sixth frequency information, to improve positioning accuracy for the first communication device. Defining the third receive frequency per propagation path per second reference signal further helps improve the positioning accuracy for the first communication device.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

In this implementation, content included in the fifth frequency information is shown. This improves implementability of the solution. The fifth frequency information includes the at least one tenth frequency difference, and each tenth frequency difference represents a frequency difference between the nominal receive frequency of the second reference signal and the fourth receive frequency. The second communication device can accurately determine the Doppler frequency shift between the first communication device and the second communication device based on the at least one tenth frequency difference and a frequency difference included in the sixth frequency information, to improve the positioning accuracy for the first communication device.

According to a seventh aspect of this application, a communication apparatus is provided, including:

a processing module, configured to: obtain first transmit frequency information and first receive frequency information, where the first transmit frequency information includes information about a transmit frequency at which the communication apparatus sends at least one first reference signal, and the first receive frequency information includes information about a receive frequency at which the communication apparatus receives at least one second reference signal from a second communication device; and determine first frequency information based on the first transmit frequency information and the first receive frequency information; and

a transceiver module, configured to send the first frequency information.

In a possible implementation, the transceiver module is further configured to:
receive a first request message, where the first request message is used to request the first frequency information.

In another possible implementation, the first frequency information is used to position the communication apparatus.

In another possible implementation, the transceiver module is further configured to:
send first index information, where the first index information includes at least one of the following: a resource index of the at least one first reference signal; a resource set index of the at least one first reference signal; a carrier component index of the at least one first reference signal; a resource index of the at least one second reference signal; and a resource set index of the at least one second reference signal.

In another possible implementation, the first transmit frequency information includes a first transmit frequency, and the first transmit frequency corresponds to one or more first reference signals in the at least one first reference signal.

In another possible implementation, the first receive frequency information includes at least one first receive frequency, and each first receive frequency in the at least one first receive frequency corresponds to one or more second reference signals in the at least one second reference signal.

In another possible implementation, the first receive frequency information includes at least one first receive frequency, each first receive frequency in the at least one first receive frequency corresponds to one propagation path, and the propagation path is used for transmission of the at least one second reference signal between the communication apparatus and the second communication device.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In another possible implementation, a transmit frequency at which the communication apparatus sends one first reference signal in the at least one first reference signal includes at least one of the following:

an actual transmit frequency at which the communication apparatus sends the first reference signal on a first RE;
a frequency difference between an actual transmit frequency at which the communication apparatus sends the first reference signal on a first RE and a nominal frequency corresponding to a first reference RE; or
a first preset value being the transmit frequency of the first reference signal, where
the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the communication apparatus by performing up-conversion processing on the first reference signal; or
the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the communication apparatus by performing up-conversion processing on the first reference signal.

In another possible implementation, the actual transmit frequency at which the communication apparatus sends the first reference signal on the first RE is determined based on a second frequency difference and the up-conversion frequency obtained by the communication apparatus by performing the up-conversion processing on the first reference signal. The second frequency difference is a frequency difference that is estimated by the communication apparatus on a baseband and that is between a direct current component frequency and the transmit frequency of the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In another possible implementation, a receive frequency at which the communication apparatus receives one second reference signal in the at least one second reference signal includes any one of the following:

a receive frequency at which the communication apparatus receives the second reference signal on a second RE;
a frequency difference between a receive frequency at which the communication apparatus receives the second reference signal on a second RE and a nominal frequency corresponding to a second reference RE; or
a frequency difference between a receive frequency at which the communication apparatus receives the second reference signal on a third RE and a nominal frequency corresponding to the third RE, where the third RE is any RE occupied by the second reference signal, where
the second RE is an RE corresponding to a bandwidth center in bandwidth occupied by the second reference signal; the second RE is an RE corresponding to a point A of the second reference signal; or the second RE is an RE corresponding to a down-conversion frequency obtained by the communication apparatus by performing down-conversion processing on the second reference signal; or
the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the communication apparatus by performing down-conversion processing on the second reference signal.

In another possible implementation, the receive frequency at which the communication apparatus receives the second reference signal on the second RE is determined based on the down-conversion frequency and a fourth frequency difference. The fourth frequency difference is a frequency difference that is estimated by the communication apparatus on a baseband and that is between a direct current component frequency and the receive frequency of the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In another possible implementation, the communication apparatus is a first terminal device, and the second communication device is a first access network device.

In another possible implementation, the first request message is a request location information message, and the first frequency information is carried in a provide location information message.

In another possible implementation, the first reference signal is an SRS, and the at least one second reference signal is a first PRS.

In another possible implementation, the communication apparatus is a first access network device, and the second communication device is a first terminal device; or the communication apparatus is a first terminal device, and the second communication device is a second terminal device.

In another possible implementation, the first request message is a measurement request message, and the first frequency information is carried in a measurement response message.

In another possible implementation, the communication apparatus is a first terminal device, the second communication device is a second terminal device, the first reference signal is a first SL PRS, and the at least one second reference signal is a second SL PRS.

According to an eighth aspect of this application, a communication apparatus is provided, including:

a transceiver module, configured to: receive first frequency information from a first communication device, where the first frequency information is determined based on first transmit frequency information and first receive frequency information, the first transmit frequency information includes information about a transmit frequency at which the first communication device sends at least one first reference signal, and the first receive frequency information includes information about a receive frequency at which the first communication device receives at least one second reference signal from a second communication device; and receive second frequency information from the second communication device, where the second frequency information is determined based on second transmit frequency information and second receive frequency information, the second transmit frequency information includes information about a transmit frequency at which the second communication device sends the at least one second reference signal, and the second receive frequency information includes information about a receive frequency at which the second communication device receives the at least one first reference signal from the first communication device; and

a processing module, configured to determine, based on the first frequency information and the second frequency information, to position the first communication device.

In a possible implementation, the transceiver module is further configured to:

receive third frequency information from the first communication device, where the third frequency information includes third transmit frequency information and third receive frequency information, the third transmit frequency information includes information about a transmit frequency at which the first communication device sends at least one first reference signal, and the third receive frequency information includes information about a receive frequency at which the first communication device receives at least one third reference signal from a fourth communication device; and receive fourth frequency information from the fourth communication device, where the fourth frequency information is determined based on fourth transmit frequency information and fourth receive frequency information, the fourth transmit frequency information includes information about a transmit frequency at which the fourth communication device sends the at least one third reference signal, and the fourth receive frequency information includes information about a receive frequency at which the fourth communication device receives the at least one first reference signal from the first communication device; and

the processing module is specifically configured to:

position the first communication device based on the first frequency information, the second frequency information, the third frequency information, and the fourth frequency information.

In another possible implementation, the transceiver module is further configured to:

send a first request message to the first communication device, where the first request message is used to request the first frequency information; and

send a second request message to the second communication device, where the second request message is used to request the second frequency information.

In another possible implementation, the transceiver module is further configured to:

receive first index information from the first communication device, where the first index information includes at least one of the following:

a resource index of the at least one first reference signal;

a resource set index of the at least one first reference signal;

a carrier component index of the at least one first reference signal;

a resource index of the at least one second reference signal; and

a resource set index of the at least one second reference signal.

In another possible implementation, the first transmit frequency information includes a first transmit frequency, and the first transmit frequency corresponds to one or more first reference signals in the at least one first reference signal.

In another possible implementation, the first receive frequency information includes at least one first receive frequency, and each first receive frequency in the at least one first receive frequency corresponds to one or more second reference signals in the at least one second reference signal.

In another possible implementation, the first receive frequency information includes at least one first receive frequency, each first receive frequency in the at least one first receive frequency corresponds to one propagation path, and the propagation path is used for transmission of the at least one second reference signal between the first communication device and the second communication device.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In another possible implementation, a transmit frequency at which the first communication device sends one first reference signal in the at least one first reference signal includes any one of the following:

an actual transmit frequency at which the first communication device sends the first reference signal on a first RE;
a frequency difference between an actual transmit frequency at which the first communication device sends the first reference signal on a first RE and a nominal frequency corresponding to a first reference RE; or
a first preset value being the transmit frequency of the first reference signal, where
the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

In another possible implementation, the actual transmit frequency at which the first communication device sends the first reference signal on the first RE is determined based on the up-conversion frequency and a second frequency difference.

The second frequency difference is a frequency difference that is estimated by the first communication device on a baseband and that is between a direct current component frequency and the receive frequency of the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In another possible implementation, a receive frequency at which the first communication device receives one second reference signal in the at least one second reference signal includes any one of the following:

a receive frequency at which the first communication device receives the second reference signal on a second RE;
a frequency difference between a receive frequency at which the first communication device receives the second reference signal on a second RE and a nominal frequency corresponding to a second reference RE; or
a frequency difference between a receive frequency at which the first communication device receives the second reference signal on a third RE and a nominal frequency corresponding to the third RE, where the third RE is any RE occupied by the second reference signal, where
the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or
the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

In another possible implementation, the receive frequency at which the first communication device receives the second reference signal on the second RE is determined based on the down-conversion frequency and a fourth frequency difference.

The fourth frequency difference is a frequency difference that is estimated by the first communication device on a baseband and that is between a direct current component frequency and the receive frequency of the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In another possible implementation, the first communication device is a first terminal device, the second communication device is a first access network device, and the communication apparatus is a location management device.

In another possible implementation, the first request message is a request location information message, and the first frequency information is carried in a provide location information message. The second request message is a measurement request message, and the second frequency information is carried in a measurement response message.

In another possible implementation, the first reference signal is an SRS, and the at least one second reference signal is a first PRS.

According to a ninth aspect of this application, a communication apparatus is provided, including:

a transceiver module, configured to receive first frequency information from a first communication device, where the first frequency information is determined based on first transmit frequency information and first receive frequency information, the first transmit frequency information includes information about a transmit frequency at which the first communication device sends at least one first reference signal, and the first receive frequency information includes information about a receive frequency at which the first communication device receives at least one second reference signal from the communication apparatus; and

a processing module, configured to: obtain second frequency information, where the second frequency information is determined based on second transmit frequency information and second receive frequency information, the second transmit frequency information includes information about a transmit frequency at which the communication apparatus sends the at least one second reference signal, and the second receive frequency information includes information about a receive frequency at which the communication apparatus receives the at least one first reference signal from the first communication device; and position the first communication device based on the first frequency information and the second frequency information.

In another possible implementation, the transceiver module is further configured to:
send a first request message to the first communication device, where the first request message is used to request the first frequency information.

In another possible implementation, the transceiver module is further configured to:
receive first index information from the first communication device, where the first index information includes at least one of the following:

a resource index of the at least one first reference signal;
a resource set index of the at least one first reference signal;
a carrier component index of the at least one first reference signal;
a resource index of the at least one second reference signal; and
a resource set index of the at least one second reference signal.

In another possible implementation, the first transmit frequency information includes a first transmit frequency, and the first transmit frequency corresponds to one or more first reference signals in the at least one first reference signal.

In another possible implementation, the first receive frequency information includes at least one first receive frequency, and each first receive frequency in the at least one first receive frequency corresponds to one or more second reference signals in the at least one second reference signal.

In another possible implementation, the first receive frequency information includes at least one first receive frequency, each first receive frequency in the at least one first receive frequency corresponds to one propagation path, and the propagation path is used for transmission of the at least one second reference signal between the first communication device and the communication apparatus.

In another possible implementation, the first receive frequency information includes at least one first receive frequency, each first receive frequency in the at least one first receive frequency corresponds to one propagation path and one or more second reference signals in the at least one second reference signal, and the propagation path is used for transmission of the one or more second reference signals.

In another possible implementation, the first frequency information includes at least one first frequency difference, and the at least one first frequency difference corresponds to the at least one first receive frequency. Each first frequency difference in the at least one first frequency difference is a frequency difference between a first receive frequency that corresponds to the first frequency difference in the at least one first frequency difference and the first transmit frequency.

In another possible implementation, a transmit frequency at which the first communication device sends one first reference signal in the at least one first reference signal includes any one of the following:

an actual transmit frequency at which the first communication device sends the first reference signal on a first RE;

a frequency difference between an actual transmit frequency at which the first communication device sends the first reference signal on a first RE and a nominal frequency corresponding to a first reference RE; or

a first preset value being the transmit frequency of the first reference signal, where

the first RE includes any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or

the first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

In another possible implementation, the actual transmit frequency at which the first communication device sends the first reference signal on the first RE is determined based on the up-conversion frequency and a second frequency difference.

The second frequency difference is a frequency difference that is estimated by the first communication device on a baseband and that is between a direct current component frequency and the receive frequency of the first reference signal on the first RE.

In another possible implementation, the nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal.

In another possible implementation, a receive frequency at which the first communication device receives one second reference signal in the at least one second reference signal includes any one of the following:

a receive frequency at which the first communication device receives the second reference signal on a second RE;

a frequency difference between a receive frequency at which the first communication device receives the second reference signal on a second RE and a nominal frequency corresponding to a second reference RE; or

a frequency difference between a receive frequency at which the first communication device receives the second reference signal on a third RE and a nominal frequency corresponding to the third RE, where the third RE is any RE occupied by the second reference signal, where

the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or

the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

In another possible implementation, the receive frequency at which the first communication device receives the second reference signal on the second RE is determined based on the down-conversion frequency and a fourth frequency difference.

The fourth frequency difference is a frequency difference that is estimated by the first communication device on a baseband and that is between a direct current component frequency and the receive frequency of the second reference signal on the second RE.

In another possible implementation, the nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

In another possible implementation, the first communication device is a first terminal device, and the communication apparatus is a second terminal device.

In another possible implementation, the first request message is a measurement request message, and the first frequency information is carried in a measurement response message.

In another possible implementation, the first reference signal is a first SL PRS, and the at least one second reference signal is a second SL PRS.

According to a tenth aspect of this application, a communication apparatus is provided, including:

a processing module, configured to: obtain a nominal receive frequency of a second reference signal and fifth receive frequency information, where the fifth receive frequency information includes information about a receive frequency at which the communication apparatus receives at least one second reference signal from a second communication device; and determine fifth frequency information based on the nominal receive frequency of the second reference signal and the fifth receive frequency information; and

a transceiver module, configured to send the fifth frequency information.

In a possible implementation, the fifth receive frequency information includes at least one third receive frequency, and each third receive frequency in the at least one third receive frequency corresponds to one or more second reference signals in the at least one second reference signal.

In another possible implementation, the fifth receive frequency information includes at least one third receive frequency, each third receive frequency in the at least one third receive frequency corresponds to one propagation path, and the propagation path is used for transmission of the at least one second reference signal between the communication apparatus and the second communication device.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

According to an eleventh aspect of this application, a communication apparatus, including:

a transceiver module, configured to receive fifth frequency information from a first communication device, where the fifth frequency information is determined based on a nominal receive frequency of a second reference signal and fifth receive frequency information, and the fifth receive frequency information includes information about a receive frequency at which the first communication device receives at least one second reference signal from a second communication device; and receive sixth frequency information from the second communication device, where the sixth frequency information is determined based on a nominal receive frequency of a first reference signal and sixth receive frequency information, and the sixth receive frequency information includes information about a receive frequency at which the second communication device receives at least one first reference signal from the first communication device; and

a processing module, configured to position the first communication device based on the fifth frequency information and the sixth frequency information.

In a possible implementation, the fifth receive frequency information includes at least one third receive frequency, and each third receive frequency in the at least one third receive frequency corresponds to one or more second reference signals in the at least one second reference signal.

In another possible implementation, the fifth receive frequency information includes at least one third receive frequency, each third receive frequency in the at least one third receive frequency corresponds to one propagation path, and the propagation path is used for transmission of the at least one second reference signal between the first communication device and the second communication device.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

According to a twelfth aspect of this application, a communication apparatus is provided, including:

a transceiver module, configured to receive fifth frequency information from a first communication device, where the fifth frequency information is determined based on a nominal receive frequency of a second reference signal and fifth receive frequency information, and the fifth receive frequency information includes information about a receive frequency at which the first communication device receives at least one second reference signal from the communication apparatus; and obtain sixth frequency information from the second communication device, where the sixth frequency information is determined based on a nominal receive frequency of a first reference signal and sixth receive frequency information, and the sixth receive frequency information includes information about a receive frequency at which the communication apparatus receives at least one first reference signal from the first communication device; and
a processing module, configured to position the first communication device based on the fifth frequency information and the sixth frequency information.

In a possible implementation, the fifth receive frequency information includes at least one third receive frequency, and each third receive frequency in the at least one third receive frequency corresponds to one or more second reference signals in the at least one second reference signal.

In another possible implementation, the fifth receive frequency information includes at least one third receive frequency, each third receive frequency in the at least one third receive frequency corresponds to one propagation path, and the propagation path is used for transmission of the at least one second reference signal between the first communication device and the communication apparatus.

In another possible implementation, the fifth receive frequency information includes at least one third receive frequency, each third receive frequency in the at least one third receive frequency corresponds to one propagation path and one or more second reference signals in the at least one second reference signal, and the propagation path is used for transmission of the one or more second reference signals.

In another possible implementation, the fifth frequency information includes at least one tenth frequency difference, and the at least one tenth frequency difference corresponds to the at least one third receive frequency. Each tenth frequency difference in the at least one tenth frequency difference corresponds to the nominal receive frequency of the second reference signal and one fourth receive frequency.

According to a thirteenth aspect of this application, a communication apparatus is provided. The communication apparatus includes a processor and a memory. The memory stores a computer program or computer instructions. The processor is configured to invoke and run the computer program or the computer instructions stored in the memory, to enable the processor to implement any one of the implementations of any one of the first aspect to the sixth aspect.

Optionally, the communication apparatus further includes a transceiver, and the processor is configured to control the transceiver to receive and send signals.

According to a fourteenth aspect of this application, a communication apparatus is provided. The communication apparatus includes a processor. The processor is configured to invoke a computer program or computer instructions in a memory, to enable the processor to implement any one of the implementations of any one of the first aspect to the sixth aspect.

Optionally, the communication apparatus further includes a transceiver, and the processor is configured to control the transceiver to receive and send signals.

According to a fifteenth aspect of this application, a communication apparatus is provided. The communication apparatus includes a processor, and the processor is configured to perform any one of the implementations of any one of the first aspect to the sixth aspect.

According to a sixteenth aspect of this application, a computer program product including instructions is provided. When the instructions are run on a computer, the computer is enabled to perform any one of the implementations of any one of the first aspect to the sixth aspect.

According to a seventeenth aspect of this application, a computer-readable storage medium, including computer instructions, is provided. When the instructions are run on a computer, the computer is enabled to perform any one of the implementations of any one of the first aspect to the sixth aspect.

According to an eighteenth aspect of this application, a chip apparatus is provided. The chip apparatus includes a processor, configured to invoke a computer program or computer instructions in a memory, to enable the processor to perform any one of the implementations of any one of the first aspect to the sixth aspect.

Optionally, the processor is coupled to the memory through an interface.

According to a nineteenth aspect of this application, a communication system is provided. The communication system includes the first communication device according to the first aspect and the third communication device according to the second aspect. Alternatively, the communication system includes the first communication device according to the first aspect and the second communication device according to the third aspect. Alternatively, the communication system includes the first communication device according to the fourth aspect and the third communication device according to the fifth aspect. Alternatively, the communication system includes the first communication device according to the fourth aspect and the third communication device according to the sixth aspect.

It can be learned from the foregoing technical solutions that embodiments of this application have the following advantages:

It can be learned from the foregoing technical solutions that the first communication device obtains the first transmit frequency information and the first receive frequency information. The first transmit frequency information includes the information about the transmit frequency at which the first communication device sends the at least one first reference signal. The first receive frequency information includes the information about the receive frequency at which the first communication device receives the at least one second reference signal from the second communication device. Then, the first communication device determines the first frequency information based on the first transmit frequency information and the first receive frequency information, and sends the first frequency information. It can be learned that the first frequency information is determined based on the first transmit frequency information and the first receive frequency information. The first communication device reports the first frequency information. This helps accurately determine accuracy of the Doppler frequency shift between the first communication device and the second communication device based on the first frequency information, to improve positioning accuracy for the terminal device.

## BRIEF DESCRIPTION OF DRAWINGS

FIG. 1 is a schematic of a communication system according to an embodiment of this application;
FIG. 2 is a diagram of a scenario of a communication method according to an embodiment of this application;
FIG. 3 is another schematic of a communication system according to an embodiment of this application;
FIG. 4 is a diagram of calculating a Doppler frequency shift according to an embodiment of this application;
FIG. 5 is another diagram of a scenario of a communication method according to an embodiment of this application;
FIG. 6 is a diagram of an embodiment of a communication method according to an embodiment of this application;
FIG. 7 is another diagram of a scenario of a communication method according to an embodiment of this application;
FIG. 8 is another diagram of a scenario of a communication method according to an embodiment of this application;
FIG. 9 is another diagram of a scenario of a communication method according to an embodiment of this application;
FIG. 10 is another diagram of a scenario of a communication method according to an embodiment of this application;
FIG. 11 is another diagram of a scenario of a communication method according to an embodiment of this application;
FIG. 12A and FIG. 12B are another diagram of an embodiment of a communication method according to an embodiment of this application;
FIG. 13 is another diagram of an embodiment of a communication method according to an embodiment of this application;
FIG. 14 is another diagram of an embodiment of a communication method according to an embodiment of this application;
FIG. 15 is another diagram of an embodiment of a communication method according to an embodiment of this application;
FIG. 16 is a schematic of a structure of a communication apparatus according to an embodiment of this application;
FIG. 17 is another schematic of a structure of a communication apparatus according to an embodiment of this application;
FIG. 18 is another schematic of a structure of a communication apparatus according to an embodiment of this application; and
FIG. 19 is a schematic of a structure of a terminal device according to an embodiment of this application.

## DESCRIPTION OF EMBODIMENTS

Embodiments of this application provide a communication method and a communication apparatus, to improve positioning accuracy for a terminal device.

The following describes two possible communication systems to which this application is applicable.

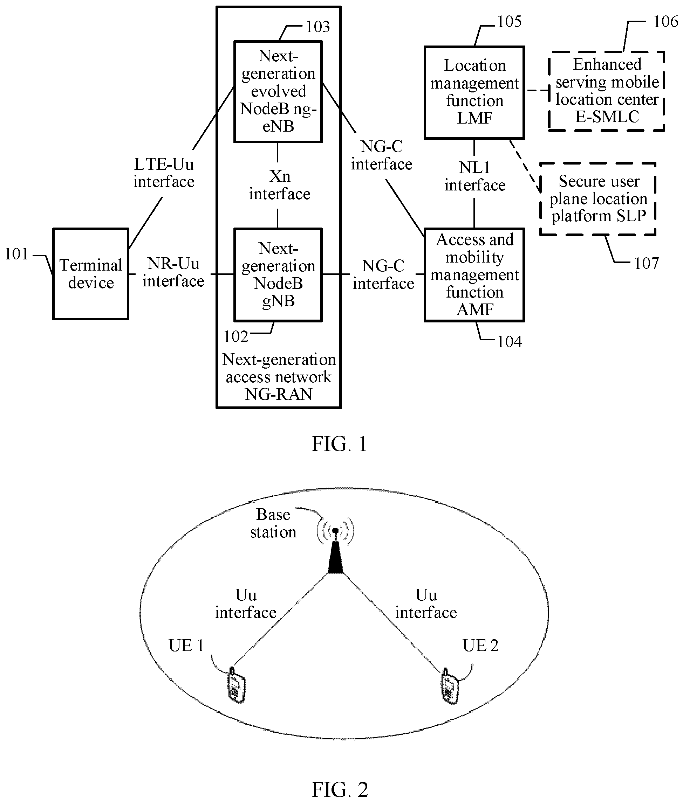

FIG. 1 is a schematic of a communication system according to an embodiment of this application. Refer to FIG. 1. The communication system includes a terminal device 101, a next-generation NodeB (next-generation NodeB, gNB) 102, a next-generation evolved NodeB (next-generation evolved NodeB, ng-eNB) 103, an access and mobility management function (access and mobility management function, AMF) 104, and a location management function (location management function, LMF) 105. The LMF 105 is a network element, a module, or a component that provides a positioning function for a terminal device in an NR core network.

Optionally, the communication system further includes an enhanced serving mobile location center (evolved serving mobile location center, E-SMLC) 106 and a secure user plane location platform (secure user plane location platform, SLP) 107. The E-SMLC 106 is a network element, a module, or a component that provides a positioning function in a 4G core network. The SLP 107 is a network element, a module, or a component configured to process a secure user plane positioning protocol in the 4G core network.

The terminal device 101 communicates with an access network device (for example, the gNB 102 or the ng-eNB 103 in FIG. 1) through a Uu interface. The ng-eNB 103 is an access network device in a long term evolution (long term evolution, LTE) communication system, and the gNB 102 is an access network device in an NR communication system. For example, as shown in FIG. 2, a base station communicates with each of a UE 1 and a UE 2 through a Uu interface. In the communication system, access network devices communicate with each other through an Xn interface, and the access network device communicates with the AMF 104 through an NG-C interface. The AMF 104 communicates with the LMF 105 through an NL1 interface, and the AMF 104 is equivalent to a router for communication between the access network device and the LMF 105. The LMF 105 is configured to perform positioning calculation on a location of the terminal device.

FIG. 1 shows only an example in which the communication system includes two access network devices: the gNB and the ng-eNB. However, during actual application, the communication system may include at least one access network device. This is not specifically limited in this application.

In the communication system shown in FIG. 1, the LMF is a name in a current communication system. In a future communication system, the name of the LMF may change with evolution of the communication system. Therefore, the LMF is referred to as a location management device below to describe embodiments of this application. The location management device is configured to perform positioning calculation on a location of a terminal device. In a current communication system or a future communication system, any functional network element that has another name and that has a function similar to that of the location management device may be understood as the location management device in embodiments of this application, and may be applied to a communication method provided in embodiments of this application.

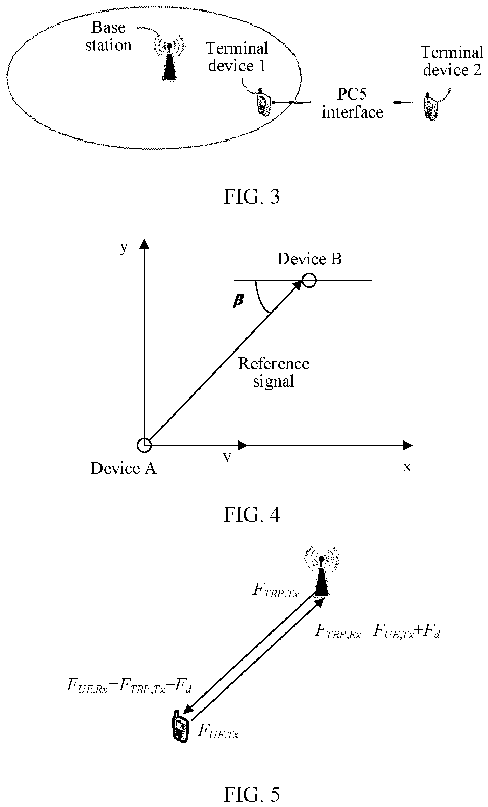

FIG. 3 is another schematic of a communication system according to an embodiment of this application. The communication system includes a terminal device 1 and a terminal device 2. The terminal device 1 and the terminal device 2 are outside signal coverage of a base station. The terminal device 1 communicates with the terminal device 2 through a proximity service communication 5 (proximity service communication 5, PC5) interface. The terminal device 1 may position the terminal device 2 by using the technical solution of this application.

The communication system to which this application is applicable is merely an example. During actual application, this application is further applicable to another communication system having a positioning requirement. This is not specifically limited in this application. The foregoing example does not constitute a limitation on the technical solution of this application.

The following describes the terminal device and an access network device in this application.

The access network device is an apparatus deployed in a radio access network to provide a wireless communication function for the terminal device. The access network device is a base station, and the base station is a macro base station, a micro base station (also referred to as a small cell), a relay station, an access point (access point, AP), a wearable device, a vehicle-mounted device, and the like in various forms. Alternatively, the base station may be a transmission reception point (transmission reception point, TRP), a transmission measurement function (transmission measurement function, TMF), or the like. For example, the base station in embodiments of this application may be a base station in new radio (new radio, NR). The base station in 5G NR may also be referred to as a transmission reception point (transmission reception point, TRP), a transmission point (transmission point, TP), or a next-generation NodeB (next-generation NodeB, ngNB), or may be an evolved NodeB (evolved NodeB, eNB or eNodeB) in a long term evolution (long term evolution, LTE) system.

The terminal device may be a wireless terminal device that can receive scheduling and indication information of the access network device. The wireless terminal device may refer to a device that provides a user with voice and/or data connectivity, a handheld device having a wireless connection function, or another processing device connected to a wireless modem.

The terminal device, also referred to as a user equipment (user equipment, UE), a mobile station (mobile station, MS), a mobile terminal (mobile terminal, MT), or the like, is a device including a wireless communication function (providing voice/data connectivity to the user), for example, a handheld device or a vehicle-mounted device that has the wireless connection function. Currently, some examples of the terminal device are a mobile phone (mobile phone), a tablet computer, a notebook computer, a palmtop computer, a train, a car, a plane, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in a smart grid (smart grid), a wireless terminal in transportation safety (transportation safety), a wireless terminal in a smart city (smart city), and the like. For example, the wireless terminal in the internet of vehicles may be a vehicle-mounted device, an entire vehicle device, a vehicle-mounted module, a vehicle, or the like. The wireless terminal in the industrial control may be a robot or the like.

FIG. 4 is a diagram of a scenario of a communication method according to an embodiment of this application. In FIG. 4, a device A sends a reference signal to a device B, an angle at which the reference signal arrives at the device

B is $\beta$, and a moving velocity of the device A is V. Because the device A is in a moving state, a Doppler frequency shift exists between the device A and the device B. In this case, the device B may obtain the angle of arrival $\beta$ through estimation by using the following formula 1.

$$F_d = \frac{v}{\lambda_c} \cos \beta \quad \text{(Formula 1),}$$

where $F_d$ is the Doppler frequency shift between the device A and the device B, V is the moving velocity of the device A, $\lambda_c$ is a wavelength corresponding to a frequency at which the device A sends the reference signal, $\lambda_c$ is equal to a center frequency $f_c$ of the reference signal sent by the device A/a light velocity c, and $\beta$ is the angle at which the reference signal arrives at the device B.

Therefore, if $F_d$, V, and $\lambda_c$ are all known, the device B may determine, based on these parameters, the angle $\beta$ at which the reference signal arrives at the device B. The device B may determine, based on the angle of arrival $\beta$, an included angle between a velocity direction of the terminal device and a direction of a connection line between the device A and the device B: an angle of arrival (angle of arrival, AOA).

It should be noted that, if the moving velocity of the device A is unknown, the device B may also determine a location, a velocity, and the like of the device A with reference to another positioning method, $F_D$, and $\lambda_c$. Therefore, how to determine the Doppler frequency shift $F_D$ is a problem that urgently needs to be resolved currently.

Currently, in the communication system shown in FIG. 1, as shown in FIG. 5, the base station sends a positioning reference signal (positioning reference signal, PRS) to the terminal device at a transmit frequency $F_{TRP,Tx}$. The terminal device sends a sounding reference signal (sounding reference signal, SRS) at a transmit frequency $F_{UE,Tx}$. Because a Doppler effect exists, a frequency at which the SRS arrives at the base station side is $F_{TRP,Rx} = F_{UE,Tx} + F_d$, where $F_d$ is a Doppler frequency shift. The base station determines the Doppler frequency shift between the terminal device and the base station based on $F_{TRP,Rx}$ and $F_{TRP,Tx}$, and sends the Doppler frequency shift to the location management device.

However, due to various causes, it cannot be ensured that the transmit frequency $F_{UE,Tx}$ of the terminal device is equal to the transmit frequency $F_{TRP,Tx}$ of the base station, or it cannot be ensured that the transmit frequency $F_{UE,Tx}$ of the terminal device is equal to a receive frequency $F_{UE,Rx}$ of the terminal device. As a result, the base station cannot accurately determine the Doppler frequency shift between the terminal device and the base station based on $F_{TRP,Rx}$ and $F_{TRP,TX}$. Consequently, positioning accuracy of the location management device for the terminal device is affected.

In view of this, this application provides a corresponding technical solution, to improve positioning accuracy for the terminal device. In the technical solution of this application, a first communication device obtains first transmit frequency information and first receive frequency information. The first transmit frequency information includes information about a transmit frequency at which the first communication device sends at least one first reference signal. The first receive frequency information includes information about a receive frequency at which the first communication device receives at least one second reference signal from a second communication device. The first communication device determines first frequency information based on the first transmit frequency information and second receive frequency information, and sends the first frequency information to a third communication device.

In a possible implementation, the foregoing technical solution is applied to the communication system shown in FIG. 1. Based on this implementation, the following describes several possible forms of the first communication device, the second communication device, and the third communication device.

Implementation 1: The first communication device is a first terminal device, the second communication device is a first access network device, and the third communication device is a location management device.

In this implementation, the at least one first reference signal may be at least one SRS, and the at least one second reference signal may be at least one first PRS.

Implementation 2: The first communication device is a first terminal device, the second communication device is a second terminal device, and the third communication device is a location management device.

In this implementation, the at least one first reference signal may be at least one first SL PRS, and the at least one second reference signal may be at least one second SL PRS.

Implementation 3: The first communication device is a first access network device, the second communication device is a first terminal device, and the third communication device is a location management device.

The implementation 1 is used as an example below to describe the technical solution of this application.

The second communication device obtains second transmit frequency information and second receive frequency information. The second transmit frequency information is information about a transmit frequency at which the second communication device sends the at least one second reference signal. The second receive frequency information includes information about a receive frequency at which the second communication device receives the at least one first reference signal from the first communication device. The second communication device determines second frequency information based on the second transmit frequency information and the second receive frequency information, and sends the second frequency information to the third communication device. Correspondingly, the third communication device receives the first frequency information from the first communication device, and the third communication device receives the second frequency information from the second communication device. The third communication device positions the first terminal device based on the first frequency information and the second frequency information.

Based on the implementation 1, optionally, the first communication device obtains third transmit frequency information and third receive frequency information. The third transmit frequency information includes information about a transmit frequency at which the first communication device sends the at least one first reference signal. The third receive frequency information includes information about a receive frequency at which the first communication device receives at least one third reference signal from a fourth communication device. The first communication device determines third frequency information based on the third transmit frequency information and the third receive frequency information, and sends the third frequency information to the third communication device.

The fourth communication device obtains fourth transmit frequency information and fourth receive frequency information. The fourth transmit frequency information includes information about a transmit frequency at which the fourth communication device sends the at least one third reference signal. The fourth receive frequency information includes information about a receive frequency at which the fourth communication device receives the at least one first reference signal from the first communication device. The fourth communication device is a second access network device, and the at least one third reference signal is at least one second PRS. In other words, the location management device selects the first access network device and the second access network device to assist in positioning the first terminal device.

Correspondingly, the third communication device receives the third frequency information from the first communication device. The third communication device receives fourth frequency information from the fourth communication device. The third communication device positions the first terminal device based on the first frequency information, the second frequency information, the third frequency information, and the fourth frequency information.

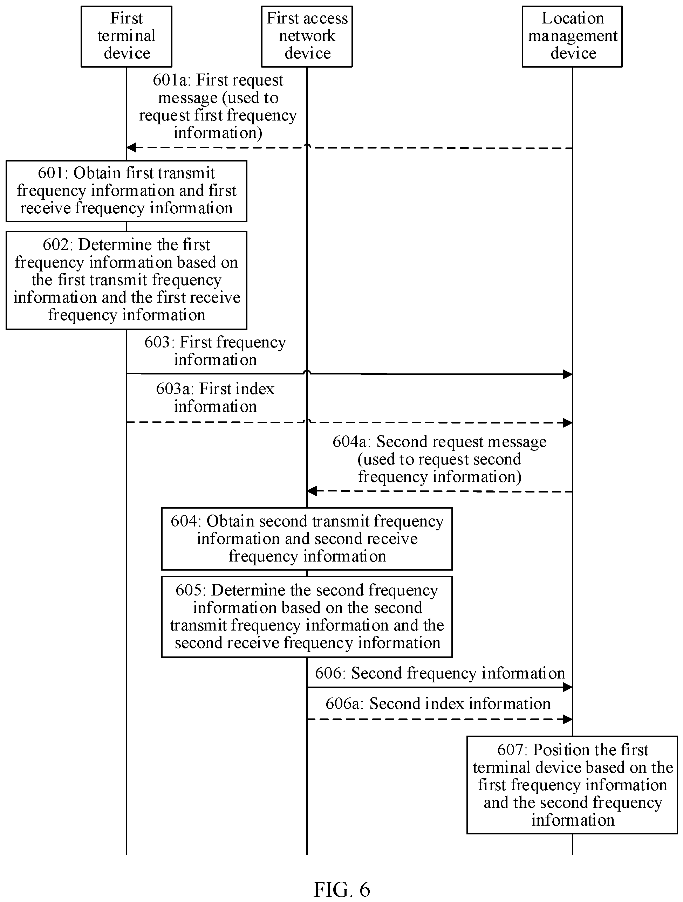

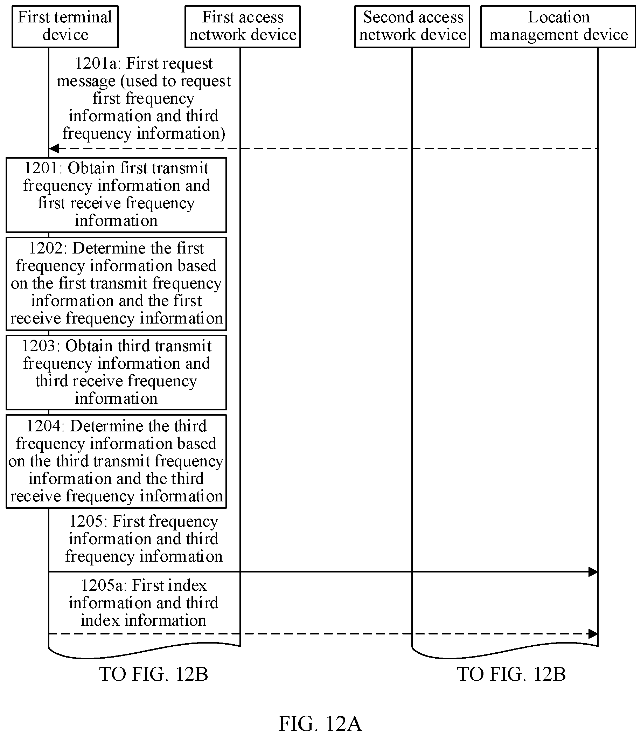

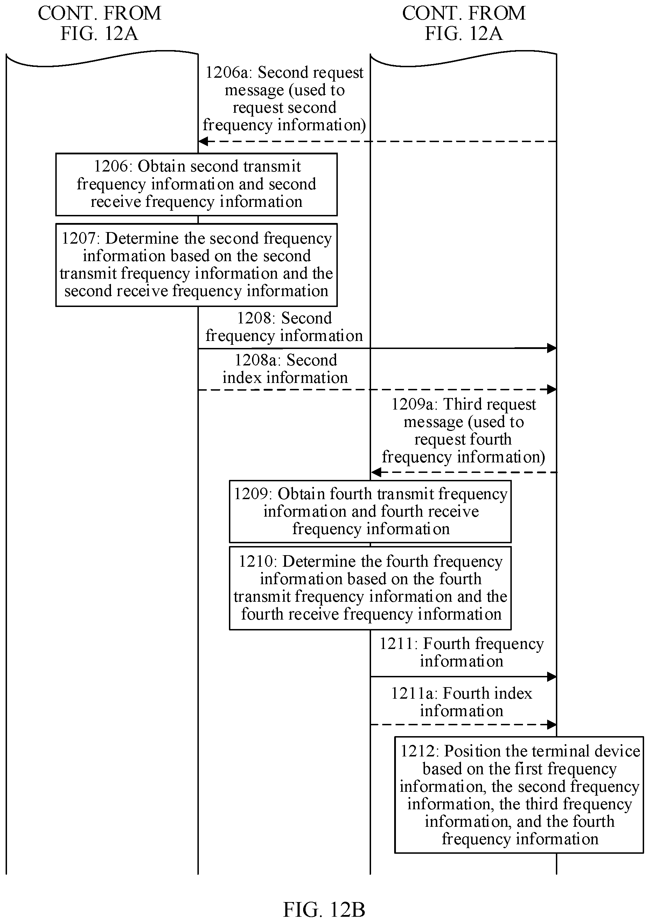

In the following embodiment shown in FIG. 6, an example in which the first communication device is a first terminal device and the second communication device is a first access network device is used to describe the technical solution of this application. In the following embodiment shown in FIG. 12A and FIG. 12B, an example in which the first communication device is a first terminal device, the second communication device is a first access network device, the third communication device is a location management device, and the fourth communication device is a second access network device is used to describe the technical solution of this application.

In another possible implementation, the foregoing technical solution is applied to the communication system shown in FIG. 3. Based on this implementation, the first communication device is a first terminal device.

Correspondingly, the second communication device receives first frequency information from the first communication device. The second communication device obtains second frequency information. The second frequency information is determined by the second communication device based on second transmit frequency information and second receive frequency information. The second transmit frequency information includes information about a transmit frequency at which the second communication device sends the at least one second reference signal. The second receive frequency information includes information about a receive frequency at which the second communication device receives the at least one first reference signal from the first communication device. The second communication device obtains the second frequency information. The second frequency information is determined based on the second transmit frequency information and the second receive frequency information. The second transmit frequency information includes information about a transmit frequency at which the second communication device sends the at least one second reference signal. The second receive frequency information includes information about a receive frequency at which the second communication device receives the at least one first reference signal from the first communication device. The second communication device positions the first communication device based on the first frequency information and the second frequency information.

The second communication device is a second terminal device. For example, as shown in FIG. 2, the first communication device is the terminal device 1, and the second communication device is the terminal device 2. The terminal device 1 communicates with the terminal device 2 through the PC5 interface. The at least one first reference signal is at least one first SL PRS, and the at least one second reference signal is at least one second SL PRS.

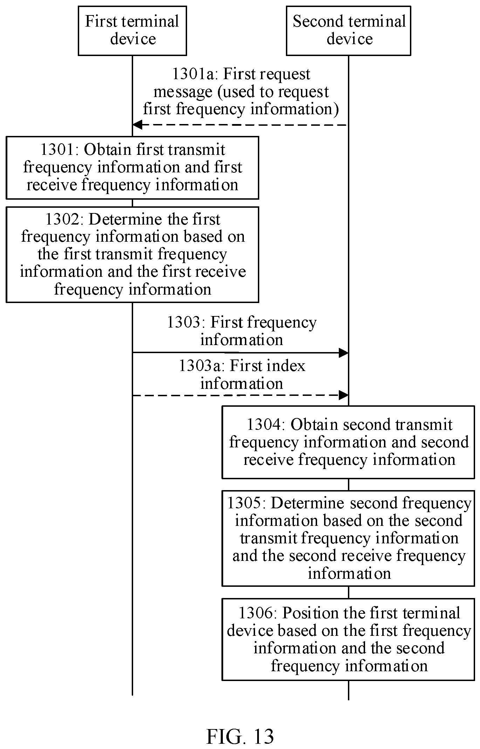

In the following embodiment shown in FIG. 13, an example in which the first communication device is a first terminal device and the second communication device is a second terminal device is used to describe the technical solution of this application.

The technical solution of this application is described below with reference to specific embodiments.

FIG. 6 is a diagram of an embodiment of a communication method according to an embodiment of this application. Refer to FIG. 6. The communication method includes the following steps.

601: A first terminal device obtains first transmit frequency information and first receive frequency information.

The first transmit frequency information includes information about a transmit frequency at which the first terminal device sends at least one first reference signal. For example, the at least one first reference signal may be at least one SRS.

In a possible implementation, the first transmit frequency information includes at least one first transmit frequency, and each first transmit frequency in the at least one first transmit frequency corresponds to one or more first reference signals in the at least one first reference signal. First reference signals corresponding to different first transmit frequencies are different or partially different.

For example, the first transmit frequency information includes one first transmit frequency. If a transmit frequency at which the first terminal device sends each SRS in the at least one SRS is the same, the first terminal device may use a transmit frequency of one of the at least one SRS as the first transmit frequency.

For example, the first transmit frequency information includes one first transmit frequency. If a frequency of a point A corresponding to the at least one SRS is the same, the first terminal device may use the frequency of the point A corresponding to the at least one SRS as the first transmit frequency.

For example, the first transmit frequency information includes two first transmit frequencies. A first transmit frequency 1 is a transmit frequency at which the first terminal device sends an SRS 1, and a first transmit frequency 2 is a transmit frequency at which the first terminal device sends an SRS 2.

For example, the first transmit frequency information includes two first transmit frequencies. A first transmit frequency 1 is an average of a transmit frequency at which the first terminal device sends an SRS 1 and a transmit frequency at which the first terminal device sends an SRS 2. A first transmit frequency 2 is an average of the transmit frequency at which the first terminal device sends the SRS 2 and a transmit frequency at which the first terminal device sends an SRS 3.

The following describes some specific defining manners of the transmit frequency at which the first terminal device sends one first reference signal in the at least one first reference signal.

1. An actual transmit frequency at which the first terminal device sends the first reference signal on a first RE.

The first RE includes any one of the following: an RE corresponding to a bandwidth center in bandwidth occupied by the first reference signal; an RE corresponding to a bandwidth center in a bandwidth part (bandwidth part, BWP) in which the first reference signal is located; an RE corresponding to a channel bandwidth (channel bandwidth, CBW) center corresponding to a bandwidth part in which the first reference signal is located; an RE corresponding to a point A of the first reference signal; or an RE corresponding to an up-conversion frequency obtained by the first terminal device by performing up-conversion processing on the first reference signal. The RE corresponding to the up-conversion frequency obtained by the first terminal device by performing the up-conversion processing on the first reference signal may also be represented as an RE corresponding to the first reference signal on a baseband.

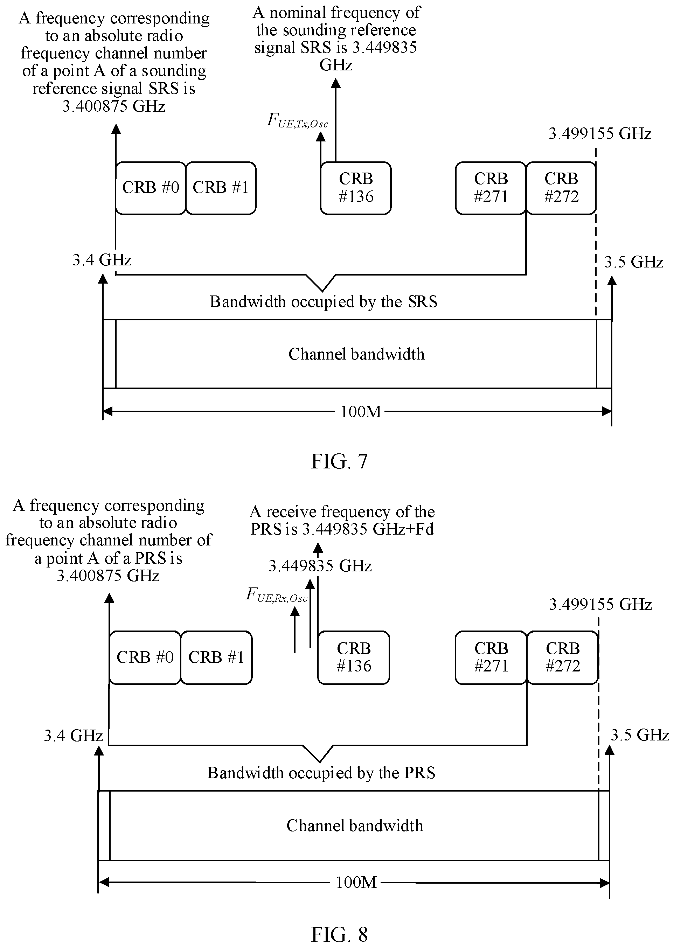

For example, as shown in FIG. 7, the first terminal device sends an SRS by using a subcarrier spacing of 30 kHz (kilohertz). In other words, a frequency spacing between two adjacent REs in the bandwidth occupied by the SRS is 30 kHz. The SRS occupies a common resource block (common resource block, CRB) #0 to a CRB #271 (272 CRBs in total), and C in the CRB represents common (common), indicating that RBs are numbered from a point A of the SRS. The point A of the SRS corresponds to the 1st subcarrier of the CRB #0 or the 1st RE of the CRB #0. The first RE may be the RE corresponding to the bandwidth center in the bandwidth occupied by the SRS: the 1st RE of the CRB #136. For ease of discussion, the 1st RE of the CRB #136 may be used as an up-conversion frequency of the first terminal device or a down-conversion frequency of the first terminal device.

In a possible implementation, the actual transmit frequency at which the first terminal device sends the first reference signal on the first RE is determined based on the up-conversion frequency of the first terminal device and a second frequency difference. The second frequency difference is a frequency difference that is estimated by the first terminal device on a baseband and that is between a direct current component frequency and the receive frequency of the first reference signal on the first RE.

For example, as shown in FIG. 7, the first RE is the RE corresponding to the bandwidth center in the bandwidth occupied by the SRS: the 1st RE of the CRB #136. A nominal transmit frequency of the SRS may be understood as an expected transmit frequency of the SRS on the first RE. As shown in FIG. 7, a frequency of a point A corresponding to an absolute radio frequency channel number of the SRS is 3.400875 GHz (gigahertz), and one CRB includes 12 REs. Therefore, a difference between the 1st RE of the CRB#136 and the 1st RE of the CRB #0 corresponding to the point A of the SRS is 1632 REs. Therefore, it can be learned that the nominal transmit frequency of the SRS is 3.449835 GHz. The first terminal device should send the SRS on the first RE at the frequency of 3.449835 GHz. The first terminal device locally generates a transmit frequency from a local oscillator, for example, 3.449835 GHz. However, because a deviation exists in frequency synchronization of the first terminal device, the first terminal device considers that the transmit frequency from the local oscillator of the first terminal device is 3.449835 GHz. In other words, the up-conversion frequency of the first terminal device is 3.449835 GHz. The first terminal device estimates, on the baseband, that the transmit frequency of the SRS estimated on the first RE is 0, and the direct current component frequency is also 0. Therefore, the second frequency difference is equal to 0. Therefore, the first terminal device considers that the actual transmit frequency at which the first terminal device sends the SRS on the first RE is equal to 3.449835 GHz.

2. A frequency difference between an actual transmit frequency at which the first terminal device sends the first reference signal on a first RE and a nominal frequency corresponding to a first reference RE.

The first reference RE includes any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; an RE corresponding to the up-conversion frequency obtained by the first terminal device by performing up-conversion processing on the first reference signal; or a specified RE in bandwidth occupied by the first reference signal. The RE corresponding to the up-conversion frequency obtained by the first terminal device by performing the up-conversion processing on the first reference signal may also be replaced with an RE corresponding to the first reference signal on a baseband.

A nominal frequency corresponding to the first reference RE is determined based on a third frequency difference and a frequency corresponding to an absolute radio frequency channel number of the point A of the first reference signal. The third frequency difference is a frequency difference between the first reference RE and the point A of the first reference signal. The nominal frequency of the first reference RE may also be referred to as an expected frequency of the first reference RE. In this specification, the nominal frequency is used as an example for description, and the name is not limited. The nominal frequency in this specification may also be referred to as an expected frequency, a desired frequency, or the like. This is not specifically limited in this application.

For example, as shown in FIG. 7, the first reference RE is the RE corresponding to the bandwidth center in the bandwidth occupied by the SRS: the 1st RE of the CRB #136. The nominal frequency of the first reference RE may be understood as an expected transmit frequency of the SRS on the first RE. As shown in FIG. 7, a frequency corresponding to an absolute radio frequency channel signal of a point A of the SRS is 3.400875 GHz, and a difference between the 1st RE of the CRB #136 and the 1st RE of the CRB #0 corresponding to the point A of the SRS is 1632 REs. In other words, the third frequency difference is equal to 0.04896 GHz. Therefore, it can be learned that the nominal frequency of the first reference RE is 3.449835 GHz. It can be learned from the foregoing descriptions that the actual transmit frequency at which the first terminal device sends the SRS on the first RE is 3.449835 GHz. Therefore, the frequency difference between the actual transmit frequency at which the first terminal device sends the SRS on the first RE and the nominal frequency corresponding to the first reference RE is 0.

It should be noted that an example in which the first reference RE and the first RE are a same RE is used above for description. If the first reference RE is different from the first RE, the frequency difference between the actual transmit frequency at which the first terminal device sends the first reference signal on the first RE and the nominal frequency corresponding to the first reference RE is equal to a frequency difference between the first RE and the first reference RE. The frequency difference between the first RE and the first reference RE is equal to a product of a quantity $K_{offset1}$ of REs of the difference between the first RE and the first reference RE and a subcarrier spacing $F_{SCS1}$ used by the first terminal device to send the first reference signal. For example, as shown in FIG. 7, the first RE is the 1st RE of the CRB #0. That is, the frequency at which the first terminal device sends the SRS on the first RE is 3.400875 GHz. The first reference RE is the 1st RE of the CRB #136. The first terminal device sends the SRS by using a subcarrier spacing of 30 kHz. Therefore, it can be learned that the nominal frequency corresponding to the first reference RE is 3.449835 GHz. Therefore, it can be learned that the frequency difference between the first RE and the first reference RE is equal to $K_{offset1} * F_{SCS1}$ : 0.04896 GHz.

3. The transmit frequency of the first reference signal is a first preset value.

For example, the first preset value is 0.

The first receive frequency information includes information about a receive frequency at which the first terminal device receives at least one second reference signal from the first access network device. For example, the at least one second reference signal may be at least one first PRS.

The following describes several possible implementations of the first receive frequency information.

Implementation 1: The first receive frequency information includes at least one first receive frequency. Each first receive frequency in the at least one first receive frequency corresponds to one or more second reference signals in the at least one second reference signal.

In the implementation 1, the first receive frequency is defined per second reference signal. Each first receive frequency corresponds to the one or more second reference signals.

For example, the at least one second reference signal includes a PRS 1 and a PRS 2. The first receive frequency information includes two first receiving frequencies: a receive frequency at which the first terminal device receives the PRS 1 and a receive frequency at which the first terminal device receives the PRS 2.

For example, the at least one second reference signal includes a PRS 1 and a PRS 2. The first receive frequency information includes information about one first receive frequency, and the first receive frequency is an average of a receive frequency at which the first terminal device receives the PRS 1 and a receive frequency at which the first terminal device receives the PRS 2.

Implementation 2: The first receive frequency information includes at least one first receive frequency. Each first receive frequency in the at least one first receive frequency corresponds to one propagation path. The propagation path is a propagation path between the first terminal device and the first access network device, and the propagation path is used for transmission of the at least one second reference signal.

In the implementation 2, the first receive frequency is defined per propagation path, and each first receive frequency corresponds to one propagation path.

For example, the at least one second reference signal includes a PRS 1 and a PRS 2, and there are three propagation paths between the first terminal device and the first access network device: a propagation path 1, a propagation path 2, and a propagation path 3. Therefore, the first receive frequency information includes three first receiving frequencies: a first receive frequency 1, a first receive frequency 2, and a first receive frequency 3. The first receive frequency 1 corresponds to the propagation path 1. To be specific, the first receive frequency 1 is a sum of a receive frequency at which the first terminal device receives the PRS 1 on the propagation path 1 and a receive frequency at which the first terminal device receives the PRS 2 on the propagation path 1. The first receive frequency 2 is a sum of a receive frequency at which the first terminal device receives the PRS 1 on the propagation path 2 and a receive frequency at which the first terminal device receives the PRS 2 on the propagation path 2. The first receive frequency 3 is a sum of a receive frequency at which the first terminal device receives the PRS 1 on the propagation path 3 and a receive frequency at which the first terminal device receives the PRS 2 on the propagation path 3.

Implementation 3: The first receive frequency information includes at least one first receive frequency. Each first receive frequency in the at least one first receive frequency corresponds to one propagation path and one or more second reference signals in the at least one second reference signal. The propagation path is used for transmission of the one or more second reference signals.

In the implementation 3, the first receive frequency is defined per propagation path per second reference signal. Each first receive frequency corresponds to the propagation path and the one or more second reference signals.

For example, the at least one second reference signal includes a PRS 1 and a PRS 2, and there are three propagation paths between the first terminal device and the first access network device: a propagation path 1, a propagation path 2, and a propagation path 3. The first receive frequency information includes six first receive frequencies: a first receive frequency 1 to a first receive frequency 6. The first receive frequency 1 is a receive frequency at which the first terminal device receives the PRS 1 on the propagation path 1. The first receive frequency 2 is a receive frequency at which the first terminal device receives the PRS 1 on the propagation path 2. The first receive frequency 3 is a receive frequency at which the first terminal device receives the PRS 1 on the propagation path 3. The first receive frequency 4 is a receive frequency at which the first terminal device receives the PRS 2 on the propagation path 1. The first receive frequency 5 is a receive frequency at which the first terminal device receives the PRS 2 on the propagation path 2. The first receive frequency 6 is a receive frequency at which the first terminal device receives the PRS 2 on the propagation path 3.

The following describes some specific defining manners of the receive frequency at which the first terminal device receives one second reference signal in the at least one second reference signal.

1. A receive frequency at which the first terminal device receives the second reference signal on a second RE.

The second RE includes any one of the following: an RE corresponding to a bandwidth center in bandwidth occupied by the second reference signal; an RE corresponding to a point A of the second reference signal; an RE corresponding to a down-conversion frequency obtained by the first terminal device by performing down-conversion processing on the second reference signal; or a specified RE in bandwidth occupied by the second reference signal. The RE corresponding to the down-conversion frequency obtained by the first terminal device by performing the down-conversion processing on the second reference signal may also be represented as an RE corresponding to the second reference signal on a baseband.

Optionally, indexes of the first RE and the second RE are the same.

For example, as shown in FIG. 8, the first access network device sends a PRS by using a subcarrier spacing of 30 kHz. In other words, a frequency spacing between two adjacent REs in the bandwidth occupied by the PRS is 30 kHz. The PRS occupies a CRB #0 to a CRB #271 (272 CRBs in total), and C in the CRB represents common (common), indicating that RBs are numbered from a point A of the PRS. The point A of the PRS corresponds to the 1st subcarrier of the CRB #0 or the 1st RE of the CRB #0. The second RE may be the RE corresponding to the bandwidth center in the bandwidth occupied by the PRS: the 1st RE of the CRB #136. For ease of discussion, the 1st RE of the CRB #136 may be used as a down-conversion frequency of the first terminal device.

In a possible implementation, the receive frequency at which the first terminal device receives the second reference signal on the second RE is determined based on the down-conversion frequency of the first terminal device and a fourth frequency difference.

The fourth frequency difference is a frequency difference that is estimated by the first terminal device on a baseband and that is between a direct current component frequency and the receive frequency of the second reference signal on the second RE.

For example, the second RE may be the RE corresponding to the bandwidth center in the bandwidth occupied by the PRS: the 1st RE of the CRB #136. A frequency corresponding to an absolute radio frequency channel number of the point A of the PRS is 3.4000875 GHz. A difference between the 1st RE of the CRB#136 and the 1st RE of the CRB #0 corresponding to the point A of the PRS is 1632 REs. Therefore, it can be learned that a nominal frequency corresponding to the first RE should be 3.449835 GHz. Because a Doppler effect exists, the receive frequency at which the first terminal device receives the PRS on the second RE is 3.449835 GHz+Fd, where Fd is a Doppler frequency shift. The first terminal device locally generates a receive frequency from a local oscillator, for example, 3.449835 GHz. However, because a deviation exists in frequency synchronization of the first terminal device, there is a deviation between the receive frequency from the local oscillator of the first terminal device and 3.449835 GHz. The receive frequency from the local oscillator is neither 3.449835 GHz nor 3.449835 GHz+Fd. Herein, the receive frequency from the local oscillator is referred to as $F_{UE,Rx,Osc}$. The first terminal device considers that the receive frequency from the local oscillator is 3.449835 GHz. In other words, the down-conversion frequency of the first terminal device is 3.449835 GHz. Therefore, the Doppler frequency shift that can be obtained through measurement by the first terminal device is 3.449835 GHz+Fd-$F_{UE,Rx,Osc}$. The receive frequency at which the first terminal device receives the PRS on the second RE is 3.449835 GHz+Fd. If down-conversion processing is performed on the receive frequency $F_{UE,Rx,Osc}$ from the local oscillator of the first terminal device, it can be learned that the receive frequency that is of the PRS on the second RE and that is estimated by the first terminal device on the baseband is 3.449835 GHz+Fd-$F_{UE,Rx,Osc}$, and the direct current component frequency is 0. Therefore, the fourth frequency difference is equal to 3.449835 GHz+Fd- $F_{UE,Rx,Osc}$. The actual transmit frequency at which the first terminal device receives the PRS on the second RE is equal to the down-conversion frequency of the first terminal device plus the fourth frequency difference: 3.499835 GHz+3.499835 GHz+Fd-$F_{UE,Rx,Osc}$.

2. A frequency difference between a receive frequency at which the first terminal device receives the second reference signal on a second RE and a nominal frequency corresponding to a second reference RE.

The second reference RE includes any one of the following: an RE corresponding to a bandwidth center in bandwidth occupied by the second reference signal; an RE corresponding to a point A of the second reference signal; an RE corresponding to a down-conversion frequency obtained by the first terminal device by performing down-conversion processing on the second reference signal; or a specified RE in bandwidth occupied by the second reference signal. The RE corresponding to the down-conversion frequency obtained by the first terminal device by performing the down-conversion processing on the second reference signal may also be represented as an RE corresponding to the second reference signal on a baseband.

The nominal frequency corresponding to the second reference RE is determined based on a fifth frequency difference and a frequency corresponding to an absolute radio frequency channel number of the point A of the second reference signal. The fifth frequency difference is a frequency difference between the second reference RE and the point A of the second reference signal.

For example, as shown in FIG. 8, the second reference RE is the RE corresponding to the bandwidth center in the bandwidth occupied by the PRS: the 1st RE of the CRB #136. The nominal frequency corresponding to the second reference RE may be understood as an expected receive frequency at which the first terminal device receives the PRS on the second reference RE. As shown in FIG. 8, a frequency corresponding to an absolute radio frequency channel number of the point A of the PRS is 3.4000875 GHz. A difference between the 1st RE of the CRB#136 and the 1st RE of the CRB #0 corresponding to the point A of the PRS is 1632 REs. The first access network device sends the PRS by using a subcarrier spacing of 30 kHz. Therefore, a frequency spacing between two adjacent REs is 30 kHz. The fifth frequency difference is equal to a product of 30 kHz and a quantity of REs of a spacing between the 1st RE of the CRB #136 and the 1st RE of the CRB #0. Therefore, it can be learned that the nominal frequency corresponding to the second reference RE is 3.449835 GHz. It can be learned from the foregoing descriptions that the receive frequency at which the first terminal device receives the PRS on the second RE is 3.449835 GHz+Fd- $F_{UE,Rx,Osc}$.

Therefore, the frequency difference between the receive frequency at which the first terminal device receives the PRS on the second RE and the nominal frequency corresponding to the second reference RE is 3.449835 GHz+3.449835 GHz+Fd-$F_{UE,Rx,Osc}$ - 3.449835 GHz: 3.449835 GHz+Fd- $F_{UE,Rx,Osc}$.

It should be noted that the foregoing example describes the technical solution of this application by using an example in which the second reference RE is the same as the second RE. If the second reference RE is different from the second RE, the frequency difference between the receive frequency at which the first terminal device receives the second reference signal on the second RE and the nominal frequency corresponding to the second reference signal should be equal to 3.449835 GHz+Fd- $F_{UE,Rx,Osc}$ + $K_{offset1}$ * $F_{scs1}$ , where $K_{offset1}$ * $F_{scs1}$ is the frequency difference between the second RE and the second reference RE, $K_{offset1}$ is a quantity of REs of a difference between the second RE and the second reference RE, and $F_{scs1}$ is the subcarrier spacing used by the first terminal device to receive the second reference signal. In other words, the frequency difference between the receive frequency at which the first terminal device receives the second reference signal on the second RE and the nominal frequency corresponding to the second reference RE is equal to 3.449835 GHz+Fd-$F_{UE,Rx,Osc}$ + $K_{offset1}$ * $F_{scs1}$.

For example, if $F_{UE,Rx,Osc}$ =3.4498348 GHz, there is a frequency difference of 20 Hz between 3.4498348 GHz and 3.449835 GHz. The first terminal device considers that the frequency difference between the receive frequency at which the first terminal device receives the second reference signal on the second RE and the nominal frequency corresponding to the second reference RE is 20 Hz+Fd+ $K_{offset1}$ * $F_{scs1}$.

3. A frequency difference between a receive frequency at which the first terminal device receives the second reference signal on a third RE and a nominal frequency corresponding to the third RE, where the third RE is any RE occupied by the second reference signal.

The nominal frequency corresponding to the third RE is equal to a difference between the third RE and a frequency corresponding to an absolute radio frequency channel number of a point A of the second reference signal plus a frequency difference between the third RE and the point A of the second reference signal.

The implementation 3 is similar to the implementation 2. In the implementation 2, an example in which the second RE is an RE corresponding to a bandwidth center in the bandwidth occupied by the PRS is used for description. In the implementation 3, the third RE may be any RE in bandwidth occupied by the PRS. Therefore, it can be known that, if the third RE in the implementation 3 is also an RE corresponding to a bandwidth center in bandwidth occupied by the PRS, the frequency difference between the receive frequency at which the first terminal device receives the second reference signal on the third RE and the nominal frequency corresponding to the third RE is also 3.449835 GHz+Fd-$F_{UE,Rx,Osc}$.

Specifically, the at least one first reference signal and the at least one second reference signal are configured between the location management device, the first access network device, and the first terminal device, to position the first terminal device.

Optionally, the embodiment shown in FIG. 6 further includes step 601a, and step 601a may be performed before step 601.

601a: The location management device sends a first request message to the first terminal device. Correspondingly, the first terminal device receives the first request message from the location management device.

The first request message is used to request first frequency information.

In a possible implementation, the first request message is a request location information (request location information) message.

602: The first terminal device determines the first frequency information based on the first transmit frequency information and the first receive frequency information.

The first frequency information is used to position the first terminal device.

In a possible implementation, the first frequency information includes at least one first frequency difference, and each first frequency difference in the at least one first frequency difference corresponds to one first receive frequency and one first transmit frequency. Different first frequency differences correspond to different first receive frequencies or first transmit frequencies.

For example, the first transmit frequency information includes the first transmit frequency 1 at which the first terminal device sends the SRS 1 and the first transmit frequency 2 at which the first terminal device sends the SRS 2. The at least one first receive frequency includes two first receive frequencies: the first receive frequency 1 and the first receive frequency 2. The first receive frequency 1 is a receive frequency at which the first terminal device receives the PRS 1 from the first access network device. The first receive frequency 2 is a receive frequency at which the first terminal device receives the PRS 2 from the first access network device. Therefore, the at least one first frequency difference includes four first frequency differences: a first frequency difference 1 to a first frequency difference 4. The first frequency difference 1 is a frequency difference between the first receive frequency 1 and the first transmit frequency 1, and the first frequency difference 2 is a frequency difference between the first receive frequency 2 and the first transmit frequency 1. The first frequency difference 3 is a frequency difference between the first receive frequency 1 and the first transmit frequency 2, and the first frequency difference 4 is a frequency difference between the first receive frequency 2 and the first transmit frequency 2.

Optionally, the first transmit frequency information includes one first transmit frequency, and the at least one first frequency difference is in a one-to-one correspondence with the at least one first receive frequency. Each first frequency difference in the at least one first frequency difference is a frequency difference between a first receive frequency that corresponds to the first frequency difference in the at least one first frequency difference and the first transmit frequency.

For example, the first transmit frequency is the first transmit frequency 1 at which the first terminal device sends the SRS 1. The at least one first receive frequency includes two first receive frequencies: the first receive frequency 1 and the first receive frequency 2. The first receive frequency 1 is a receive frequency at which the first terminal device receives the PRS 1 from the first access network device. The first receive frequency 2 is a receive frequency at which the first terminal device receives the PRS 2 from the first access network device. Therefore, the at least one first frequency difference includes two first frequency differences: a first frequency difference 1 and a first frequency difference 2. The first frequency difference 1 is a frequency difference between the first receive frequency 1 and the first transmit frequency 1, and the first frequency difference 2 is a frequency difference between the first receive frequency 2 and the first transmit frequency 1. An example in which the first transmit frequency information includes one first transmit frequency is used below to describe the technical solution of this application.

An example in which the first transmit frequency corresponds to one first reference signal and each first receive frequency in the at least one first receive frequency corresponds to one second reference signal is used below to describe the first frequency difference.

Implementation 1: The first receive frequency is the receive frequency at which the first terminal device receives the second reference signal on the second RE. The first transmit frequency is the actual transmit frequency at which the first terminal device sends the first reference signal on the first RE. The first frequency difference is equal to the first receive frequency minus the first transmit frequency.

For example, it can be learned from the example shown in FIG. 8 that the first receive frequency is equal to 3.449835 GHz+3.449835 GHz+Fd-$F_{UE,Rx,Osc}$. It can be learned from the example shown in FIG. 7 that the first transmit frequency is equal to 3.449835 GHz. Therefore, it can be learned that the first frequency difference corresponding to the first receive frequency and the first transmit frequency is equal to 3.449835 GHz+Fd-$F_{UE,Rx,Osc}$.

Implementation 2: The first receive frequency is equal to the frequency difference between the receive frequency at which the first terminal device receives the second reference signal on the second RE and the nominal frequency corresponding to the second reference RE. The first transmit frequency is equal to the frequency difference between the actual transmit frequency at which the first terminal device sends the first reference signal on the first RE and the nominal frequency corresponding to the first reference RE. The first frequency difference is equal to the first receive frequency minus the first transmit frequency.

For example, in the foregoing example shown in FIG. 8, the first receive frequency is equal to 3.449835 GHz+Fd-$F_{UE,Rx,Osc}$ + $K_{offset1}$ * $F_{scs1}$. If the first transmit frequency is equal to $K_{offset1}$ * $F_{SCS1}$, the first frequency difference is 3.449835 GHz+Fd-$F_{UE,Rx,Osc}$. If the second RE and the second reference RE are a same RE, the first receive frequency is equal to 3.449835 GHz+Fd-$F_{UE,Rx,Osc}$, and the first transmit frequency is equal to 0. In this case, the first frequency difference is equal to 3.449835 GHz+Fd-$F_{UE,Rx,Osc}$.

Implementation 3: The first receive frequency is equal to the frequency difference between the receive frequency at which the first terminal device receives the second reference signal on the third RE and the nominal frequency corresponding to the third RE. The first transmit frequency is the first preset value. The first frequency difference is equal to the first receive frequency minus the first transmit frequency.

For example, the first receive frequency is equal to 3.449835 GHz+Fd-$F_{UE,Rx,Osc}$, and the first transmit frequency is equal to 0. In this case, the first frequency difference is equal to 3.449835 GHz+Fd-$F_{UE,Rx,Osc}$.

It can be learned from the foregoing three implementations that the first frequency difference is equal to 3.499835 GHz+Fd-$F_{UE,Rx,Osc}$.

In another possible implementation, the first frequency information includes the first transmit frequency and the at least one first receive frequency.

In this implementation, the first frequency information directly includes the first transmit frequency and the at least one first receive frequency that are obtained in step 601.

603: The first terminal device sends the first frequency information to the location management device.

Optionally, the first frequency information is carried in a provide location information (providelocation information) message.

Optionally, the embodiment shown in FIG. 6 further includes step 603a.

603a: The first terminal device sends first index information to the location management device.

The first index information includes at least one of the following: a resource index of the at least one first reference signal; a resource set index of the at least one first reference signal; a carrier component index of the at least one first reference signal; a resource index of the at least one second reference signal; and a resource set index of the at least one second reference signal.

It should be noted that the foregoing step 603a and step 603 may be reported simultaneously, or may be reported separately. Preferably, when reporting the at least one first frequency difference included in the first frequency information, the first terminal device may report index information of a first reference signal corresponding to each first frequency difference and/or index information of a second reference signal corresponding to each first frequency difference in an associated manner. For example, the first terminal device reports the first frequency difference in association with the resource index of the first reference signal and the resource index of the second reference signal; or the first terminal device reports the first frequency difference in association with the resource set index of the first reference signal and the resource set index of the second reference signal. Therefore, it is convenient for the location management device to determine the first reference signal and the second reference signal that correspond to each first frequency difference. This helps improve positioning accuracy of the location management device for the terminal device.

For example, the at least one first frequency difference includes two first frequency differences. The following shows a possible implementation with reference to Table 1.

**Table 1**

| First frequency difference | Resource index of an associated first reference signal and resource index of an associated second reference signal |
|---|---|
| First frequency difference 1 | Resource index of the SRS 1 and the resource index of the PRS 1 |
| First frequency difference 2 | Resource index of the SRS 1 and the resource index of the PRS 2 |

604: The first access network device obtains second transmit frequency information and second receive frequency information.

The second transmit frequency information includes information about a transmit frequency at which the first access network device sends the at least one second reference signal. For example, the at least one second reference signal is at least one first PRS.

Optionally, the second transmit frequency information includes at least one second transmit frequency, and each second transmit frequency in the at least one second transmit frequency corresponds to one or more second reference signals in the at least one second reference signal. Second reference signals corresponding to different second transmit frequencies are different or partially different.

For example, the second transmit frequency information includes one second transmit frequency, and the first access network device sends each first PRS in the at least one first PRS at a same transmit frequency. In this case, the first access network device may use a transmit frequency of one first PRS as the second transmit frequency.

For example, the second transmit frequency information includes one second transmit frequency, and an absolute radio frequency channel number of a point A of each first PRS in the at least one first PRS corresponds to a same frequency. In this case, the first access network device may use the frequency corresponding to the absolute radio frequency channel number of the point A corresponding to the at least one first PRS as the second transmit frequency.

For example, the second transmit frequency information includes two second transmit frequencies. A second transmit frequency 1 is a transmit frequency at which the first access network device sends the PRS 1. A second transmit frequency 2 is a transmit frequency at which the first access network device sends the PRS 2.

For example, the second transmit frequency information includes two second transmit frequencies. A second transmit frequency 1 is an average of a transmit frequency at which the first access network device sends the PRS 1 and a transmit frequency at which the first access network device sends the PRS 2. A second transmit frequency 2 is an average of a transmit frequency at which the first access network device sends the PRS 2 and a transmit frequency at which the first access network device sends the PRS 3.

The following describes some defining manners of the transmit frequency at which the first access network device sends one second reference signal in the at least one second reference signal.

1. An actual transmit frequency at which the first access network device sends the second reference signal on a fourth RE.

The fourth RE includes any one of the following: an RE corresponding to a bandwidth center in bandwidth occupied by the second reference signal; an RE corresponding to a bandwidth center in a bandwidth part in which the second reference signal is located; an RE corresponding to a channel bandwidth center corresponding to a bandwidth part in which the second reference signal is located; an RE corresponding to a point A of the second reference signal; or an RE corresponding to an up-conversion frequency obtained by the first access network device by performing up-conversion processing on the second reference signal. The RE corresponding to the up-conversion frequency obtained by the first access network device by performing the up-conversion processing on the second reference signal may also be represented as an RE corresponding to the second reference signal on a baseband.

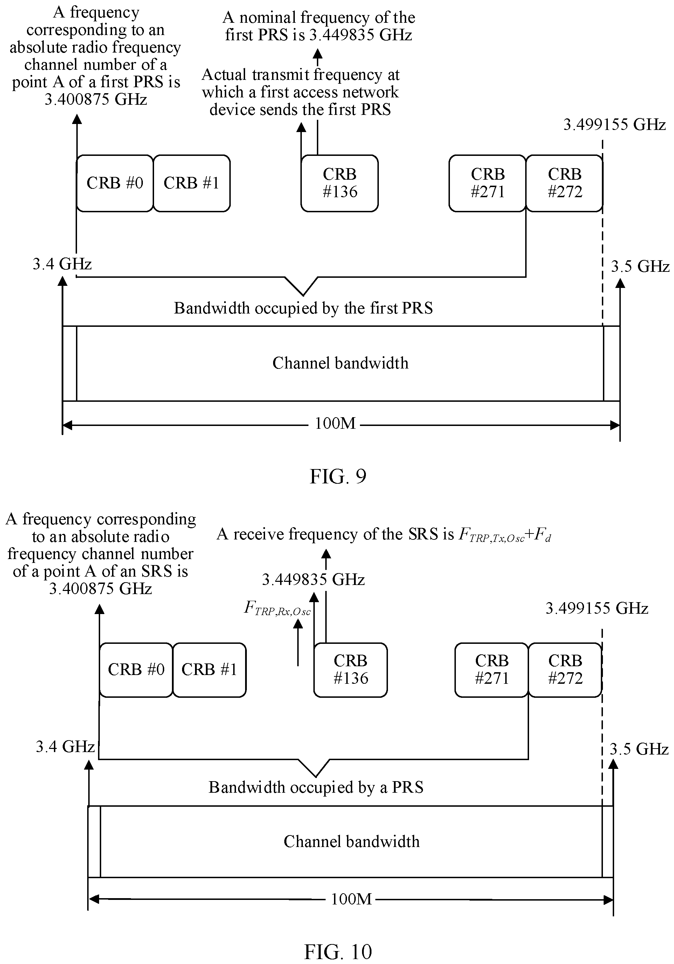

For example, as shown in FIG. 9, the first access network device sends the first PRS by using a subcarrier spacing of 30 kHz. In other words, a frequency spacing between two adjacent REs in the bandwidth occupied by the first PRS is 30 kHz. The first PRS occupies a CRB #0 to a CRB #271 (272 CRBs in total), and C in the CRB represents common (common), indicating that RBs are numbered from a point A of the first PRS. The point A of the first PRS corresponds to the 1st subcarrier of the CRB #0 or the 1st RE of the CRB #0. The first RE may be the RE corresponding to the bandwidth center in the bandwidth occupied by the first PRS: the 1st RE of the CRB #136. For ease of discussion, the 1st RE of the CRB #136 may be used as an up-conversion frequency of the first access network device or a down-conversion frequency of the first access network device.

In a possible implementation, the actual transmit frequency at which the first access network device sends the second reference signal on the fourth RE is determined based on the up-conversion frequency of the first access network device and a sixth frequency difference. The sixth frequency difference is a frequency difference that is estimated by the first access network device on a baseband and that is between a direct current component frequency and the receive frequency of the second reference signal on the fourth RE.

For example, as shown in FIG. 9, the fourth RE is the RE corresponding to the bandwidth center in the bandwidth occupied by the first PRS: the 1st RE of the CRB #136. A nominal transmit frequency of the first PRS may be understood as an expected transmit frequency of the first PRS on the fourth RE. As shown in FIG. 9, a frequency of point A of the first PRS is 3.400875 GHz, and one RB includes 12 REs. A difference between the 1st RE of the CRB#136 and the 1st RE of the CRB #0 corresponding to the point A of the first PRS is 1632 REs. Therefore, it can be learned that the nominal transmit frequency of the first PRS is 3.449835 GHz. The first access network device should send the first PRS on the fourth RE at the frequency of 3.449835 GHz. The first access network device locally generates a transmit frequency from a local oscillator, for example, 3.449835 GHz. However, because a deviation exists in frequency synchronization of the first access network device, the first access network device considers that the transmit frequency from the local oscillator of the first access network device is 3.449835 GHz. In other words, the up-conversion frequency of the first access network device is 3.449835 GHz. The first access network device estimates, on the baseband, that the transmit frequency of the first PRS estimated on the fourth RE is 0, and the direct current component frequency is also 0. Therefore, the sixth frequency difference is equal to 0. Therefore, the first access network device considers that the actual transmit frequency at which the first access network device sends the first PRS on the fourth RE is equal to 3.449835 GHz.

2. A frequency difference between an actual transmit frequency at which the first access network device sends the second reference signal on a fourth RE and a nominal frequency corresponding to a third reference RE.

The third reference RE includes any one of the following: an RE corresponding to a bandwidth center in bandwidth occupied by the second reference signal; an RE of a channel bandwidth center corresponding to a bandwidth part in which the second reference signal is located; an RE corresponding to a point A of the second reference signal; an RE corresponding to an up-conversion frequency obtained by the first access network device by performing up-conversion processing on the second reference signal; or a specified RE in bandwidth occupied by the second reference signal. The RE corresponding to the up-conversion frequency obtained by the first access network device by performing the up-conversion processing on the second reference signal may also be replaced with an RE corresponding to the second reference signal on a baseband.

The nominal frequency corresponding to the third reference RE is determined based on a seventh frequency difference and a frequency corresponding to an absolute radio frequency channel number of the point A of the second reference signal. The seventh frequency difference is a frequency difference between the third reference RE and the point A of the second reference signal.

For example, as shown in FIG. 9, the third reference RE is the RE corresponding to the bandwidth center in the bandwidth occupied by the first PRS: the 1st RE of the CRB #136. The nominal frequency of the third reference RE may be understood as an expected transmit frequency of the first PRS on the fourth RE. As shown in FIG. 9, a frequency corresponding to an absolute radio frequency channel signal of a point A of the first PRS is 3.400875 GHz, and a difference between the 1st RE of the CRB #136 and the 1st RE of the CRB #0 corresponding to the point A of the first PRS is 1632 REs. In other words, the seventh frequency difference is equal to 0.04896 GHz. Therefore, it can be learned that the nominal frequency of the third reference RE is 3.449835 GHz. It can be learned from the foregoing descriptions that the actual transmit frequency at which the first access network device sends the first PRS on the fourth RE is 3.449835 GHz. Therefore, the frequency difference between the actual transmit frequency at which the first access network device sends the first PRS on the fourth RE and the nominal frequency corresponding to the third reference RE is 0.

It should be noted that an example in which the third reference RE and the fourth RE are a same RE is used above for description. If the third reference RE is different from the fourth RE, the frequency difference between the actual transmit frequency at which the first access network device sends the second reference signal on the fourth RE and the nominal frequency corresponding to the third reference RE is equal to a frequency difference between the fourth RE and the third reference RE. The frequency difference between the fourth RE and the third reference RE is equal to a product of a quantity $K_{offset1}$ of REs of the difference between the fourth RE and the third reference RE and a subcarrier spacing $F_{SCS1}$ used by the first access network device to send the second reference signal. For example, as shown in FIG. 9, the fourth RE is the 1st RE of the CRB #0. That is, the frequency at which the first access network device sends the first PRS on the fourth RE is 3.400875 GHz. The third reference RE is the 1st RE of the CRB #136. The first access network device sends the first PRS by using a subcarrier spacing of 30 kHz. Therefore, it can be learned that the nominal frequency corresponding to the third reference RE is 3.449835 GHz. Therefore, it can be learned that the frequency difference between the fourth RE and the third reference RE is equal to $K_{offset1}$ * $F_{SCS1}$: 0.04896 GHz. For ease of understanding and description, in the examples in this specification, an example in which a quantity of REs between a target RE and a reference RE is $K_{offset1}$ and a used subcarrier spacing is $F_{SCS1}$ is used to describe the technical solution of this application. During actual application, the quantity of REs between the target RE and the reference RE and the used subcarrier spacing are not limited in this application.

3. The transmit frequency of the second reference signal is a first preset value.

For example, the first preset value is 0.

The second receive frequency information includes information about a receive frequency at which the first access network device receives the at least one first reference signal from the first terminal device.

The following describes several possible implementations of the first receive frequency information.

Implementation 1: The second receive frequency information includes at least one second receive frequency. Each second receive frequency in the at least one second receive frequency corresponds to one or more first reference signals in the at least one first reference signal.

In the implementation 1, the second receive frequency is defined per first reference signal. Each second receive frequency corresponds to the one or more first reference signals.

For example, the at least one first reference signal includes an SRS 1 and an SRS 2. The second receive frequency information includes two second receive frequencies: a receive frequency at which the first access network device receives the SRS 1 and a receive frequency at which the first access network device receives the SRS 2.

For example, the at least one first reference signal includes an SRS 1 and an SRS 2. The second receive frequency information includes one second receive frequency. The second receive frequency is an average of a receive frequency at which the first access network device receives the SRS 1 and a receive frequency at which the first access network device receives the SRS 2.

Implementation 2: The second receive frequency information includes at least one second receive frequency. Each second receive frequency in the at least one second receive frequency corresponds to one propagation path. The propagation path is a propagation path between the first access network device and the first terminal device, and the propagation path is used for transmission of the at least one first reference signal.

In the implementation 2, the second receive frequency is defined per propagation path, and each second receive frequency corresponds to one propagation path.

For example, the at least one first reference signal includes an SRS 1 and an SRS 2, and there are three propagation paths between the first access network device and the first terminal device: a propagation path 1, a propagation path 2, and a propagation path 3. Therefore, the second receive frequency information includes three second receive frequencies: a second receive frequency 1, a second receive frequency 2, and a second receive frequency 3. The second receive frequency 1 corresponds to the propagation path 1. To be specific, the second receive frequency 1 is a sum of a receive frequency at which the first access network device receives the SRS 1 on the propagation path 1 and a receive frequency at which the first access network device receives the SRS 2 on the propagation path 1. The second receive frequency 2 corresponds to the propagation path 2. To be specific, the second receive frequency 2 is a sum of a receive frequency at which the first access network device receives the SRS 1 on the propagation path 2 and a receive frequency at which the first access network device receives the SRS 2 on the propagation path 2. The second receive frequency 3 corresponds to the propagation path 3. To be specific, the second receive frequency 3 is a sum of a receive frequency at which the first access network device receives the SRS 1 on the propagation path 3 and a receive frequency at which the first access network device receives the SRS 2 on the propagation path 3.

Implementation 3: The second receive frequency information includes at least one second receive frequency. Each second receive frequency in the at least one second receive frequency corresponds to one propagation path and one or more first reference signals in the at least one first reference signal. The propagation path is a propagation path between the first access network device and the first terminal device, and the propagation path is used for transmission of the one or more first reference signals.

In the implementation 3, the second receive frequency is defined per propagation path per first reference signal. Each second receive frequency corresponds to the propagation path and the one or more first reference signals.

For example, the at least one first reference signal includes an SRS 1 and an SRS 2. There are three propagation paths between the first terminal device and the first access network device: a propagation path 1, a propagation path 2, and a propagation path 3. The second receive frequency information includes six second receive frequencies: a second receive frequency 1 to a second receive frequency 6. Each second receive frequency corresponds to one propagation path and one first reference signal. The second receive frequency 1 is a receive frequency at which the first access network device receives the SRS 1 on the propagation path 1. The second receive frequency 2 is a receive frequency at which the first access network device receives the SRS 1 on the propagation path 2. The second receive frequency 3 is a receive frequency at which the first access network device receives the SRS 1 on the propagation path 3. The second receive frequency 4 is a receive frequency at which the first access network device receives the SRS 2 on the propagation path 1. The second receive frequency 5 is a receive frequency at which the first access network device receives the SRS 2 on the propagation path 2. The second receive frequency 6 is a receive frequency at which the first access network device receives the SRS 2 on the propagation path 3.

The following describes some specific defining manners of the receive frequency at which the first access network device receives one first reference signal in the at least one first reference signal.

1. A receive frequency at which the first access network device receives the first reference signal on a fifth RE.

The fifth RE includes any one of the following: an RE corresponding to a bandwidth center in bandwidth occupied by the first reference signal; an RE corresponding to a point A of the first reference signal; an RE corresponding to a down-conversion frequency obtained by the first access network device by performing down-conversion processing on the first reference signal; or a specified RE in bandwidth occupied by the first reference signal. The RE corresponding to the down-conversion frequency obtained by the first access network device by performing the down-conversion processing on the first reference signal may also be represented as an RE corresponding to the first reference signal on a baseband.

Optionally, indexes of the fourth RE and the fifth RE are the same.

For example, as shown in FIG. 10, the first terminal device sends an SRS by using a subcarrier spacing of 30 kHz. In other words, a frequency spacing between two adjacent REs in the bandwidth occupied by the SRS is 30 kHz. The SRS occupies a CRB #0 to a CRB #271 (272 CRBs in total), and C in the CRB represents common (common), indicating that RBs are numbered from a point A of the SRS. The point A of the SRS corresponds to the 1st subcarrier of the CRB #0 or the 1st RE of the CRB #0. The fifth RE may be the RE corresponding to the bandwidth center in the bandwidth occupied by the SRS: the 1st RE of the CRB #136. For ease of discussion, the 1st RE of the CRB #136 may be used as a down-conversion frequency of the first access network device.

In a possible implementation, the receive frequency at which the first access network device receives the first reference signal on the fifth RE is determined based on the down-conversion frequency of the first access network device and an eighth frequency difference.

The eighth frequency difference is a frequency difference that is estimated by the first access network device on a baseband and that is between a direct current component frequency and the receive frequency of the first reference signal on the fifth RE.

For example, as shown in FIG. 10, the fifth RE may be the RE corresponding to the bandwidth center in the bandwidth occupied by the SRS: the 1st RE of the CRB #136. A frequency corresponding to an absolute radio frequency channel number of the point A of the SRS is 3.4000875 GHz. A difference between the 1st RE of the CRB#136 and the 1st RE of the CRB #0 corresponding to the point A of the SRS is 1632 REs. Therefore, it can be learned that a nominal frequency corresponding to the fifth RE should be 3.449835 GHz. A frequency at which the terminal device actually sends the SRS is $F_{UE,Tx,Osc}$, and there is a deviation between $F_{UE,Tx,Osc}$ and 3.449835 GHz. Because a Doppler effect exists, the receive frequency at which the first access network device receives the SRS on the fifth RE is $F_{UE,Tx,Osc}$ +Fd, where Fd is a Doppler frequency shift. The first access network device locally generates a receive frequency from a local oscillator, for example, 3.449835 GHz. However, because a deviation exists in frequency synchronization of the first access network device, there is a deviation between the receive frequency from the local oscillator of the first access network device and 3.449835 GHz. The receive frequency from the local oscillator is neither 3.449835 GHz nor 3.449835 GHz+Fd. Herein, the receive frequency from the local oscillator is referred to as $F_{TRP,Rx,Osc}$. The first access network device considers that the receive frequency from the local oscillator is 3.449835 GHz. That is, the down-conversion frequency of the first access network device is 3.449835 GHz. Therefore, the Doppler frequency shift that can be obtained through measurement by the first access network device is $F_{UE,Tx,Osc}$ +Fd- $F_{TRP,Rx,Osc}$. The receive frequency at which the first access network device receives the SRS on the fifth RE is $F_{UE,Tx,Osc}$ +Fd. If down-conversion processing is performed on the receive frequency $F_{TRP,Rx,Osc}$ from the local oscillator of the first access network device, it can be learned that the receive frequency that is of the SRS on the fifth RE and that is estimated by the first access network device on the baseband is $F_{UE,Tx,Osc}$ +Fd-$F_{TRP,Rx,Osc}$, and the direct current component frequency is 0. Therefore, the eighth frequency difference is equal to $F_{UE,Tx,Osc}$ +Fd- $F_{TRP,Rx,Osc}$. The actual transmit frequency at which the first access network device receives the SRS on the fifth RE is equal to $F_{UE,Tx,Osc}$ +Fd- $F_{TRP,Rx,Osc}$ - $F_{TRP,Rx,Osc}$. Therefore, the actual transmit frequency at which the first access network device receives the SRS on the fifth RE is equal to $F_{UE,Tx,Osc}$ +Fd.

2. A frequency difference between a receive frequency at which the first access network device receives the first reference signal on a fifth RE and a nominal frequency corresponding to a fourth reference RE.

The fourth reference RE includes any one of the following: an RE corresponding to a bandwidth center in bandwidth occupied by the first reference signal; an RE corresponding to a point A of the first reference signal; an RE corresponding to a down-conversion frequency obtained by the first access network device by performing down-conversion processing on the first reference signal; or a specified RE in bandwidth occupied by the first reference signal. The RE corresponding to the down-conversion frequency obtained by the first access network device by performing the down-conversion processing on the first reference signal may also be represented as an RE corresponding to the first reference signal on a baseband.

The nominal frequency corresponding to the fourth reference RE is determined based on a ninth frequency difference and a frequency corresponding to an absolute radio frequency channel number of the point A of the first reference signal. The ninth frequency difference is a frequency difference between the fourth reference RE and the point A of the first reference signal.

For example, as shown in FIG. 10, the fourth reference RE is the RE corresponding to the bandwidth center in the bandwidth occupied by the SRS: the 1st RE of the CRB #136. The nominal frequency corresponding to the fourth reference RE may be understood as an expected receive frequency at which the first access network device receives the SRS on the fourth reference RE.

As shown in FIG. 10, a frequency corresponding to an absolute radio frequency channel number of the point A of the SRS is 3.4000875 GHz. A difference between the 1st RE of the CRB#136 and the 1st RE of the CRB #0 corresponding to the point A of the SRS is 1632 REs. The first terminal device sends the SRS by using a subcarrier spacing of 30 kHz. Therefore, a frequency spacing between two adjacent REs is 30 kHz. The ninth frequency difference is equal to a product of 30 kHz and a quantity of REs of a spacing between the 1st RE of the CRB #136 and the 1st RE of the CRB #0. Therefore, it can be learned that the nominal frequency corresponding to the fourth reference RE is 3.449835 GHz. It can be learned from the foregoing descriptions that the receive frequency at which the first access network device receives the SRS on the fifth RE is $F_{UE,Tx,Osc}$ +Fd. Therefore, the frequency difference between the receive frequency at which the first access network device receives the SRS on the fifth RE and the nominal frequency corresponding to the fourth reference RE is $F_{UE,Tx,Osc}$ +Fd-3.449835 GHz.

It should be noted that an example in which the fourth reference RE and the fifth RE are a same RE is used above to describe the technical solution of this application. If the fourth reference RE is different from the fifth RE, the frequency difference between the receive frequency at which the first access network device receives the first reference signal on the fifth RE and the nominal frequency corresponding to the first reference signal is equal to $F_{UE,Tx,Osc}$ +Fd-3.449835 GHz+ $K_{offset1}$ * $F_{scs1}$, where $K_{offset1}$ is a quantity of REs between the fifth RE and the fourth reference RE, and $F_{scs1}$ is a subcarrier spacing used by the first access network device to receive the first reference signal.

For example, if $F_{UE,Tx,Osc}$=3.4498348 GHz, there is a frequency difference of 20 Hz between 3.4498348 GHz and 3.449835 GHz. The first access network device considers that the frequency difference between the receive frequency at which the first access network device receives the first reference signal on the fifth RE and the nominal frequency corresponding to the fourth reference RE is 20 Hz+Fd+ $K_{offset1}$ * $F_{scs1}$.

3. A frequency difference between a receive frequency at which the first access network device receives the first reference signal on a sixth RE and a nominal frequency corresponding to the sixth reference RE. The sixth RE is any RE occupied by the first reference signal.

The nominal frequency corresponding to the sixth RE is equal to a difference between the sixth RE and a frequency corresponding to an absolute radio frequency channel number of a point A of the first reference signal plus a frequency difference between the sixth RE and the point A of the first reference signal.

The implementation 3 is similar to the implementation 2. In the implementation 2, an example in which the fifth RE is an RE corresponding to a bandwidth center in the bandwidth occupied by the SRS is used for description. In the implementation 3, the sixth RE may be any RE in bandwidth occupied by the SRS. Therefore, it can be known that, if the sixth RE in the implementation 3 is also an RE corresponding to a bandwidth center in bandwidth occupied by the SRS, the frequency difference between the receive frequency at which the first access network device receives the first reference signal on the sixth RE and the nominal frequency corresponding to the sixth RE is also $F_{UE,Tx,Osc}$ +Fd-3.449835 GHz.

Optionally, the embodiment shown in FIG. 6 further includes 604a, and step 604a may be performed before step 604.

604a: The location management device sends a second request message to the first access network device. Correspondingly, the first access network device receives the second request message from the location management device.

The second request message is used to request second frequency information. In a possible implementation, the second request message is a measurement request (measurement request) message.

605: The first access network device determines the second frequency information based on the second transmit frequency information and the second receive frequency information.

The second frequency information is used to position the first terminal device.

In a possible implementation, the second frequency information includes at least one second frequency difference, and each second frequency difference in the at least one second frequency difference corresponds to one second receive frequency and one second transmit frequency. Different second frequency differences correspond to different second receive frequencies or second transmit frequencies.

Optionally, the second transmit frequency information includes one second transmit frequency, and the at least one second frequency difference is in a one-to-one correspondence with the at least one second receive frequency. Each second frequency difference in the at least one second frequency difference is a frequency difference between the second transmit frequency and a second receive frequency corresponding to a second frequency difference in the at least one second frequency difference.

For example, the second transmit frequency is a transmit frequency at which the first access network device sends the PRS 1. The at least one second receive frequency includes two second receive frequencies: a second receive frequency 1 and a second receive frequency 2. The second receive frequency 1 is a receive frequency at which the first access network device receives the SRS 1 from the first terminal device. The second receive frequency 2 is a receive frequency at which the first access network device receives the SRS 2 from the first terminal device. Therefore, the at least one second frequency difference includes two second frequency differences: a second frequency difference 1 and a second frequency difference 2. The second frequency difference 1 is a frequency difference between the second receive frequency 1 and the second transmit frequency, and the second frequency difference 2 is a frequency difference between the second receive frequency 2 and the second transmit frequency. An example in which the second transmit frequency information includes one second transmit frequency is used below to describe the technical solution of this application.

An example in which the second transmit frequency corresponds to one second reference signal and each second receive frequency in the at least one second receive frequency corresponds to one first reference signal is used below to describe the second frequency difference.

Implementation 1: The second receive frequency is a receive frequency at which the first access network device receives the first reference signal on the fifth RE. The second transmit frequency is the actual transmit frequency at which the first access network device sends the second reference signal on the fourth RE. The second frequency difference is equal to the second receive frequency minus the second transmit frequency.

For example, it can be learned from the example shown in FIG. 10 that the second receive frequency is 3.499835 GHz+$F_{UE,Tx,Osc}$ +Fd-$F_{TRP,Rx,Osc}$. It can be learned from the example shown in FIG. 9 that the second transmit frequency is equal to 3.499835 GHz. Therefore, it can be learned that the second frequency difference corresponding to the second receive frequency and the second transmit frequency is equal to $F_{UE,Tx,Osc}$ +Fd-3.499835 GHz.

Implementation 2: The first receive frequency is equal to the frequency difference between the receive frequency at which the first access network device receives the first reference signal on the fifth RE and the nominal frequency corresponding to the fourth reference RE. The second transmit frequency is equal to the frequency difference between the actual transmit frequency at which the first access network device sends the second reference signal on the fourth RE and the nominal frequency corresponding to the third reference RE. The second frequency difference is equal to the second receive frequency minus the second transmit frequency.

For example, in the foregoing example shown in FIG. 10, the second receive frequency is equal to $F_{UE,Tx,Osc}$ +Fd-3.499835 GHz+ $K_{offset1}$* $F_{scs1}$. If the first transmit frequency is equal to $K_{offset1}$ * $F_{SCS1}$, the second frequency difference is equal to $F_{UE,Tx,Osc}$ +Fd-3.499835 GHz.

Implementation 3: The second receive frequency is equal to the frequency difference between the receive frequency at which the first access network device receives the first reference signal on the sixth RE and the nominal frequency corresponding to the sixth RE. The second transmit frequency is equal to the first preset value. The second frequency difference is equal to the second receive frequency minus the second transmit frequency.

For example, the second receive frequency is equal to $F_{UE,Tx,Osc}$ +Fd-3.499835 GHz, and the second transmit frequency is equal to 0. In this case, the second frequency difference is equal to $F_{UE,Tx,Osc}$ +Fd-3.499835 GHz.

It can be learned from the foregoing three possible implementations that the second frequency difference is equal to $F_{UE,Tx,Osc}$ +Fd-3.499835 GHz.

It should be noted that, on an uplink carrier and a downlink carrier, $F_{UE,Rx,Osc}$ is usually equal to $F_{UE,Tx,Osc}$. An offset between $F_{UE,Rx,Osc}$ and an actual value is usually equal to an offset between $F_{UE,Tx,Osc}$ and an actual value. Essentially, offsets between the two frequencies and expected frequencies are consistent. The first terminal device considers that both the receive frequency from the local oscillator and the transmit frequency from the local oscillator are 3.499835 GHz, and an offset of an actual receive offset of the local oscillator of the first terminal device is 20 Hz: $F_{UE,Rx,Osc}$ =3.4498348 GHz. Therefore, an offset of the transmit frequency from the local oscillator of the first terminal device also should be 20 Hz: $F_{UE,Tx,Osc}$ =3.4498348 GHz.

It should be noted that, if a frequency used by the at least one first reference signal is inconsistent with a frequency used by the at least one second reference signal, the first frequency difference and the second frequency difference further include a difference between the frequencies used by the two reference signals. The difference can be offset when the first frequency difference and the second frequency difference are added.

A case in which the offset exists between $F_{UE,Rx,Osc}$ of the first terminal device and the actual value and the offsets exists between $F_{UE,Tx,Osc}$ and the actual value is analyzed above. This is also applicable to the first access network device. If there is an offset between the actual receive frequency of the first access network device and an actual value, and there is an offset between the actual transmit frequency of the first access network device and an actual value, the foregoing analysis process is also applicable.

In another possible implementation, the second frequency information includes the second transmit frequency and the at least one second receive frequency. In this implementation, the second frequency information directly includes the second transmit frequency and the at least one second receive frequency that are obtained in step 604.

606: The first access network device sends the second frequency information to the location management device. Correspondingly, the location management device receives the second frequency information from the first access network device.

Optionally, the second frequency information is carried in a measurement response (measurement response) message.

Optionally, the embodiment shown in FIG. 6 further includes step 606a.

606a: The first terminal device sends second index information to the location management device.

The second index information includes at least one of the following: a resource index of the at least one first reference signal; a resource set index of the at least one first reference signal; a carrier component index of the at least one first reference signal; a resource index of the at least one second reference signal; and a resource set index of the at least one second reference signal.

It should be noted that the foregoing step 606a and step 606 may be reported simultaneously, or may be reported separately. Preferably, when reporting the at least one second frequency difference, the first access network device may report index information of a second reference signal and a first reference signal that correspond to each second frequency difference in an associated manner. For example, the first access network device reports the second frequency difference in association with the resource index of the first reference signal and the resource index of the second reference signal; or the first access network device reports the second frequency difference in association with the resource set index of the first reference signal and the resource set index of the second reference signal. Therefore, it is convenient for the location management device to determine the first reference signal and the second reference signal that correspond to each second frequency difference. This helps improve positioning accuracy of the location management device for the terminal device.

For example, the at least one second frequency difference includes two second frequency differences. The following describes a possible implementation with reference to Table 2.

**Table 2**

| Second frequency difference | Resource index of an associated first reference signal and resource index of an associated second reference signal |
|---|---|
| Second frequency difference 1 | Resource index of the SRS 1 and the resource index of the PRS 1 |
| Second frequency difference 2 | Resource index of the SRS 2 and the resource index of the PRS 1 |

607: The location management device positions the first terminal device based on the first frequency information and the second frequency information.

Optionally, the location management device determines a location and a velocity of the first terminal device based on the first frequency information and the second frequency information.

For example, the first frequency difference corresponds to the SRS 1 and the PRS 1, and the second frequency difference corresponds to the SRS 1 and the PRS 1. It can be learned from the foregoing example that the first frequency difference is equal to 3.499835 $GHz + Fd - FUE,Rx,osc$ . The second frequency difference is equal to $F_{UE,Tx,Osc} + F_d -$ 3.499835 GHz, where $F_d$=(first frequency difference+second frequency difference)/2. Therefore, it can be learned that the location management device may determine the Doppler frequency shift $F_d$ based on the first frequency difference and the second frequency difference. The location management device determines the location, the velocity, and the like of the first terminal device based on the Doppler frequency shift $F_d$. Based on the technical solution of this application, the location management device can accurately measure the Doppler frequency shift between the terminal device and the first access network device, to determine the location and velocity of the first terminal device. That is, bidirectional measurement between the first terminal device and the first access network device is used to overcome an inherent frequency offset between the first terminal device and the first access network device. In this way, positioning accuracy of the location management device for the first terminal device is improved.

It should be noted that, if the first frequency difference corresponds to the SRS 2 and the PRS or the first frequency difference corresponds to the SRS 2 and the PRS 1, the second frequency difference corresponds to the SRS 1 and the PRS 1. The location management device may also determine the Doppler frequency shift between the first terminal device and the first access network device based on the first frequency difference and the second frequency difference, and determine the location, the velocity, and the like of the first terminal device based on the Doppler frequency shift. However, the location management device considers that trustworthiness or reliability of the location and the velocity obtained in this manner is low.

The following describes two possible expressions of the Doppler frequency shift $F_d$.

$$1.\ F_d = \frac{v}{\lambda_c}\cos\beta,$$

where

v is the velocity of the first terminal device, and $\beta$ is an included angle between a direction of a connection line between the first terminal device and the first access network device and a velocity direction of the first terminal device.

$$2. \quad F_d = \frac{v_r f_c}{c},$$

where

$v_r$ is a component (also referred to as a radial velocity) of a velocity direction of the first terminal device in a direction of a connection line between the first terminal device and the first access network device, where a direction facing the first access network device is a positive direction, and a direction that is back to the first access network device is a negative direction; $f_c$ is a center frequency at which the first terminal device sends the first reference signal; and c is a light velocity.

If the velocity of the first terminal device is known, the location management device may obtain the included angle between the direction of the connection line between the first terminal device and the first access network device and the velocity direction of the first terminal device through calculation based on the foregoing expression of the Doppler frequency shift $F_d$. If the velocity direction of the first terminal device is also known, the location management device may obtain the included angle $\beta$ between the first terminal device and the direction of the connection line between the first terminal device and the first access network device through calculation. Further, the location management device may use an AOA positioning method to position the first terminal device.

If the velocity of the first terminal device is unknown, the location management device may determine the location and the velocity of the first terminal device in combination with a time difference of arrival (time difference of arrival, TDOA) positioning method or a round trip time (round trip time, RTT) positioning method. When the first terminal device is in a moving state, the Doppler frequency shift may be used for multi-location joint resolution and filtering between different locations.

If the AOA of the first terminal device is known, the location management device may obtain the velocity of the first terminal device through calculation with reference to the Doppler frequency shift.

The following shows some possible positioning scenarios.

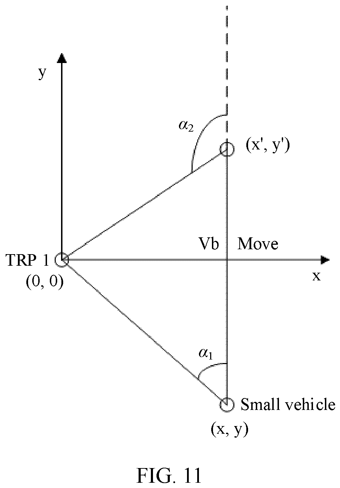

Scenario 1: As shown in FIG. 11, the first terminal device is a small vehicle. The small vehicle moves along a Y axis at a velocity Vb, and a TRP 1 is located at a coordinate origin (0, 0). A PRS and an SRS are received and sent between the small vehicle and the TRP 1 at a moment T1. Based on the technical solution of this application, the location management device may determine, at the moment T1, an included angle $\alpha_1$ between a velocity direction of the small vehicle and a direction of a connection line between the small vehicle and the TRP 1. A PRS and an SRS are received and sent between the small vehicle and the TRP 1 at a moment T2. Based on the technical solution of this application, the location management device may determine, at the moment T2, an included angle $\alpha_2$ between a velocity direction of the small vehicle and a direction of a connection line between the small vehicle and the TRP 1. Therefore, a moving distance of the first terminal device within a time interval between the moment T1 and the moment T2 is $d_{12}$=Vb(T2-T1).

If no RTT measurement is performed between the small vehicle and the TRP 1, a location of the small vehicle at the moment T1 is obtained through calculation in the following manner and based on the triangle theorem:

$$x = d_{12} \frac{\sin \alpha_2 \sin \alpha_1}{\sin(\alpha_2 - \alpha_1)} \text{ (formula a)};$$

and

$$y = -d_{12} \frac{\sin \alpha_2 \cos \alpha_1}{\sin(\alpha_2 - \alpha_1)} \text{ (formula b)},$$

where

x in the formula a represents a horizontal coordinate corresponding to the location of the small vehicle at the moment T1, and y in the formula b represents a vertical coordinate corresponding to the location of the small vehicle at the moment T 1.

Similarly, the location of the small vehicle at the moment T2 may be obtained through calculation in the following manner:

$$x' = d_{12} \frac{sin\,\alpha_2\,sin\,\alpha_1}{sin(\alpha_2 - \alpha_1)} \quad \text{(formula c)};$$

and

$$y' = -d_{12} \frac{sin\,\alpha_1\,cos\,\alpha_2}{sin(\alpha_2 - \alpha_1)} \quad \text{(formula d)},$$

where

x' in the formula c represents a horizontal coordinate corresponding to the location of the small vehicle at the moment T2, and y' in the formula d represents a vertical coordinate corresponding to the location of the small vehicle at the moment T2.

If the RTT measurement is further performed between the small vehicle and the TRP 1, for example, a distance between the small vehicle and the TRP 1 at the moment T1 is $\text{Ranging}_1$, and a distance between the small vehicle and the TRP 2 at the moment T2 is $\text{Ranging}_2$, a joint location of the first terminal device at the moment T1 and the moment T2 is represented as (x, y, x', y'), and the joint location is estimated as a solution of the following convex optimization functions:

$$S_1 = \frac{\left(\sqrt{|x|^2 + |y|^2} - \text{Ranging}_1\right)^2}{\sigma_t^2};$$

$$S_2 = \frac{\left(\sqrt{|x'|^2 + |y'|^2} - \text{Ranging}_2\right)^2}{\sigma_t^2};$$

$$D_1 = \frac{\left(\frac{f_c}{c} v_b \cos\alpha_1(x,y) - \text{Doppler}_1\right)^2}{\sigma_f^2};$$

$$D_2 = \frac{\left(\frac{f_c}{c} v_b \cos\alpha_2(x',y') - \text{Doppler}_1\right)^2}{\sigma_f^2};$$

and

$$V = \frac{\left(\frac{(x'-x)}{c\Delta t} - v_x\right)^2}{\sigma_{vx}^2} + \frac{\left(\frac{(y'-y)}{c\Delta t} - v_y\right)^2}{\sigma_{vy}^2}.$$

In the foregoing formula, $S_1$ is an error cost function of the RTT measurement at the moment T1, $S_2$ is an error cost function of the RTT ranging at the moment T2, and $\sigma_t^2$ is an error variance of the RTT measurement.

$D_1$ is an error cost function of a $F_d$ measurement at the moment T1, $f_c$ is a center frequency of the PRS or the SRS, c is a light velocity, and $\alpha_1(x,y)$ is an included angle between a velocity direction of the small vehicle at the moment T1 and a specified location (x, y) and a direction of a connection line between the small vehicle and the TRP 1. $\text{Doppler}_1$

is the Doppler frequency shift $F_d$ at the moment T1, and $\sigma_f^2$ is the error variance of the Doppler frequency shift $F_d$.

$D_2$ is an error cost function of a $F_d$ measurement at the moment T2, $f_c$ is a center frequency of the PRS or the SRS, c is a light velocity, and $\alpha_2(x',y')$ is an included angle between a velocity direction of the small vehicle at the moment T2 and a specified location $(x',y')$ and a direction of a connection line between the small vehicle and the TRP 1. Doppler$_2$ is the Doppler frequency shift $F_d$ at the moment T2, and $\sigma_f^2$ is the error variance of the Doppler frequency shift $F_d$.

V is an error cost function of a velocity measurement of the small vehicle, and $\Delta t$ is equal to T2-T1. $v_x$ is a velocity of the small vehicle in an x-axis direction, and $v_y$ is a velocity of the small vehicle in a y-axis direction. $\sigma_{vx}^2$ is a variance of a velocity error of the velocity of the small vehicle in the x-axis direction, and $\sigma_{vy}^2$ is a variance of a velocity error of the velocity of the small vehicle in the y-axis direction.

It can be learned that the joint location is obtained based on the solution of the convex optimization functions, to obtain the location of the small vehicle at the moment T1 and the location of the small vehicle at the moment T2.

In this embodiment of this application, the first terminal device obtains the first transmit frequency information and the first receive frequency information. The first transmit frequency information includes the information about the transmit frequency at which the first terminal device sends the at least one first reference signal. The first receive frequency information includes the information about the receive frequency at which the first terminal device receives the at least one second reference signal from the first access network device. Then, the first terminal device determines the first frequency information based on the first transmit frequency information and the first receive frequency information, and sends the first frequency information to the location management device. The first access network device obtains the second transmit frequency information and the second receive frequency information. The second transmit frequency information includes the information about the transmit frequency at which the first access network device sends the at least one second reference signal. The second receive frequency information includes the information about the receive frequency at which the first access network device receives the at least one first reference signal from the first terminal device. The first access network device determines the second frequency information based on the second transmit frequency information and the second receive frequency information, and sends the second frequency information to the location management device. The location management device can position the first terminal device based on the first frequency information and the second frequency information. Based on the technical solution of this application, bidirectional measurement of the first access network device and the first terminal device is implemented, to overcome an inherent frequency offset between the first access network device and the first terminal device. In this way, positioning accuracy of the location management device for the first terminal device is improved. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

In this application, the location management device can select a plurality of access network devices to assist the location management device in positioning the first terminal device. An example in which the location management device selects the first access network device and the second access network device to assist the location management device in positioning the first terminal device is used below to describe the technical solution of this application. This solution is also applicable to a case in which the location management device selects more access network devices to assist in positioning the first terminal device.

FIG. 12A and FIG. 12B are another diagram of an embodiment of a communication method according to an embodiment of this application. Refer to FIG. 12A and FIG. 12B. The method includes the following steps.

1201: A first terminal device obtains first transmit frequency information and first receive frequency information.

1202: The first terminal device determines first frequency information based on the first transmit frequency information and the first receive frequency information.

For step 1201 and step 1202, refer to the related descriptions of step 601 and step 602 in the embodiment shown in FIG. 6. Details are not described herein again.

1203: The first terminal device obtains third transmit frequency information and third receive frequency information.

The third transmit frequency information includes information about a transmit frequency at which the first terminal device sends at least one first reference signal. The third transmit frequency information is similar to the first transmit frequency information. For details, refer to the related descriptions of the first transmit frequency information.

The third receive frequency information includes information about a receive frequency at which the first terminal device receives at least one third reference signal from a second access network device. For example, the at least one third reference signal is at least one second PRS. The third receive frequency information is similar to the second receive frequency information. For details, refer to the foregoing related descriptions of the second receive frequency information.

1204: The first terminal device determines third frequency information based on the third transmit frequency information and the third receive frequency information.

The third frequency information is similar to the first frequency information. For details, refer to the foregoing related descriptions of the first frequency information. Details are not described herein again.

Optionally, the embodiment shown in FIG. 12A and FIG. 12B further includes step 1201a, and step 1201a may be performed before step 1201.

1201 a: A location management device sends a first request message to the first terminal device. Correspondingly, the first terminal device receives the first request message from the location management device. The first request message is used to request the first frequency information and the third frequency information.

Step 1201a is similar to step 601a in the embodiment shown in FIG. 6. For details, refer to the related descriptions of step 601a in the embodiment shown in FIG. 6.

1205: The first terminal device sends the first frequency information and the third frequency information to the location management device.

For the first frequency information, refer to the related descriptions in the embodiment shown in FIG. 6. The third frequency information is similar to the first frequency information. For details, refer to the related descriptions of the first frequency information.

1205a: The first terminal device sends first index information and third index information to the location management device.

For the related descriptions of the first index information, refer to the related descriptions in the embodiment shown in FIG. 6.

Optionally, the third index information includes at least one of the following: a resource index of the at least one first reference signal; a resource set index of the at least one first reference signal; a carrier component index of the at least one first reference signal; a resource index of the at least one third reference signal; and a resource set index of the at least one third reference signal.

The foregoing step 1205 and step 1205a may be reported simultaneously, or may be reported separately. For example, the first frequency information may be reported in association with the first index information. The third frequency information may be reported in association with the third index information. This helps improve positioning accuracy of the location management device for the terminal device.

1206: A first access network device obtains second transmit frequency information and second receive frequency information.

Optionally, the embodiment shown in FIG. 12A and FIG. 12B further includes step 1206a, and step 1206a may be performed before step 1206.

1206a: The location management device sends a second request message to the first access network device. The second request message is used to request second frequency information. Correspondingly, the first access network device receives the second request message from the location management device.

1207: The first access network device determines the second frequency information based on the second transmit frequency information and the second receive frequency information.

1208: The first access network device sends the second frequency information to the location management device.

Optionally, the embodiment shown in FIG. 12A and FIG. 12B further includes step 1208a.

1208a: The first access network device sends second index information to the location management device.

Step 1206a to step 1208a are similar to step 604a to step 606a in the embodiment shown in FIG. 6. For details, refer to the related descriptions of step 604a to step 606a in the embodiment shown in FIG. 6. Details are not described herein again.

1209: The second access network device obtains fourth transmit frequency information and fourth receive frequency information.

The fourth transmit frequency information includes information about a transmit frequency at which the second access network device sends the at least one third reference signal. The fourth transmit frequency information is similar to the second transmit frequency information. For details, refer to the related descriptions in the embodiment shown in FIG. 6.

The fourth receive frequency information includes information about a receive frequency at which the second access network device receives the at least one first reference signal from the terminal device. The fourth receive frequency information is similar to the second receive frequency information. For details, refer to the related descriptions in the embodiment shown in FIG. 6.

Optionally, the embodiment shown in FIG. 12A and FIG. 12B further includes step 1209a, and step 1209a may be performed before step 1209.

1209a: The location management device sends a third request message to the second access network device. The third request message is used to request fourth frequency information. Correspondingly, the second access network device receives the fourth frequency information from the location management device.

1210: The second access network device determines the fourth frequency information based on the fourth transmit frequency information and the fourth receive frequency information.

The fourth frequency information is similar to the second frequency information in the embodiment shown in FIG. 6. For details, refer to the related descriptions of the second frequency information in the embodiment shown in FIG. 6.

1211: The second access network device sends the fourth frequency information to the location management device.

1211a: The second access network device sends fourth index information to the location management device.

The fourth index information includes at least one of the following: a resource index of the at least one first reference signal; a resource set index of the at least one first reference signal; a carrier component index of the at least one first reference signal; a resource index of the at least one third reference signal; and a resource set index of the at least one third reference signal.

Step 1209a to step 1211 are similar to step 604a to step 606a in the embodiment shown in FIG. 6. For details, refer to the related descriptions of step 604a to step 606a in the embodiment shown in FIG. 6.

1212: The location management device positions the terminal device based on the first frequency information, the second frequency information, the third frequency information, and the fourth frequency information.

In this embodiment of this application, the location management device selects the first access network device and the second access network device to assist the location management device in positioning the first terminal device. The location management device obtains the frequency information corresponding to each of the first access network device and the second access network device and the frequency information corresponding to the first terminal device. Then, the location management device positions the first terminal device based on the frequency information. This helps the location management device accurately determine a location, a velocity, and the like of the terminal device.

The technical solution of this application may be applied to the communication system shown in FIG. 3. The terminal device 1 communicates with the terminal device 2 through the sidelink, and the terminal device 2 may position the terminal device 1 by using the technical solution of this application. Descriptions are provided below with reference to the embodiment shown in FIG. 13. FIG. 13 is another diagram of an embodiment of a communication method according to an embodiment of this application. Refer to FIG. 13. The method includes the following steps.

1301: A first terminal device obtains first transmit frequency information and first receive frequency information.

The first transmit frequency information includes information about a transmit frequency at which the first terminal device sends at least one first reference signal. For example, the at least one first reference signal is a first SL PRS. The first transmit frequency information is similar to the first transmit frequency information in step 601 in the embodiment shown in FIG. 6. For details, refer to the foregoing related descriptions.

The first receive frequency information includes information about a receive frequency at which the first terminal device receives at least one second reference signal from a second terminal device. For example, the at least one second reference signal is a second SL PRS. The first receive frequency information is similar to the first receive frequency information in step 601 in the embodiment shown in FIG. 6. For details, refer to the foregoing related descriptions.

Optionally, the embodiment shown in FIG. 13 further includes step 1301a, and step 1301a may be performed before step 1301.

1301a: The second terminal device sends a first request message to the first terminal device. The first request message is used to request first frequency information. Correspondingly, the first terminal device receives the first request message from the second terminal device.

Optionally, the first request message is a measurement request message, and is used to request the first frequency information.

1302: The first terminal device determines the first frequency information based on the first transmit frequency information and first receive frequency information.

Step 1302 is similar to a process of step 602 in the embodiment shown in FIG. 6. For details, refer to the related descriptions of step 602 in the embodiment shown in FIG. 6.

1303: The first terminal device sends the first frequency information to the second terminal device.

1303a: The first terminal device sends first index information to the second terminal device.

Step 1303 and step 1303a are similar to step 603 and step 603a in the embodiment shown in FIG. 6. For details, refer to the related descriptions of step 603 and step 603a in the embodiment shown in FIG. 6.

1304: The second terminal device obtains second transmit frequency information and second receive frequency information.

1305: The second terminal device determines second frequency information based on the second transmit frequency information and the second receive frequency information.

Step 1304 and step 1305 are similar to step 604 and step 605 in the embodiment shown in FIG. 6. For details, refer to the related descriptions of step 604 and step 605 in the embodiment shown in FIG. 6.

1306: The second terminal device positions the first terminal device based on the first frequency information and the second frequency information.

Step 1306 is similar to a process of step 607 in the embodiment shown in FIG. 6. For details, refer to the related descriptions of step 607 in the embodiment shown in FIG. 6.

For example, as shown in FIG. 3, the terminal device 2 may determine a distance, a velocity, and the like that are relative to the terminal device 1 based on the first frequency information and the second frequency information.

In this embodiment of this application, the first terminal device obtains the first transmit frequency information and the first receive frequency information. The first transmit frequency information includes the information about the transmit frequency at which the first terminal device sends the at least one first reference signal. The first receive frequency information includes the information about the receive frequency at which the first terminal device receives the at least one second reference signal from the second terminal device. The first terminal device determines the first frequency information based on the first transmit frequency information and the first receive frequency information, and sends the first frequency information to the second terminal device. The second terminal device obtains the second transmit frequency information and the second receive frequency information, and determines the second frequency information based on the second transmit frequency information and the second receive frequency information. The second terminal device positions the first terminal device based on the first frequency information and the second frequency information. Based on the technical solution of this application, bidirectional measurement of the first terminal device and the second terminal device is implemented, to overcome an inherent frequency offset between the first terminal device and the second terminal device. In this way, positioning accuracy of the second terminal device for the first terminal device is improved. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

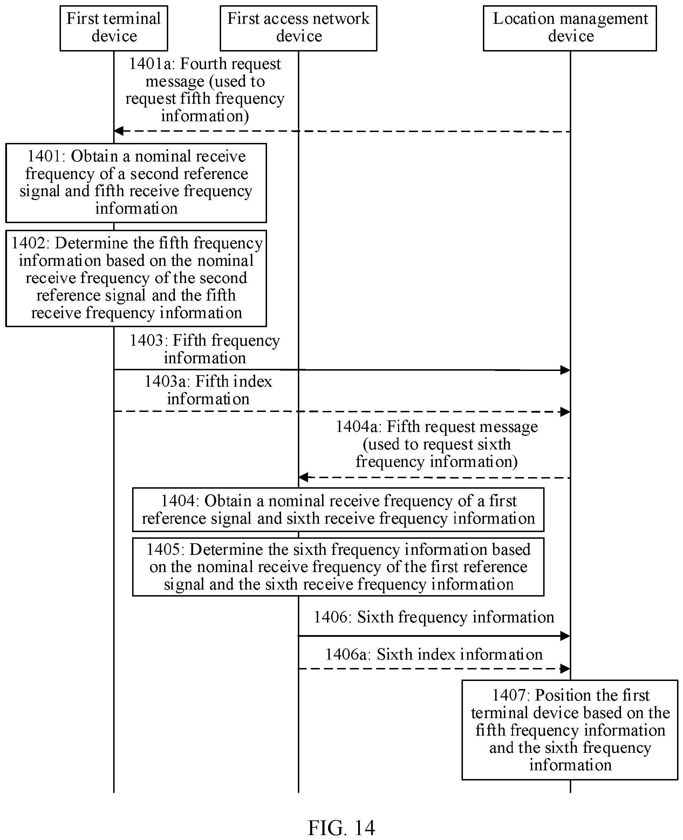

Optionally, in the embodiment shown in FIG. 6, the first transmit frequency is a nominal receive frequency at which the first terminal device receives the at least one second reference signal, and the second transmit frequency is a nominal receive frequency at which the first access network device receives the at least one first reference signal. In this case, the following describes the technical solution of this application with reference to an embodiment shown in FIG. 14.

FIG. 14 is another diagram of an embodiment of a communication method according to an embodiment of this application. Refer to FIG. 14. The method includes the following steps.

1401: A first terminal device obtains a nominal receive frequency of a second reference signal and fifth receive frequency information.

For example, as shown in FIG. 9, the nominal frequency at which the first access network device sends the first PRS is 3.449835 GHz. Therefore, it can be learned that a nominal receive frequency of the first PRS is 3.449835 GHz.

The fifth receive frequency information includes information about a receive frequency at which the first terminal device receives at least one second reference signal from the first access network device.

Optionally, the fifth receive frequency information includes at least one third receive frequency. A relationship among the third receive frequency, a propagation path, and the second reference signal is similar to the foregoing relationship among the first receive frequency, the propagation path, and the second reference signal. For details, refer to the foregoing related descriptions.

It should be noted that, optionally, a receive frequency at which the first terminal device receives one second reference signal in the at least one second reference signal from the first access network device includes: a receive frequency at which the first terminal device receives the second reference signal on a second RE. For the second RE, refer to the related descriptions in the embodiment shown in FIG. 6.

Optionally, the embodiment shown in FIG. 14 further includes step 1401a. Step 1401a may be performed before step 1401.

1401a: A location management device sends a fourth request message to the first terminal device. The fourth request message is used to request fifth frequency information. Correspondingly, the first terminal device receives the fourth request message from the location management device.

Optionally, the fourth request message includes a request location information message.

1402: The first terminal device determines the fifth frequency information based on the nominal receive frequency of the second reference signal and the fifth receive frequency information.

In a possible implementation, the fifth frequency information includes at least one tenth frequency difference, and each tenth frequency difference corresponds to one third receive frequency and the nominal receive frequency of the second reference signal.

The tenth frequency difference may also be referred to as a Doppler frequency shift at which the first terminal device receives the second reference signal. The Doppler frequency shift at which the first terminal device receives the second reference signal is a frequency difference that is between an actual receive frequency of the second reference signal and a down-conversion frequency of a local crystal oscillator (where the down-conversion frequency of the local crystal oscillator is equal to the nominal receive frequency of the second reference signal) and that is estimated by using a phase change between different symbols of the second reference signal after the first terminal device receives the second reference signal through down-conversion of the local crystal oscillator. In addition, if the local crystal oscillator is also configured to generate a transmit frequency of a first reference signal, in principle, the tenth frequency difference is a frequency difference between the receive frequency of the second reference signal and the transmit frequency of the first reference signal.

In another possible implementation, the fifth frequency information includes the nominal receive frequency of the second reference signal and the at least one third receive frequency.

1403: The first terminal device sends the fifth frequency information to the location management device.

Optionally, the embodiment shown in FIG. 14 further includes step 1403a.

1403a: The first terminal device sends fifth index information to the location management device.

Optionally, the fifth index information includes at least one of the following: a resource index of the at least one second reference signal and a resource set index of the at least one second reference signal.

Step 1403 and step 1403a are similar to step 603 and step 603a in the embodiment shown in FIG. 6. For details, refer to the related descriptions of step 603 and step 603a in the embodiment shown in FIG. 6.

1404: The first access network device obtains a nominal receive frequency of the first reference signal and sixth receive frequency information.

For example, as shown in FIG. 7, the nominal frequency at which the first terminal device sends the SRS is 3.449835 GHz. Therefore, it can be learned that the nominal receive frequency of the first reference signal is 3.449835 GHz.

The sixth receive frequency information includes information about a receive frequency at which the first access network device receives the at least one first reference signal from the first terminal device.

Optionally, the sixth receive frequency information includes at least one fourth receive frequency. A relationship among the fourth receive frequency, a propagation path, and the first reference signal is similar to the foregoing relationship among the fourth receive frequency, the propagation path, and the first reference signal. For details, refer to the foregoing related descriptions.

It should be noted that, optionally, a receive frequency at which the first access network device receives one first reference signal in the at least one first reference signal from the first terminal device includes: a receive frequency at which the first access network device receives the first reference signal on a fifth RE. For the fifth RE, refer to the related descriptions in the embodiment shown in FIG. 6.

Optionally, the embodiment shown in FIG. 14 further includes step 1404a. Step 1404a may be performed before step 1404.

1404a: The location management device sends a fifth request message to the first access network device. The fifth request message is used to request sixth frequency information. Correspondingly, the first access network device receives the fifth request message from the location management device.

Optionally, the fifth request message includes a measurement request message.

1405: The first access network device determines sixth frequency information based on the nominal receive frequency of the first reference signal and the sixth receive frequency information.

In a possible implementation, the sixth frequency information includes at least one eleventh frequency difference, and each eleventh frequency difference corresponds to one fourth receive frequency and the nominal receive frequency of the first reference signal.

The eleventh frequency difference may also be referred to as a Doppler frequency shift at which the first access network device receives the first reference signal. The Doppler frequency shift at which the first access network device receives the first reference signal is a frequency difference that is between an actual receive frequency of the first reference signal and a down-conversion frequency of a local crystal oscillator (where the down-conversion frequency of the local crystal oscillator is equal to the nominal receive frequency of the first reference signal) and that is estimated by using a phase change between different symbols of the first reference signal after the first access network device receives the first reference signal through down-conversion of the local crystal oscillator. In addition, if the local crystal oscillator is also configured to generate a transmit frequency of the second reference signal, in principle, the eleventh frequency difference is a frequency difference between the receive frequency of the first reference signal and the transmit frequency of the second reference signal.

In another possible implementation, the sixth frequency information includes the nominal receive frequency of the first reference signal and the at least one fourth receive frequency.

1406: The first access network device sends the sixth frequency information to the location management device.

Optionally, the embodiment shown in FIG. 14 further includes step 1406a.

1406a: The first access network device sends sixth index information to the location management device.

Optionally, the sixth index information includes at least one of the following: a resource index of the at least one first reference signal, a resource set index of the at least one first reference signal, and a carrier component index of the at least one first reference signal.

Step 1406 and step 1406a are similar to step 606 and step 606a in the embodiment shown in FIG. 6. For details, refer to the related descriptions of step 606 and step 606a in the embodiment shown in FIG. 6.

1407: The location management device positions the first terminal device based on the fifth frequency information and the sixth frequency information.

Step 1407 is similar to step 607 in the embodiment shown in FIG. 6. For details, refer to the related descriptions of step 607 in the embodiment shown in FIG. 6.

In this embodiment of this application, the first terminal device obtains the nominal receive frequency of the second reference signal and the fifth receive frequency information. The fifth receive frequency information includes the information about the receive frequency at which the first terminal device receives the at least one second reference signal from the first access network device. The first terminal device determines the fifth frequency information based on the nominal receive frequency of the second reference signal and the fifth receive frequency information, and sends the fifth frequency information to the location management device. The first access network device obtains the nominal receive frequency of the first reference signal and the sixth receive frequency information. The sixth receive frequency information includes the information about the receive frequency at which the first access network device receives the at least one first reference signal from the first terminal device. The first access network device determines the sixth frequency information based on the nominal receive frequency of the first reference signal and the sixth receive frequency information, and sends the sixth frequency information to the location management device. The location management device positions the first terminal device based on the fifth frequency information and the sixth frequency information. Based on the technical solution of this application, bidirectional measurement of the first access network device and the first terminal device is implemented, to overcome an inherent frequency offset between the first access network device and the first terminal device. In this way, positioning accuracy of the location management device for the first terminal device is improved. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

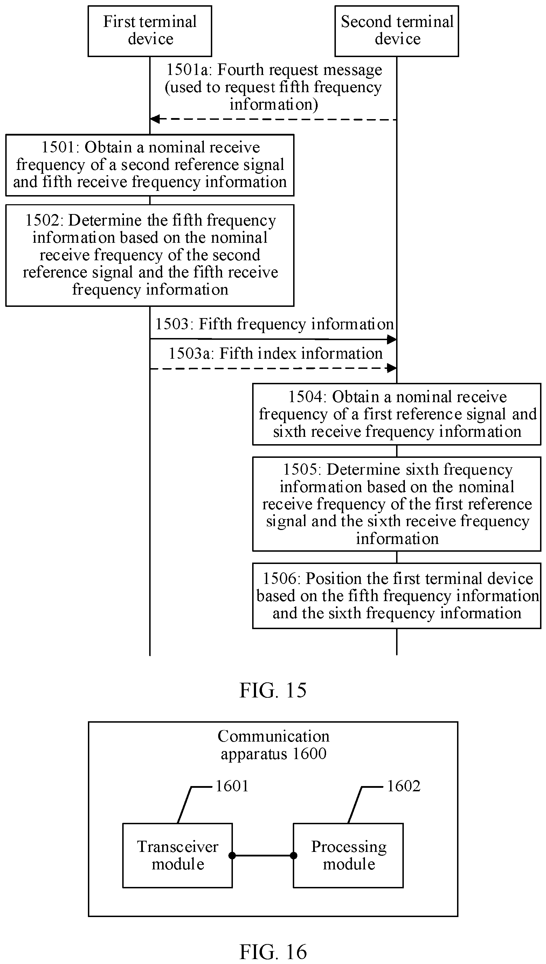

Optionally, in the embodiment shown in FIG. 13, the first transmit frequency is a nominal receive frequency at which the first terminal device receives the at least one second reference signal, and the second transmit frequency is a nominal receive frequency at which the first access network device receives the at least one first reference signal. In this case, the following describes the technical solution of this application with reference to an embodiment shown in FIG. 15.

FIG. 15 is another diagram of an embodiment of a communication method according to an embodiment of this application. Refer to FIG. 15. The method includes the following steps.

1501: A first terminal device obtains a nominal receive frequency of a second reference signal and fifth receive frequency information.

The fifth receive frequency information includes information about a receive frequency at which the first terminal device receives at least one second reference signal from a second terminal device.

The nominal receive frequency of the second reference signal and the fifth receive frequency information are similar to the nominal receive frequency of the second reference signal and the fifth receive frequency information in the embodiment shown in FIG. 14. For details, refer to the foregoing related descriptions.

Optionally, the embodiment shown in FIG. 15 further includes 1501a, and step 1501a may be performed before step 1501.

1501a: The second terminal device sends a fourth request message to the first terminal device. The fourth request message is used to request fifth frequency information. Correspondingly, the first terminal device receives the fourth request message from the second terminal device.

Optionally, the fourth request message includes a measurement request message.

1502: The first terminal device determines the fifth frequency information based on the nominal receive frequency of the second reference signal and the fifth receive frequency information.

For the fifth frequency information, refer to the related descriptions of the fifth frequency information in the embodiment shown in FIG. 14. Details are not described herein again.

1503: The first terminal device sends the fifth frequency information to the second terminal device. Correspondingly, the second terminal device receives the fifth frequency information from the first terminal device.

Optionally, the embodiment shown in FIG. 15 further includes 1503a.

1503a: The first terminal device sends fifth index information to the second terminal device. Correspondingly, the second terminal device receives the fifth index information from the first terminal device.

Step 1503 and step 1503a are similar to step 1303 and step 1303a in the embodiment shown in FIG. 13. For details, refer to the related descriptions of step 1303 and step 1303a in the embodiment shown in FIG. 13.

1504: The second terminal device obtains a nominal receive frequency of a first reference signal and sixth receive frequency information.

The sixth receive frequency information includes information about a frequency at which the second terminal device receives at least one first reference signal from the first terminal device.

For the nominal receive frequency of the first reference signal and the sixth receive frequency information, refer to the related descriptions in the embodiment shown in FIG. 14. Details are not described herein again.

1505: The second terminal device determines sixth frequency information based on the nominal receive frequency of the first reference signal and the sixth receive frequency information.

For the sixth frequency information, refer to the related descriptions of the sixth frequency information in the embodiment shown in FIG. 14. Details are not described herein again.

1506: The second terminal device positions the first terminal device based on the fifth frequency information and the sixth frequency information.

Step 1506 is similar to step 1306 in the embodiment shown in FIG. 13. For details, refer to the related descriptions of step 1306 in the embodiment shown in FIG. 13.

In this embodiment of this application, the first terminal device obtains the nominal receive frequency of the second reference signal and the fifth receive frequency information. The fifth receive frequency information includes the information about the receive frequency at which the first terminal device receives the at least one second reference signal from the first access network device. The first terminal device determines the fifth frequency information based on the nominal receive frequency of the second reference signal and the fifth receive frequency information, and sends the fifth frequency information to the second terminal device. The second terminal device obtains the nominal receive frequency of the first reference signal and the sixth receive frequency information. The sixth receive frequency information includes the information about the frequency at which the second terminal device receives the at least one first reference signal from the first terminal device. The second terminal device determines the sixth frequency information based on the nominal receive frequency of the first reference signal and the sixth receive frequency information. Then, the second terminal device positions the first terminal device based on the fifth frequency information and the sixth frequency information. Based on the technical solution of this application, bidirectional measurement of the first terminal device and the first terminal device is implemented, to overcome an inherent frequency offset between the first terminal device and the second terminal device. In this way, positioning accuracy of the second terminal device for the first terminal device is improved. In the technical solution of this application, a Doppler frequency shift existing between two mobile nodes may also be measured without frequency synchronization between the two mobile nodes. A relative motion relationship between the two mobile nodes is estimated by using the technical solution of this application, to accurately determine locations, velocities, and the like of the two mobile nodes.

The communication apparatus provided in embodiments of this application is described below. FIG. 16 is a schematic of a structure of a communication apparatus according to an embodiment of this application. The communication apparatus 1600 may be configured to perform the steps performed by the first terminal device in the embodiments shown in FIG. 6 and FIG. 12A and FIG. 12B to FIG. 15, or may be configured to perform the steps performed by the first access network device in the embodiments shown in FIG. 6, FIG. 12A and FIG. 12B, and FIG. 14. For details, refer to the related descriptions in the foregoing method embodiments.

The communication apparatus 1600 includes a transceiver module 1601 and a processing module 1602.

In a possible implementation, when the communication apparatus 1600 is a first terminal device or a chip in the first terminal device, the communication apparatus 1600 is configured to perform all or a part of the steps performed by the first terminal device in the embodiments shown in FIG. 6 and FIG. 12A and FIG. 12B to FIG. 15. For details, refer to the related descriptions in the method embodiments shown in FIG. 6 and FIG. 12A and FIG. 12B to FIG. 15.

For example, the communication apparatus 1600 is configured to perform the following solution.

The processing module 1602 is configured to: obtain first transmit frequency information and first receive frequency information, where the first transmit frequency information includes information about a transmit frequency at which the communication apparatus 1600 sends at least one first reference signal, and the first receive frequency information includes information about a receive frequency at which the communication apparatus 1600 receives at least one second reference signal from a second communication device; and determine first frequency information based on the first transmit frequency information and the first receive frequency information.

The transceiver module 1601 is configured to send the first frequency information.

For example, the communication apparatus 1600 is configured to perform the following solution.

The processing module 1602 is configured to: obtain a nominal receive frequency of a second reference signal and fifth receive frequency information, where the fifth receive frequency information includes information about a receive frequency at which the communication apparatus 1600 receives at least one second reference signal from a second communication device; and determine fifth frequency information based on the nominal receive frequency of the second reference signal and the fifth receive frequency information.

The transceiver module 1601 is configured to send the fifth frequency information.

In another possible implementation, when the communication apparatus 1600 is a first access network device or a chip in the first access network device, the communication apparatus 1600 is configured to perform all or a part of the steps performed by the first access network device in the embodiments shown in FIG. 6, FIG. 12A and FIG. 12B, and FIG. 14. For details, refer to the related descriptions in the method embodiments shown in FIG. 6, FIG. 12A and FIG. 12B, and FIG. 14.

For example, the communication apparatus 1600 is configured to perform the following solution.

The processing module 1602 is configured to: obtain second transmit frequency information and second receive frequency information, where the second transmit frequency information includes information about a transmit frequency at which the communication apparatus 1600 sends at least one second reference signal, and the second receive frequency information includes information about a receive frequency at which the communication apparatus 1600 receives at least one first reference signal from a first communication device; and determine second frequency information based on the second transmit frequency information and the second receive frequency information.

The transceiver module 1601 is configured to send the second frequency information.

For example, the communication apparatus 1600 is configured to perform the following solution.

The processing module 1602 is configured to: obtain a nominal receive frequency of a first reference signal and sixth receive frequency information, where the sixth receive frequency information includes information about a receive frequency at which the communication apparatus 1600 receives at least one first reference signal from a first communication device; and determine sixth frequency information based on the nominal receive frequency of the first reference signal and the sixth receive frequency information.

The transceiver module 1601 is configured to send the sixth frequency information.

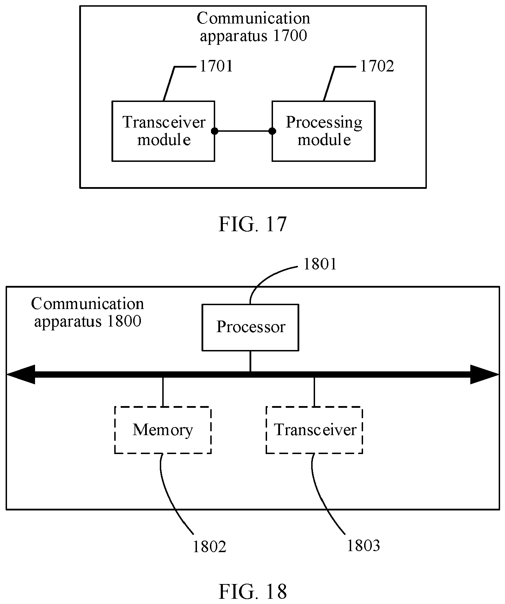

The communication apparatus provided in embodiments of this application is described below. FIG. 17 is a schematic of a structure of a communication apparatus according to an embodiment of this application. The communication apparatus 1700 may be configured to perform the steps performed by the location management device in the embodiments shown in FIG. 6, FIG. 12A and FIG. 12B, and FIG. 14, or may be configured to perform the steps performed by the second terminal device in the embodiments shown in FIG. 13 and FIG. 15. For details, refer to the related descriptions in the foregoing method embodiments.

The communication apparatus 1700 includes a transceiver module 1701 and a processing module 1702.

In a possible implementation, when the communication apparatus 1700 is a location management device or a chip in the location management device, the communication apparatus 1700 may be configured to perform all or a part of the steps performed by the location management device in the embodiments shown in FIG. 6, FIG. 12A and FIG. 12B, and FIG. 14. For details, refer to the related descriptions in the foregoing method embodiments.

For example, the communication apparatus 1700 is configured to perform the following solution.

The transceiver module 1701 is configured to: receive first frequency information from a first communication device, where the first frequency information is determined based on first transmit frequency information and first receive frequency information, the first transmit frequency information includes information about a transmit frequency at which the first communication device sends at least one first reference signal, and the first receive frequency information includes information about a receive frequency at which the first communication device receives at least one second reference signal from a second communication device; and receive second frequency information from the second communication device, where the second frequency information is determined based on second transmit frequency information and second receive frequency information, the second transmit frequency information includes information about a transmit frequency at which the second communication device sends the at least one second reference signal, and the second receive frequency information includes information about a receive frequency at which the second communication device receives the at least one first reference signal from the first communication device.

The processing module 1702 is configured to determine, based on the first frequency information and the second frequency information, to position the first communication device.

For example, the communication apparatus 1700 is configured to perform the following solution.

The transceiver module 1701 configured to: receive fifth frequency information from a first communication device, where the fifth frequency information is determined based on a nominal receive frequency of a second reference signal and fifth receive frequency information, and the fifth receive frequency information includes information about a receive frequency at which the first communication device receives at least one second reference signal from a second communication device; and receive sixth frequency information from the second communication device, where the sixth frequency information is determined based on a nominal receive frequency of a first reference signal and sixth receive frequency information, and the sixth receive frequency information includes information about a receive frequency at which the second communication device receives at least one first reference signal from the first communication device.

The processing module 1702 is configured to position the first communication device based on the fifth frequency information and the sixth frequency information.

In another possible implementation, when the communication apparatus 1700 is a second terminal device or a chip in the second terminal device, the communication apparatus 1700 may be configured to perform all or a part of the steps performed by the second terminal device in the embodiments shown in FIG. 13 and FIG. 15. For details, refer to the related descriptions in the foregoing method embodiments.

For example, the communication apparatus 1700 is configured to perform the following solution.

The transceiver module 1701 is configured to receive first frequency information from a first communication device, where the first frequency information is determined based on first transmit frequency information and first receive frequency information, the first transmit frequency information includes information about a transmit frequency at which the first communication device sends at least one first reference signal, and the first receive frequency information includes information about a receive frequency at which the first communication device receives at least one second reference signal from the communication apparatus 1700.

The processing module 1702 is configured to: obtain second frequency information, where the second frequency information is determined based on second transmit frequency information and second receive frequency information, the second transmit frequency information includes information about a transmit frequency at which the communication apparatus 1700 sends the at least one second reference signal, and the second receive frequency information includes information about a receive frequency at which the communication apparatus 1700 receives the at least one first reference signal from the first communication device; and position the first communication device based on the first frequency information and the second frequency information.

For example, the communication apparatus 1700 is configured to perform the following solution.

The transceiver module 1701 is configured to: receive fifth frequency information from a first communication device, where the fifth frequency information is determined based on a nominal receive frequency of a second reference signal and fifth receive frequency information, and the fifth receive frequency information includes information about a receive frequency at which the first communication device receives at least one second reference signal from the communication apparatus 1700; and obtain sixth frequency information, where the sixth frequency information is determined based on a nominal receive frequency of a first reference signal and sixth receive frequency information, and the sixth receive frequency information includes information about a receive frequency at which the communication apparatus 1700 receives at least one first reference signal from the first communication device.

The processing module 1702 is configured to position the first communication device based on the fifth frequency information and the sixth frequency information.

This application further provides a communication apparatus. FIG. 18 is another schematic of a structure of a communication apparatus 1800 according to an embodiment of this application.

The communication apparatus 1800 includes a processor 1801.

Optionally, the communication apparatus 1800 further includes a memory 1802 and a transceiver 1803. The processor 1801, the memory 1802, and the transceiver 1803 are separately connected through a bus, and the memory stores computer instructions.

When the communication apparatus 1800 is a first terminal device or a chip in the first terminal device, the communication apparatus 1800 may be configured to perform the steps performed by the first terminal device in the embodiments shown in FIG. 6 and FIG. 12A and FIG. 12B to FIG. 15. Refer to the related descriptions in the foregoing method embodiments.

When the communication apparatus 1800 is a first access network device or a chip in the first access network device, the communication apparatus 1800 may be configured to perform the steps performed by the first access network device in the embodiments shown in FIG. 6, FIG. 12A and FIG. 12B, and FIG. 14. Refer to the related descriptions in the foregoing method embodiments.

The transceiver module 1601 shown in FIG. 16 may be specifically the transceiver 1803. Therefore, specific implementation of the transceiver 1803 is not described again. The processing module 1602 shown in FIG. 16 may be specifically the processor 1801. Therefore, specific implementation of the processor 1801 is not described again.

When the communication apparatus 1800 is a location management device or a chip in the location management device, the communication apparatus 1800 may be configured to perform the steps performed by the location management device in the embodiments shown in FIG. 6, FIG. 12A and FIG. 12B, and FIG. 14. Refer to the related descriptions in the foregoing method embodiments.

When the communication apparatus 1800 is a second terminal device or a chip in the second terminal device, the communication apparatus 1800 may be configured to perform the steps performed by the second terminal device in the embodiments shown in FIG. 13 and FIG. 15. Refer to the related descriptions in the method embodiments.

The transceiver module 1701 shown in FIG. 17 may be specifically the transceiver 1803. Therefore, specific implementation of the transceiver 1803 is not described again. The processing module 1702 shown in FIG. 17 may be specifically the processor 1801. Therefore, specific implementation of the processor 1801 is not described again.

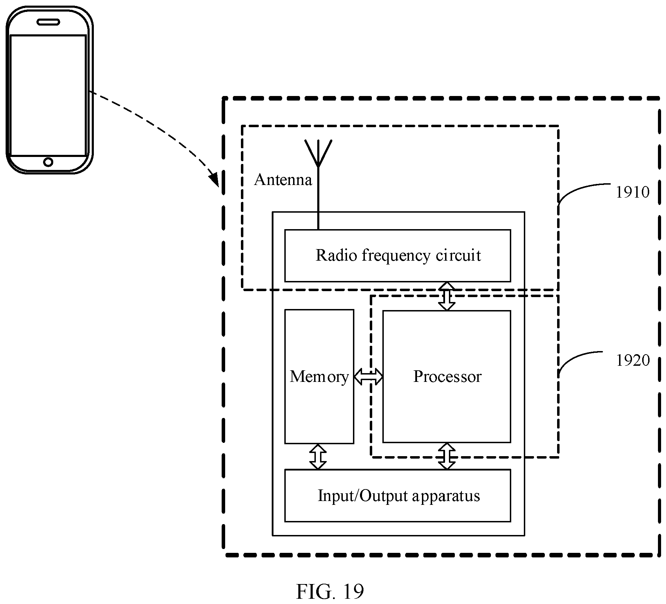

In this application, the first communication device may be a terminal device. FIG. 19 is a schematic of a possible structure of a terminal device below.

FIG. 19 is a schematic of a structure of a simplified terminal device. For ease of understanding and convenience of figure illustration, an example in which the terminal device is a mobile phone is used in FIG. 19. As shown in FIG. 19, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data entered by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 19. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 19, the terminal device includes a transceiver unit 1910 and a processing unit 1920. The transceiver unit may also be referred to as a transceiver, a transceiver machine, a transceiver apparatus, or the like. The processing unit may also be referred to as a processor, a processing board, a processing module, a processing apparatus, or the like.

Optionally, a component that is in the transceiver unit 1910 and that is configured to implement the receiving function may be considered as a receiving unit, and a component that is in the transceiver unit 1910 and that is configured to implement the sending function may be considered as a sending unit. In other words, the transceiver unit 1910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1910 is configured to perform a sending operation and a receiving operation that are of the first terminal device in the foregoing method embodiments, and the processing unit 1920 is configured to perform an operation other than the receiving and sending operations of the first terminal device in the foregoing method embodiments.

When the terminal device is a chip, the chip includes a transceiver unit and a processing unit. The transceiver unit may be an input/output circuit or a communication interface. The processing unit is a processor, a microprocessor, or an integrated circuit integrated on the chip.

This application further provides a communication system. The communication system includes a location management device, a first terminal device, and a first access network device. Optionally, the communication system further includes a second access network device. The location management device is configured to perform all or a part of the steps performed by the location management device in the embodiments shown in FIG. 6, FIG. 12A and FIG. 12B, and FIG. 14. The first terminal device may be configured to perform all or a part of the steps performed by the first terminal device in the embodiments shown in FIG. 6, FIG. 12A and FIG. 12B, and FIG. 14. The first access network device may be configured to perform all or a part of the steps performed by the first access network device in the embodiments shown in FIG. 6, FIG. 12A and FIG. 12B, and FIG. 14. The second access network device is configured to perform all or a part of the steps performed by the second access network device in the embodiment shown in FIG. 12A and FIG. 12B.

This application further provides another communication system. The communication system includes a first terminal device and a second terminal device. The first terminal device is configured to perform all or a part of the steps performed by the first terminal device in the embodiments shown in FIG. 13 and FIG. 15. The second terminal device is configured to perform all or a part of the steps performed by the second terminal device in the embodiments shown in FIG. 13 and FIG. 15.

An embodiment of this application further provides a computer program product including instructions. When the instructions are run on a computer, the computer is enabled to perform the communication methods in the embodiments shown in FIG. 6 and FIG. 12A and FIG. 12B to FIG. 15.

An embodiment of this application further provides a computer-readable storage medium, including computer instructions. When the computer instructions are run on a computer, the computer is enabled to perform the communication methods in embodiments shown in FIG. 6 and FIG. 12A and FIG. 12B to FIG. 15.

An embodiment of this application further provides a chip apparatus, including a processor, configured to: be connected to a memory, and invoke a program stored in the memory, to enable the processor to perform the communication methods in embodiments shown in FIG. 6 and FIG. 12A and FIG. 12B to FIG. 15.

The processor mentioned above may be a general-purpose central processing unit, a microprocessor, an application-specific integrated circuit (application-specific integrated circuit, ASIC), or one or more integrated circuits for controlling program execution of the communication methods in the embodiments shown in FIG. 6 and FIG. 12A and FIG. 12B to FIG. 15. The memory mentioned above may be a read-only memory (read-only memory, ROM), another type of static storage device that can store static information and instructions, a random access memory (random access memory, RAM), or the like.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A communication method, wherein the method comprises:

   obtaining, by a first communication device, first transmit frequency information and first receive frequency information, wherein the first transmit frequency information comprises information about a transmit frequency at which the first communication device sends at least one first reference signal, and the first receive frequency information comprises information about a receive frequency at which the first communication device receives at least one second reference signal from a second communication device;
   determining, by the first communication device, first frequency information based on the first transmit frequency information and the first receive frequency information; and
   sending, by the first communication device, the first frequency information.

**2.** The method according to claim 1, wherein the method further comprises:
receiving, by the first communication device, a first request message, wherein the first request message is used to request the first frequency information.

**3.** The method according to claim 1 or 2, wherein the first frequency information is used to position the first communication device.

**4.** The method according to any one of claims 1 to 3, wherein the method further comprises:
sending, by the first communication device, first index information, wherein the first index information comprises at least one of the following:

a resource index of the at least one first reference signal;
a resource set index of the at least one first reference signal;
a carrier component index of the at least one first reference signal;
a resource index of the at least one second reference signal; and
a resource set index of the at least one second reference signal.

**5.** The method according to any one of claims 1 to 4, wherein the first transmit frequency information comprises a first transmit frequency, and the first transmit frequency corresponds to one or more first reference signals in the at least one first reference signal.

**6.** The method according to claim 5, wherein the first receive frequency information comprises at least one first receive frequency, and each first receive frequency in the at least one first receive frequency corresponds to one or more second reference signals in the at least one second reference signal.

**7.** The method according to claim 5, wherein the first receive frequency information comprises at least one first receive frequency, each first receive frequency in the at least one first receive frequency corresponds to one propagation path, and the propagation path is used for transmission of the at least one second reference signal.

**8.** The method according to claim 5, wherein the first receive frequency information comprises at least one first receive frequency, each first receive frequency in the at least one first receive frequency corresponds to one propagation path and one or more second reference signals in the at least one second reference signal, and the propagation path is used for transmission of the one or more second reference signals.

**9.** The method according to any one of claims 6 to 8, wherein the first frequency information comprises at least one first frequency difference, and the at least one first frequency difference corresponds to the at least one first receive frequency; and
each first frequency difference in the at least one first frequency difference is a frequency difference between a first receive frequency corresponding to the first frequency difference in the at least one first frequency difference and the first transmit frequency.

**10.** The method according to any one of claims 1 to 9, wherein a transmit frequency at which the first communication device sends one first reference signal in the at least one first reference signal comprises at least one of the following:

an actual transmit frequency at which the first communication device sends the first reference signal on a first resource element RE;
a frequency difference between an actual transmit frequency at which the first communication device sends the first reference signal on a first RE and a nominal frequency corresponding to a first reference RE; or
a first preset value being the transmit frequency of the first reference signal, wherein
the first RE comprises any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE comprises any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

11. The method according to any one of claims 1 to 10, wherein a receive frequency at which the first communication device receives one second reference signal in the at least one second reference signal comprises any one of the following:

a receive frequency at which the first communication device receives the second reference signal on a second RE;

a frequency difference between a receive frequency at which the first communication device receives the second reference signal on a second RE and a nominal frequency corresponding to a second reference RE; or

a frequency difference between a receive frequency at which the first communication device receives the second reference signal on a third RE and a nominal frequency corresponding to the third RE, wherein the third RE is any RE occupied by the second reference signal, wherein

the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or

the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

12. A communication method, wherein the method comprises:

receiving, by a second communication device, first frequency information from a first communication device, wherein the first frequency information is determined based on first transmit frequency information and first receive frequency information, the first transmit frequency information comprises information about a transmit frequency at which the first communication device sends at least one first reference signal, and the first receive frequency information comprises information about a receive frequency at which the first communication device receives at least one second reference signal from the second communication device;

obtaining, by the second communication device, second frequency information, wherein the second frequency information is determined based on second transmit frequency information and second receive frequency information, the second transmit frequency information comprises information about a transmit frequency at which the second communication device sends the at least one second reference signal, and the second receive frequency information comprises information about a receive frequency at which the second communication device receives the at least one first reference signal from the first communication device; and

positioning, by the second communication device, the first communication device based on the first frequency information and the second frequency information.

13. The method according to claim 12, wherein the method further comprises:
sending, by the second communication device, a first request message to the first communication device, wherein the first request message is used to request the first frequency information.

14. The method according to claim 12 or 13, wherein the method further comprises:
receiving, by the second communication device, first index information from the first communication device, wherein the first index information comprises at least one of the following:

a resource index of the at least one first reference signal;

a resource set index of the at least one first reference signal;

a carrier component index of the at least one first reference signal;

a resource index of the at least one second reference signal; and

a resource set index of the at least one second reference signal.

15. The method according to any one of claims 12 to 14, wherein the first transmit frequency information comprises a first transmit frequency, and the first transmit frequency corresponds to one or more first reference signals in the at least one first reference signal.

16. The method according to claim 15, wherein the first receive frequency information comprises at least one first receive frequency, and each first receive frequency in the at least one first receive frequency corresponds to one or more second reference signals in the at least one second reference signal.

17. The method according to claim 15, wherein the first receive frequency information comprises at least one first receive frequency, each first receive frequency in the at least one first receive frequency corresponds to one propagation path, and the propagation path is used for transmission of the at least one second reference signal between the first communication device and the second communication device.

18. The method according to claim 15, wherein the first receive frequency information comprises at least one first receive frequency, each first receive frequency in the at least one first receive frequency corresponds to one propagation path and one or more second reference signals in the at least one second reference signal, and the propagation path is used for transmission of the one or more second reference signals.

19. The method according to any one of claims 16 to 18, wherein the first frequency information comprises at least one first frequency difference, and the at least one first frequency difference corresponds to the at least one first receive frequency; and
each first frequency difference in the at least one first frequency difference is a frequency difference between a first receive frequency corresponding to the first frequency difference in the at least one first frequency difference and the first transmit frequency.

20. The method according to any one of claims 12 to 19, wherein a transmit frequency at which the first communication device sends one first reference signal in the at least one first reference signal comprises at least one of the following:

an actual transmit frequency at which the first communication device sends the first reference signal on a first resource element RE;
a frequency difference between an actual transmit frequency at which the first communication device sends the first reference signal on a first RE and a nominal frequency corresponding to a first reference RE; or
a first preset value being the transmit frequency of the first reference signal, wherein
the first RE comprises any one of the following: an RE corresponding to a bandwidth center in bandwidth occupied by the first reference signal; an RE corresponding to a bandwidth center in a bandwidth part in which the first reference signal is located; an RE corresponding to a point A of the first reference signal; or an RE corresponding to an up-conversion frequency obtained by the first communication device by performing up-conversion processing on the first reference signal; or
the first reference RE comprises any one of the following: an RE corresponding to a bandwidth center in bandwidth occupied by the first reference signal; an RE of a channel bandwidth center corresponding to a bandwidth part in which the first reference signal is located; an RE corresponding to a point A of the first reference signal; or an RE corresponding to an up-conversion frequency obtained by the first communication device by performing up-conversion processing on the first reference signal.

21. The method according to any one of claims 12 to 20, wherein a receive frequency at which the first communication device receives one second reference signal in the at least one second reference signal comprises any one of the following:

a receive frequency at which the first communication device receives the second reference signal on a second RE;
a frequency difference between a receive frequency at which the first communication device receives the second reference signal on a second RE and a nominal frequency corresponding to a second reference RE; or
a frequency difference between a receive frequency at which the first communication device receives the second reference signal on a third RE and a nominal frequency corresponding to the third RE, wherein the third RE is any RE occupied by the second reference signal, wherein
the second RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal; or
the second reference RE is an RE corresponding to a bandwidth center in bandwidth occupied by the second reference signal; the second RE is an RE corresponding to a point A of the second reference signal; or the second RE is an RE corresponding to a down-conversion frequency obtained by the first communication device by performing down-conversion processing on the second reference signal.

22. A communication apparatus, wherein the communication apparatus comprises a processing module and a transceiver module; and

the processing module is configured to perform a processing operation of the method according to any one of claims 1 to 11, and the transceiver module is configured to perform a sending/receiving operation of the method according to any one of claims 1 to 11; or
the processing module is configured to perform a processing operation of the method according to any one of claims 12 to 21, and the transceiver module is configured to perform a sending/receiving operation of the method according to any one of claims 12 to 21.

23. A communication apparatus, wherein the communication apparatus comprises:

a memory, configured to store computer instructions; and
a processor, configured to execute a computer program or the computer instructions stored in the memory, to enable the communication apparatus to perform the method according to any one of claims 1 to 11, or enable the communication apparatus to perform the method according to any one of claims 12 to 21.

24. A communication apparatus, wherein the communication apparatus comprises a processor, and the processor is configured to execute a computer program or computer instructions in a memory, to perform the method according to any one of claims 1 to 11, or perform the method according to any one of claims 12 to 21.

25. A communication apparatus, wherein the communication apparatus comprises a processor, and the processor is configured to perform the method according to any one of claims 1 to 11, or perform the method according to any one of claims 12 to 21.

26. A computer-readable storage medium, wherein the computer-readable storage medium stores a computer program, and when the computer program is executed by a communication apparatus, the communication apparatus is enabled to perform the method according to any one of claims 1 to 11, or the communication apparatus is enabled to perform the method according to any one of claims 12 to 21.

27. A computer program product, wherein the computer program product comprises computer instructions, and when the computer instructions are run on a computer, the computer is enabled to perform the method according to any one of claims 1 to 11, or the computer is enabled to perform the method according to any one of claims 12 to 21.

FIG. 1

FIG. 2

FIG. 3

FIG. 4

$$F_{TRP,Tx}$$

$$F_{TRP,Rx}=F_{UE,Tx}+F_d$$

$$F_{UE,Rx}=F_{TRP,Tx}+F_d$$

$$F_{UE,Tx}$$

FIG. 5

| First terminal device | First access network device | | Location management device |
|---|---|---|---|

601a: First request message (used to request first frequency information)

601: Obtain first transmit frequency information and first receive frequency information

602: Determine the first frequency information based on the first transmit frequency information and the first receive frequency information

603: First frequency information

603a: First index information

604a: Second request message (used to request second frequency information)

604: Obtain second transmit frequency information and second receive frequency information

605: Determine the second frequency information based on the second transmit frequency information and the second receive frequency information

606: Second frequency information

606a: Second index information

607: Position the first terminal device based on the first frequency information and the second frequency information

FIG. 6

A frequency corresponding
to an absolute radio
frequency channel number
of a point A of a sounding
reference signal SRS is
3.400875 GHz

A nominal frequency of
the sounding reference
signal SRS is 3.449835
GHz

$F_{UE,Tx,Osc}$

3.499155 GHz

| CRB #0 | CRB #1 |

| CRB #136 |

| CRB #271 | CRB #272 |

3.4 GHz

3.5 GHz

Bandwidth occupied by the SRS

Channel bandwidth

100M

FIG. 7

A frequency corresponding
to an absolute radio
frequency channel number of
a point A of a PRS is
3.400875 GHz

A receive frequency of the
PRS is 3.449835 GHz+Fd

3.449835 GHz

$F_{UE,Rx,Osc}$

3.499155 GHz

| CRB #0 | CRB #1 |

| CRB #136 |

| CRB #271 | CRB #272 |

3.4 GHz

3.5 GHz

Bandwidth occupied by the PRS

Channel bandwidth

100M

FIG. 8

A frequency
corresponding to an
absolute radio frequency
channel number of a
point A of a first PRS is
3.400875 GHz

A nominal frequency of the
first PRS is 3.449835 GHz

Actual transmit frequency at
which a first access network
device sends the first PRS

3.499155 GHz

| CRB #0 | CRB #1 | | CRB #136 | | CRB #271 | CRB #272 |

3.4 GHz

3.5 GHz

Bandwidth occupied by the first PRS

Channel bandwidth

100M

FIG. 9

A frequency corresponding
to an absolute radio
frequency channel number
of a point A of an SRS is
3.400875 GHz

A receive frequency of the SRS is $F_{TRP,Tx,Osc}+F_d$

3.449835 GHz

$F_{TRP,Rx,Osc}$

3.499155 GHz

| CRB #0 | CRB #1 | | CRB #136 | | CRB #271 | CRB #272 |

3.4 GHz

3.5 GHz

Bandwidth occupied by a PRS

Channel bandwidth

100M

FIG. 10

FIG. 11

| First terminal device | First access network device | Second access network device | Location management device |
|---|---|---|---|

1201a: First request message (used to request first frequency information and third frequency information)

1201: Obtain first transmit frequency information and first receive frequency information

1202: Determine the first frequency information based on the first transmit frequency information and the first receive frequency information

1203: Obtain third transmit frequency information and third receive frequency information

1204: Determine the third frequency information based on the third transmit frequency information and the third receive frequency information

1205: First frequency information and third frequency information

1205a: First index information and third index information

TO FIG. 12B                    TO FIG. 12B

FIG. 12A

CONT. FROM
FIG. 12A

CONT. FROM
FIG. 12A

1206a: Second request
message (used to
request second
frequency information)

1206: Obtain second transmit
frequency information and second
receive frequency information

1207: Determine the second frequency
information based on the second
transmit frequency information and the
second receive frequency information

1208: Second
frequency information

1208a: Second
index information

1209a: Third request
message (used to
request fourth
frequency information)

1209: Obtain fourth transmit frequency
information and fourth receive
frequency information

1210: Determine the fourth frequency
information based on the fourth
transmit frequency information and the
fourth receive frequency information

1211: Fourth frequency
information

1211a: Fourth index
information

1212: Position the terminal device
based on the first frequency
information, the second frequency
information, the third frequency
information, and the fourth
frequency information

FIG. 12B

```
┌──────────────┐                          ┌──────────────┐
│ First terminal│                          │Second terminal│
│    device    │                          │    device    │
└──────┬───────┘                          └──────┬───────┘
       │        1301a: First request             │
       │        message (used to request         │
       │        first frequency information)     │
       │◄ ─ ─ ─ ─ ─ ─ ─ ─ ─ ─ ─ ─ ─ ─ ─ ─ ─ ─ ─ │
┌──────┴─────────────────────┐                   │
│ 1301: Obtain first transmit│                   │
│ frequency information and first│               │
│ receive frequency information│                 │
└──────┬─────────────────────┘                   │
┌──────┴─────────────────────┐                   │
│ 1302: Determine the first  │                   │
│ frequency information based on│                │
│ the first transmit frequency│                  │
│ information and the first receive│              │
│ frequency information       │                  │
└──────┬─────────────────────┘                   │
       │      1303: First frequency              │
       │          information                    │
       │─────────────────────────────────────────►
       │       1303a: First index                │
       │          information                    │
       │─ ─ ─ ─ ─ ─ ─ ─ ─ ─ ─ ─ ─ ─ ─ ─ ─ ─ ─ ─►
       │                         ┌───────────────┴──────────┐
       │                         │ 1304: Obtain second transmit│
       │                         │ frequency information and second│
       │                         │ receive frequency information│
       │                         └───────────────┬──────────┘
       │                         ┌───────────────┴──────────┐
       │                         │1305: Determine second frequency│
       │                         │ information based on the second│
       │                         │ transmit frequency information│
       │                         │ and the second receive frequency│
       │                         │        information         │
       │                         └───────────────┬──────────┘
       │                         ┌───────────────┴──────────┐
       │                         │1306: Position the first terminal│
       │                         │ device based on the first frequency│
       │                         │ information and the second │
       │                         │ frequency information      │
       │                         └───────────────┬──────────┘
       │                                         │
```

FIG. 13

| First terminal device | First access network device | Location management device |
|---|---|---|

1401a: Fourth request message (used to request fifth frequency information)

1401: Obtain a nominal receive frequency of a second reference signal and fifth receive frequency information

1402: Determine the fifth frequency information based on the nominal receive frequency of the second reference signal and the fifth receive frequency information

1403: Fifth frequency information

1403a: Fifth index information

1404a: Fifth request message (used to request sixth frequency information)

1404: Obtain a nominal receive frequency of a first reference signal and sixth receive frequency information

1405: Determine the sixth frequency information based on the nominal receive frequency of the first reference signal and the sixth receive frequency information

1406: Sixth frequency information

1406a: Sixth index information

1407: Position the first terminal device based on the fifth frequency information and the sixth frequency information

FIG. 14

```
┌─────────────┐                          ┌──────────────┐
│First terminal│                          │Second terminal│
│   device    │                          │   device     │
└──────┬──────┘                          └──────┬───────┘
       │      1501a: Fourth request message     │
       │      (used to request fifth frequency  │
       │              information)              │
       │◄ ─ ─ ─ ─ ─ ─ ─ ─ ─ ─ ─ ─ ─ ─ ─ ─ ─ ─ ─│
       │                                        │
┌──────┴──────────────────────────┐            │
│ 1501: Obtain a nominal receive   │            │
│ frequency of a second reference  │            │
│ signal and fifth receive         │            │
│ frequency information            │            │
└──────┬──────────────────────────┘            │
┌──────┴──────────────────────────┐            │
│ 1502: Determine the fifth        │            │
│ frequency information based on   │            │
│ the nominal receive frequency    │            │
│ of the second reference signal   │            │
│ and the fifth receive frequency  │            │
│ information                      │            │
└──────┬──────────────────────────┘            │
       │   1503: Fifth frequency information    │
       │───────────────────────────────────────►│
       │    1503a: Fifth index information       │
       │─ ─ ─ ─ ─ ─ ─ ─ ─ ─ ─ ─ ─ ─ ─ ─ ─ ─ ─ ─►│
       │                     ┌──────────────────┴────────┐
       │                     │ 1504: Obtain a nominal     │
       │                     │ receive frequency of a     │
       │                     │ first reference signal and │
       │                     │ sixth receive frequency    │
       │                     │ information                │
       │                     └──────────────────┬────────┘
       │                     ┌──────────────────┴────────┐
       │                     │ 1505: Determine sixth      │
       │                     │ frequency information based│
       │                     │ on the nominal receive     │
       │                     │ frequency of the first     │
       │                     │ reference signal and the   │
       │                     │ sixth receive frequency    │
       │                     │ information                │
       │                     └──────────────────┬────────┘
       │                     ┌──────────────────┴────────┐
       │                     │ 1506: Position the first   │
       │                     │ terminal device based on   │
       │                     │ the fifth frequency        │
       │                     │ information and the sixth   │
       │                     │ frequency information       │
       │                     └──────────────────┬────────┘
```

FIG. 15

```
┌─────────────────────────────────────────────────┐
│            Communication                          │
│            apparatus 1600                         │
│                                                   │
│        ┌─1601                ┌─1602               │
│   ┌─────────────┐       ┌─────────────┐          │
│   │ Transceiver │───●───●│ Processing  │          │
│   │   module    │       │   module    │          │
│   └─────────────┘       └─────────────┘          │
│                                                   │
└─────────────────────────────────────────────────┘
```

FIG. 16

Communication
apparatus 1700

1701

Transceiver
module

1702

Processing
module

FIG. 17

1801

Communication
apparatus 1800

Processor

Memory

Transceiver

1802

1803

FIG. 18

Antenna

Radio frequency circuit

1910

Memory ⟷ Processor

1920

Input/Output apparatus

FIG. 19

## INTERNATIONAL SEARCH REPORT

| International application No. |
|---|
| **PCT/CN2022/132428** |

**A. CLASSIFICATION OF SUBJECT MATTER**

H04W 4/02(2018.01)i

According to International Patent Classification (IPC) or to both national classification and IPC

**B. FIELDS SEARCHED**

Minimum documentation searched (classification system followed by classification symbols)

H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 频率, 频点, 频谱, 频带, 发送, 发射, 接收, 参考信号, 探测, 嗅探, 侦测, 侦听, 测量, 频移, 频偏, 多普勒, 差, 偏移, 定位, 位置, frequency, send, transmit, receive, RS, reference signal, PRS, SRS, sounding, doppler, shift, offset, different, locate, position

**C. DOCUMENTS CONSIDERED TO BE RELEVANT**

| Category* | Citation of document, with indication, where appropriate, of the relevant passages | Relevant to claim No. |
|---|---|---|
| A | CN 110062457 A (TELECOMMUNICATIONS TECHNOLOGY RESEARCH INSTITUTE CO., LTD.) 26 July 2019 (2019-07-26)<br>description, paragraphs [0004]-[0235] | 1-27 |
| A | CN 110178346 A (QUALCOMM INC.) 27 August 2019 (2019-08-27)<br>entire document | 1-27 |
| A | US 2020021409 A1 (QUALCOMM INC.) 16 January 2020 (2020-01-16)<br>entire document | 1-27 |
| A | ZTE. "Other accuracy enhancements for NR positioning"<br>*3GPP TSG RAN WG1 Meeting #104-e R1-2100296*, 05 February 2021 (2021-02-05),<br>entire document | 1-27 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 January 2023** | **28 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/132428**

| Patent document cited in search report | | | Publication date (day/month/year) | Patent family member(s) | | | Publication date (day/month/year) |
|---|---|---|---|---|---|---|---|
| CN | 110062457 | A | 26 July 2019 | KR | 20200105506 | A | 07 September 2020 |
| | | | | EP | 3742829 | A1 | 25 November 2020 |
| | | | | JP | 2021511508 | A | 06 May 2021 |
| | | | | WO | 2019141090 | A1 | 25 July 2019 |
| | | | | US | 2020408871 | A1 | 31 December 2020 |
| CN | 110178346 | A | 27 August 2019 | WO | 2018132199 | A1 | 19 July 2018 |
| | | | | EP | 3568959 | A1 | 20 November 2019 |
| | | | | US | 2018205589 | A1 | 19 July 2018 |
| US | 2020021409 | A1 | 16 January 2020 | | None | | |

Form PCT/ISA/210 (patent family annex) (January 2015)

**EP 4 425 966 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111371226